**Europäisches Patentamt**

**European Patent Office**

**Office européen des brevets**

(19)

(11) Veröffentlichungsnummer: **0 302 898 B1**

(12)

# EUROPÄISCHE PATENTSCHRIFT

(45) Veröffentlichungstag der Patentschrift :
**25.03.92 Patentblatt 92/13**

(51) Int. Cl.$^5$: **B23Q 7/04**

(21) Anmeldenummer : **87906563.9**

(22) Anmeldetag : **09.10.87**

(86) Internationale Anmeldenummer :
**PCT/DE87/00459**

(87) Internationale Veröffentlichungsnummer :
**WO 88/02678 21.04.88 Gazette 88/09**

(54) **VERFAHREN UND VORRICHTUNG ZUM BEIDSEITIGEN BEARBEITEN VON WERKSTÜCKEN.**

(30) Priorität : **09.10.86 DE 3634363**
**24.03.87 DE 3709668**

(43) Veröffentlichungstag der Anmeldung :
**15.02.89 Patentblatt 89/07**

(45) Bekanntmachung des Hinweises auf die
Patenterteilung :
**25.03.92 Patentblatt 92/13**

(84) Benannte Vertragsstaaten :
**CH DE GB LI**

(56) Entgegenhaltungen :
**CH-A- 659 017**
**DE-A- 2 942 060**
**DE-B- 1 264 927**
**DE-C- 3 212 268**
**GB-A- 936 257**
**GB-A- 2 087 273**
**GB-A-14 425 98**

(73) Patentinhaber : **INDEX-WERKE GMBH & CO.**
**KG HAHN & TESSKY**
**Plochinger Strasse 92**
**W-7300 Esslingen (DE)**

(72) Erfinder : **LINK, Helmut, Friedrich**
**Obere Burgstra e 43**
**W-7307 Aichwald 1 (DE)**
Erfinder : **TRAUTMANN, Günther**
**Bosslerstra e 7**
**W-7312 Kirchheim-Nabern (DE)**

(74) Vertreter : **Hoeger, Stellrecht & Partner**
**Uhlandstrasse 14 c**
**W-7000 Stuttgart 1 (DE)**

## Beschreibung

Die Erfindung betrifft ein Verfahren zum beidseitigen Bearbeiten von Werkstücken, bei welchem die Werkstücke auf einer mehrere Spindeln insbesondere mit zueinander parallelen und in gleichen Winkelabständen rings um eine Trommelachse angeordneten Spindelachsen, aufweisenden Spindeltrommel aufeinanderfolgend in ersten und zweiten Spindeln auf einer ersten bzw. einer zweiten Seite gespannt werden und bei welchem den ersten Spindeln rohe Werkstücke zugeführt werden, den zweiten Spindeln fertige Werkstücke entnommen werden und halbfertige Werkstücke von den ersten auf die zweiten Spindeln bei gleichzeitigem Wechsel einer Spannung der Werkstücke von der ersten auf die zweite Seite umgesetzt werden. Des weiteren betrifft die Erfindung einen Mehrspindelautomat zum beidseitigen Bearbeiten von Werkstücken mit einer mehrere Spindeln aufweisenden Spindeltrommel, auf welcher aufeinanderfolgende erste und zweite Spindeln zum Einspannen der Werkstücke auf einer ersten bzw. zweiten Seite vorgesehen sind, mit einer Zuführung für rohe Werkstücke, mit einer Abführung für fertig bearbeitete Werkstücke, mit einer Werkstückgreifeinrichtung und mit einer der Werkstückgreifeinrichtung zugeordneten Werkstückhalteeinrichtung, welche mit der Werkstückgreifeinrichtung zusammen eine Handhabungseinheit zum Umsetzen des halbfertig bearbeiteten Werkstücks von der ersten auf die zweite Spindel unter gleichzeitigem Wechsel der Werkstückeinspannung von der ersten zur zweiten Seite bildet.

Die Bearbeitung eines Drehteils auf einer ersten und einer zweiten Seite, d.h. insbesondere einer Vorder- und einer Rückseite, in einem Bearbeitungszyklus ist bereits bei Mehrspindelautomaten bekannt.

So ist in der Gildemeister-Druckschrift GM 030 3 Bu 1076 d, Seite 40, ein Sechsspindelautomat mit einer Spindeltrommel beschrieben, bei welcher drei aufeinanderfolgende Spindelpositionen zur Bearbeitung der Vorderseite eines Futterteils und drei weitere aufeinanderfolgende Spindelpositionen zur Bearbeitung einer Rückseite eingesetzt werden. Die Bearbeitung der Futterteile soll dabei so erfolgen, daß die Futterteile in einer Spindelposition in die Spindeltrommel eingesetzt werden, dann zunächst die drei Spindelpositionen für die Bearbeitung der Vorderseite durchlaufen, anschließend vor einer Bearbeitung der Rückseite umgesetzt werden, dann die drei Spindelpositionen für die Bearbeitung der Rückseite durchlaufen und schließlich nach erfolgter Bearbeitung der Rückseite als Fertigteile abgeführt werden.

Die Zuführung für rohe Werkstücke ist dabei der ersten Spindelposition zur Bearbeitung der Vorderseite der Futterteile zugeordnet, so daß stets rohe Werkstücke in die in dieser Spindelposition stehenden Spindeln eingesetzt und von diesen Spindeln auf ihrer ersten Seite gespannt werden. Durch Weiterschalten der Spindeltrommel um jeweils eine Spindelposition oder einen Schritt durchlaufen die eingesetzten rohen Werkstücke mit den sie spannenden Spindeln alle drei Spindelpositionen zur Bearbeitung der Vorderseite. Vor einer Bearbeitung der Rückseite sind die Werkstücke so umzusetzen, daß ein Spannen auf der zweiten Seite erfolgt, was entweder bei der letzten Spindelposition zur Bearbeitung der Vorderseite oder der ersten Spindelposition zur Bearbeitung der Rückseite möglich ist. Hierzu werden die Werkstücke aus der sie auf ihrer Rückseite spannenden Spindel entnommen, gewendet und in dieselbe Spindel zurückgesetzt, welche die Werkstücke nunmehr auf ihr bereits bearbeiteten Vorderseite spannen muß. Nach weiterem Durchlaufen den drei Spindelpositionen für die Bearbeitung der Rückseite werden die fertig bearbeiteten Werkstücke in der letzten, für die Bearbeitung der Rückseite vorgesehenen Spindelposition der Abführung für die fertig bearbeiteten Werkstücke übergeben.

Bei dieser beschriebenen Vorrichtung können die Spindeln nur mit solchen Spannmitteln ausgerüstet sein, die ein gleichzeitiges Spannen der Futterteile auf der Vorder- und auf der Rückseite erlauben. Dies kann bereits bei üblichen Teilen zu Schwierigkeiten führen, da es nicht immer möglich ist, ein Teil sowohl auf der ersten Seite wie auch auf der zweiten Seite mit dem gleichen Spannmittel zu spannen.

Außerdem steht nur eine geringe Zahl der Spindelpositionen zur Bearbeitung der Werkstücke zur Verfügung, da in der Regel eine Spindelposition für das Zuführen roher Werkstücke, eine Spindelposition für das Abführen fertig bearbeiteter Werkstücke und eine Spindelposition zum Wenden der Teile vorgesehen werden muß. Insbesondere die Spindelpositionen für das Zuführen und das Abführen der Werkstücke können in der Regel für eine Bearbeitung nicht in Frage kommen, so daß maximal pro Werkstückseite zwei Spindellagen zur Bearbeitung übrig bleiben, wobei noch zusätzlich in einer dieser Spindellagen ein Wenden des Werkstücks erfolgen muß.

Des weiteren ist in der Gildemeister-Druckschrift GM 030 3 Bu 1076 d, Seite 40, noch eine zweite Möglichkeit zur Bearbeitung eines Werkstücks auf einer ersten und einer zweiten Seite beschrieben, allerdings bei einem Acht-Spindler Bei diesem sind die acht Spindeln ebenfalls auf einer Spindeltrommel angeordnet, wobei die einzelnen Spindeln entsprechend ihrer Reihenfolge mit den Zahlen 1 bis 8 durchnumeriert sind. Die Spindeln 1, 3, 5 und 7 sind dabei zur Bearbeitung der Vorderseite vorgesehen und somit auch mit hierzu geeigneten Spannmitteln zum Spannen des Werkstücks auf der Rückseite ausgerüstet und die geradzahligen Spindeln 2, 4, 6 und 8 sind zum Bearbeiten der Rückseite vorgesehen und mit geeigneten Spannmitteln zum Spannen der

2

Werkstücke auf der Vorderseite versehen. Somit sind die Werkstücke auf der Spindeltrommel aufeinanderfolgend wechselnd entweder mit ihrer Vorder- oder ihrer Rückseite gespannt, so daß die jeweils andere Seite zur Bearbeitung zur Verfügung steht. Dieser Spindeltrommel sind insgesamt gehäusefest acht Spindelstationen zugeordnet, wobei die Spindeltrommel bei dem beschriebenen Verfahren jeweils um einen Doppelschritt weiterschaltet, so daß auch nur die mit einer geradzahligen Zahl gekennzeichneten Spindeln ebenfalls nur an den mit einer geradzahligen Zahl versehenen Spindelstationen vorbeikommen, während die mit einer ungeradzahligen Zahl versehenen Spindeln ihrerseits nur an mit ungeradzahligen Zahlen versehenen Spindelstationen vorbeikommen. Zwei nebeneinander liegende Spindelstationen werden nun dazu verwendet, die rohen Werkstücke zuzuführen und die fertigen Werkstücke abzuführen sowie gleichzeitig die halbfertig bearbeiteten Werkstücke von den geradzahligen auf die ungeradzahligen Spindeln, oder umgekehrt, über eine Wendeeinrichtung umzusetzen.

Bei einem solchen Mehrspindelautomaten werden also beispielsweise jeweils in die ungeradzahligen Spindeln in der Spindelposition 1 Rohteile eingesetzt, welche nach einem einmaligen Bearbeitungszyklus mit Doppelschrittschaltung jeweils in den Spindelpositionen 3, 5 und 7 bearbeitet werden und als Halbfertigteile wieder in der Spindelposition 1 ankommen. Dort werden sie gleichzeitig mit dem Einsetzen eines neuen Rohteils in diese Spindel auf die daneben liegende, beispielsweise in der Spindelposition 2 stehende Spindel über eine Wendeeinrichtung umgesetzt und durchlaufen in dieser Spindel sämtliche geradzahligen Spindelpositionen 4, 6 und 8, so daß sie als Fertigteile wieder in der Spindelposition 2 ankommen und von dort abgeführt werden.

Bei diesem Verfahren werden nach jedem Doppelschaltschritt vor dem nächsten ein Fertigteil aus einer in Spindelposition 2 stehenden Spindel entnommen, ein Halbfertigteil aus der in Spindelposition 1 stehenden Spindel entnommen, der Wendeeinrichtung zugeführt, von letzterer ein Halbfertigteil entnommen und in die in der Spindelposition 2 stehende Spindel eingesetzt sowie schließlich der in Spindelposition 1 stehenden Spindel ein Rohteil zugeführt.

Der Vorteil dieses Verfahrens und dieser Vorrichtung ist darin zu sehen, daß jede Spindel das Werkstück nur auf der Vorder- oder der Rückseite zu spannen hat und somit mit einem geeigneten Spannmittel ausgestattet werden kann. Allerdings besteht nach wie vor das Problem, daß aufgrund der Doppelschrittschaltung jeweils nur die Hälfte der Spindelpositionen für eine Bearbeitung der Vorderseite oder für eine Bearbeitung der Rückseite zur Verfügung stehen, wobei in der Regel noch jeweils eine Spindelposition für die Zuführ-, Abführ- und Umsetzeinrichtungen reserviert ist, so daß bei dem Acht-Spindler nur jeweils drei Spindelpositionen für die Vorder- und Rückseitenbearbeitung zur Verfügung stehen. Des weiteren besteht die Schwierigkeit, daß aufgrund der nebeneinander liegenden Spindellagen die Handhabung der Werkstücke behindert ist, da es erhebliche Schwierigkeiten bereitet, bei zwei nebeneinander liegenden Spindelpositionen eine Zuführung für Rohteile, eine Abführung für fertig bearbeitete Teile sowie eine Wende- und Umsetzeinrichtung anzuordnen.

Die GB-A- 14 42 598, aus der sich der nächstliegende Stand der Technik ergibt offenbart einen Mehrspindeldrehautomaten mit einer um eine horizontale Achse schrittweise drehbaren Spindeltrommel, die eine Vielzahl von in gleichen Winkelabständen angeordneten Spindeln mit Spannfuttern aufweist.

Um Werkstücke in diese Spannfutter einzusetzen, zu entnehmen und teilweise bearbeitete Werkstücke zu wenden und in die Spannfutter erneut einzusetzen, ist eine Ladevorrichtung vorgesehen, welche zwei Be- und Entladearme 16a uni 16b aufweist, von denen jeder ein Paar von Greifeinheiten 17a and 17b bzw. 17c und 17d trägt, wobei jede dieser Greifeinheiten ein Spannfutter zum Greifen eines Werkstücks besitzt.

Darüberhinaus umfaßt die Mehrspindeldrehmaschine eine Wendeeinrichtung, welche ein teilweise bearbeitetes Werkstück in einer Position 25b greift und zur Position 25 transportiert und dabei das Werkstück wendet.

Diese Wendeeinrichtung umfaßt ein drehfest angeordnetes Gehäuse und wird durch eine Welle angetrieben, die auch die Be- und Entladearme trägt, so daß durch Wendeeinheit um einen Winkel von 180° erfolgt. Diese Drehung der Greiferarme der Wendeeinheit um einen Winkel von 180° dient dazu, das teilweise bearbeitete Werkstück von der Position 25b in die Position 25 zu bringen und dabei zu wenden.

Die Mehrspindeldrehmaschine gemäß der GB-A- 14 42 598 arbeitet dabei folgendermaßen:

Neue unbearbeitete Werkstücke werden der Position 25a zugeführt und von der Position 25 in eine der Spindeln 14 unter Benutzung der Greifeinheit 17b geladen, wobei die Greifeinheit 17b vom Arm 16a gehalten ist. Das unbearbeitete Werkstück wird daher in die untere der beiden Spindelpositionen der Spindeltrommel, die zum Zuführen und Abführen von Werkstücken zur Verfügung stehen, eingesetzt.

Das unbearbeitete Werkstück, das in das untere Spannfutter 14 eingesetzt wird, wird durch Weiterschalten der Spindeltrommel unter Durchlaufen sämtlicher acht Spindelpositionen bearbeitet.

Schließlich kommt dieses Werkstück als teilweise bearbeitetes Werkstück wiederum in der unteren Spindelposition an, zu der auch die Greifeinheit 14c Zugriff hat. In dieser unteren Spindelposition nimmt die Greifeinheit 17c dieses teilweise bearbeitete Werstück aus dem Spannfutter heraus und bringt es aus dem Arbeitsraum heraus in die Position 25e. Von dort greift die Wendeeinrichtung das teilweise bearbeitete Werkstück und bringt es durch eine Schwenkbewegung um 180° in die Position 25, in der es gewendet vorliegt und durch die Greifeinheit 17a gegriffen wird. Die Greifeinheit 17a transportiert das teilweise bearbeitete Werkstück wiederum in den Arbeitsraum und setzt es in das obere der beiden Spannfutter ein, zu welchen die Greifeinheiten Zugriff haben.

In diesem Spannfutter wird das teilweise bearbeitete Werkstück auf seiner bearbeiteten Seite gespannt, so daß die noch nicht bearbeitete Seite frei für eine Bearbeitung unter Durchlaufen der acht Spindelpositionen ist.

Wenn das vollständig bearbeite Werkstück in der oberen der beiden Spindelpositionen ankommt, zu welcher die Greifeinheiten 17 Zugriff haben, so wird es dadurch entnommen, daß es zur Rutsche 22 transportiert wird.

Bei der Mehrspindeldrehmaschine gemäß der GB-A- 14 42 598 sind somit ebenfalls wie beim vorstehend beschriebenen Stand der Technik zwei Spindelpositionen notwendig, da für den ersten Durchlauf das Werkstück in der unteren der beiden Spindelpositionen eingesetzt wird, zu der die Greifeinheiten der Be- und Entladearme Zugriff haben und für den zweiten Durchlauf das einseitig bearbeitete Werkstück in die obere der beiden Spindelpositionen eingesetzt wird, zu der die Greifeinheiten der Be- und Entladearme Zugriff haben.

Damit hat die GB-A- 14 42 598 die gleichen Nachteile wie bereits eingehend im Zusammenhang mit dem Mehrspindelautomaten gemäß der Gildemeister-Druckschrift GM 030 3 Bu 1076d (Seite 40) geschildert wurde.

Der Erfindung liegt daher die Aufgabe zugrunde, ein Verfahren der gattungsgemäßen Art derart zu verbessern, daß die Zahl der zur Bearbeitung der Werkstücke zur Verfügung stehenden Spindelpositionen vergrößert wird.

Diese Aufgabe wird bei einem Verfahren zum beidseitigen Bearbeiten von Werkstücken, bei welchem die Werkstücke auf einer mehrere Spindeln, insbesondere mit zueinander parallelen und in gleichen Winkelabständen rings um eine Trommelachse angeordneten Spindelachsen, aufweisenden schrittweise weiterschaltbaren Spindeltrommel aufeinanderfolgend in ersten und zweiten Spindeln auf einer ersten bzw. einer zweiten Seite gespannt werden und bei welchem den ersten Spindeln rohe Werkstücke zugeführt werden, den zweiten Spindeln fertig bearbeitete Werkstücke entnommen werden und halbfertig bearbeitete Werkstücke von den ersten auf die zweiten Spindeln bei gleichzeitigem Wechsel einer Spannung der Werkstücke von der ersten auf die zweite Seite umgesetzt werden, erfindungsgemäß dadurch gelöst, daß die Spindeln der Spindeltrommel in Einzelschritten von einer Spindelposition zur nächsten weitergeschaltet werden und daß eine einzige der Spindelpositionen der Spindeltrommel ausgewählt wird, in welcher abwechselnd nach jeder Trommelschaltung entweder eines der halbfertig bearbeiteten Werkstücke aus der in dieser Spindelposition stehenden Spindel entnommen und ein rohes Werkstück in diese Spindel eingesetzt wird oder ein fertig bearbeitetes Werkstück aus dieser Spindel entnommen und zum Beenden des Umsetzens eines der halbfertig bearbeiten Werkstücke in diese Spindel eingesetzt wird und daß beim Umsetzen das Werkstück einer im Arbeitsraum der ausgewählten Spindelposition gegenüberliegend angeordneten Werkstückhalteeinrichtung übergeben wird.

Alternativ dazu wird diese Aufgabe bei einem Verfahren zum beidseitigen Bearbeiten von Werkstücken, bei welchem die Werkstücke auf einer mehrere Spindeln, insbesondere mit zueinander parallelen und in gleichen Winkelabständen rings um eine Trommelachse angeordneten Spindelachsen, aufweisenden schrittweise weiterschaltbaren Spindeltrommer aufeinanderfolgend in ersten und zweiten Spindeln auf einer ersten bzw. einer zweiten Seite gespannt werden und bei welchem den ersten Spindeln rohes Werkstücke zugeführt werden, den zweiten Spindeln fertig bearbeitete Werkstücke entnommen werden und halbfertig bearbeitete Werkstücke von den ersten auf die zweiten Spindeln bei gleichzeitigem Wechsel einer Spannung der Werkstücke von der ersten auf die zweite Seite umgesetzt werden, erfindungsgemäß dadurch gelöst, daß die Spindeln der Spindeltrommel in Einzelschritten von einer Spindelposition zur nächsten weitergeschaltet werden und daß eine einzige der Spindelpositionen der Spindeltrommel ausgewählt wird, in welcher abwechselnd nach jeder Trommelschaltung entweder eines der halbfertig bearbeiteten Werkstücke aus der in dieser Spindelposition stehenden Spindel entnommen und ein rohes Werkstück in diese Spindel eingesetzt wird oder ein fertig bearbeitetes Werkstück aus dieser Spindel entnommen und zum Beenden des Umsetzens eines der halbfertig bearbeiteten Werkstücke in diese Spindel eingesetzt wird, und daß zum Umsetzen ein um eine quer zu einer Spindelachse verlaufende Achse um 180° dreh- barer Werkstückgreifer verwendet wird.

Weitere vorteilhafte Ausgestaltungen sind Gegenstand der Unteransprüche.

Die erfindungsgemäße Lösung bietet gleichzeitig mehrere Vorteile. So wird zum Zuführen, Abführen und Umsetzen der Werkstücke lediglich eine Spindelposition benötigt, so daß sich daher bereits die Zahl der zur Bearbeitung des Werkstücks zur Verfügung stehenden Spindelpositionen erhöht. Des weiteren kann dadurch, daß nur ein Zugriff auf eine Spindelposition erforderlich ist, die Handhabungseinrichtung einfach kompakt gebaut sein, so daß sich bezüglich der aus dem Stand der Technik bekannten Mehrspindelautomaten mit mehreren Zuführ-, Abführ- und Umsetzeinrichtungen ein merklich einfacherer Aufbau und auch eine wesentlich vereinfachte Steuerung des Automaten ergibt. Des weiteren wird die Zahl der für jedes Werkstück zur Verfügung stehenden Spindelpositionen mehr als verdoppelt, denn jedes Werkstück passiert jede Spindelposition und kann somit auch in jeder Spindelposition bearbeitet werden. So kann z.B. bei einem nach dem erfindungsgemäßen Verfahren arbeitenden Sechs-Spindler das Rohteil in mindestens fünf Spindelpositionen bearbeitet werden, bis es wieder in der sechsten Spindelposition ankommt, von dort wird es von der ersten Spindel auf eine der zweiten Spindeln umgesetzt und durchläuft ebenfalls nochmals fünf Spindelpositionen, in denen eine Bearbeitung möglich ist. Nur zur Verdeutlichung soll nochmals an dieser Stelle auf die Verfahren gemäß dem Stand der Technik verwiesen werden, bei denen stets nur die Hälfte der Spindelpositionen zur Bearbeitung der Vorder- oder Rückseite zur Verfügung steht, sei es dadurch, daß wie im ersten Fall in den ersten drei Spindelpositionen eine Vorderseiten- und in den zweiten drei Spindelpositionen eine Rückseitenbearbeitung durchgeführt wird, oder sei es dadurch, daß eine Doppelschrittschaltung angewandt wird, so daß jede Spindelposition entweder von den ersten Spindeln oder den zweiten Spindeln angefahren wird. Hinzu kommen noch die weiteren Nachteile des Standes der Technik, die daraus resultieren, daß in der Regel mindestens zwei Spindelpositionen durch eine Zuführ- und eine Abführeinrichtung blockiert sind, was bei einem Sechs-Spindler dazu führt, daß in der Regel lediglich zwei Spindelpositionen zur Bearbeitung der Vorderseite und zwei Spindelpositionen zur Bearbeitung der Rückseite zur Verfügung stehen. Diese Erhöhung der Zahl der zur Bearbeitung eines Werkstücks zur Verfügung stehenden Spindelpositionen ist vor allem für komplexe Teile, bei denen sehr viele Bearbeitungsschritte durchgeführt werden müssen, von großem Vorteil, da die Zahl der Bearbeitungswerkzeuge, die einer Spindelposition zugeordnet werden können, bereits aus Platzgründen nicht unbegrenzt erhöht werden kann, so daß normalerweise jeder Spindelposition maximal drei unabhängig voneinander bewegbare Werkzeuge zugeordnet werden können. Damit können bei der erfindungsgemäßen Lösung maximal jeweils fünfmal drei, also fünfzehn Werkzeuge zur Bearbeitung der Vorder- und Rückseite eingesetzt werden, während dies bei den Verfahren gemäß dem Stand der Technik maximal jeweils zweimal drei, also sechs Werkzeuge sind.

Schließlich erreicht man mit dem erfindungsgemäßen Verfahren auch noch, daß in die ersten Spindeln nur Werkstücke mit ihrer ersten Seite und in die zweiten Spindeln nur Werkstücke mit ihrer zweiten Seite eingesetzt werden, so daß die jeweiligen Spannmittel den ersten und zweiten Seiten der Werkstücke angepaßt sein können.

Das vorstehend beschriebene Verfahren ist - wie bereits eingangs erläutert - insbesondere dann überlegen, wenn Werkstücke bearbeitet werden sollen, für die eine Vielzahl von Bearbeitungsschritten notwendig ist. Bei der Bearbeitung "einfacherer" Werkstücke, d.h. solcher die weniger Bearbeitungsschritte erfordern, wäre das erfindungsgemäße Verfahren nicht optimal eingesetzt. Aus diesem Grund ist hierfür bei einem weiteren Ausführungsbeispiel des erfindungsgemäßen Verfahrens vorgesehen, daß mindestens eine zweite Spindelposition der Spindeltrommel ausgewählt wird, in welcher sowohl ein zusätzliches Zuführen roher Werkstücke, ein zusätzliches Entnehmen fertig bearbeiteter Werkstücke als auch ein zusätzliches Umsetzen halbfertig bearbeiteter Werkstücke durchgeführt wird und in welcher das Zuführen roher Werkstücke und das Entnehmen fertig bearbeiteter Werkstücke nach jeder Trommelschaltung einander abwechseln.

Damit erreicht man auch bei den "einfacheren" Werkstücken eine optimale Ausnutzung der Möglichkeiten, die das erfindungsgemäße Verfahren bietet, so daß bei diesen einfachen Werkstücken gegenüber dem ersten Ausführungsbeispiel ungefähr eine Verdoppelung der Stückzahlen möglich ist.

Die beiden Spindelpositionen gemäß dem weiteren Ausführungsbeispiel können vorteilhafterweise entsprechend der für die Werkstücke und die weiteren Werkstücke erforderlichen Zahl von Bearbeitungsstationen ausgewählt werden. Im einfachsten Fall werden diese so ausgewählt, daß sie auf gegenüberliegenden Seiten der Spindeltrommel liegen, d.h. insbesondere spiegelbildlich zu einer Drehachse der Spindeltrommel.

Bei den vorstehend beschriebenen Verfahren wurde offen gelassen, wie das Umsetzen eines Werkstücks von den ersten auf die zweiten Spindeln und somit auch das Umspannen von der ersten Seite auf die zweite Seite erfolgen soll. Hierfür sind dem Fachmann eine Vielzahl von Maßnahmen geläufig. Die einfachste Möglichkeit für das Umsetzen besteht darin, daß das Umsetzen ein mehrfaches Übergeben des Werkstücks umfaßt, d.h. daß das auf einer ersten Spindel in der für das Umsetzen vorgesehenen Spindelposition ankommende Werkstück so lange mehreren Werkstückgreifeinrichtungen übergeben wird, bis die zweite Seite dieses Werkstücks nach einem Weiterschalten der Spindeltrommel von einer in der für das Umsetzen vorgesehenen Spindelposition ankommenden zweiten Spindel gespannt werden kann.

Solange das Umsetzen lediglich ein übergeben des Werkstücks ohne Wenden einer Werkstückhaltevorrichtung umfaßt, d.h. wenn als Greifer Futter- oder Stirnseitengreifer zum Einsatz kommen, ist es erforderlich, daß das Umsetzen ein ungeradzahliges Übergeben des Werkstücks umfaßt, wobei das Werkstück beim Übergeben auf der entgegengesetzten Seite gegriffen wird. Durch die ungerade Zahl von Übergabeschritten erfolgt zwangsläufig ein Wechseln der Spannung des Werkstücks von der ersten auf die zweite Seite.

Anstelle des ungeradzahligen Übergebens beim Umsetzen ist es jedoch ebenfalls möglich, daß das Umsetzen ein Wenden umfaßt. In diesem Fall ist es nicht mehr notwendig, eine ungerade Zahl von Übergaben herbeizuführen. Hierfür ist es denkbar, beispielsweise eine separate Wendeeinrichtung vorzusehen oder es kann auch an der Werkstückgreifeinrichtung ein Radialgreifer zum Wenden des Werkstücks vorgesehen sein.

Um möglichst wenig Zeit beim Umsetzen zu verlieren, ist es vorteilhaft, wenn das Umsetzen in einem Arbeitsraum der Werkzeugmaschine erfolgt, um das Werkstück über möglichst geringe Strecken zu bewegen und dabei möglichst viel Zeit zu sparen.

Andererseits kann es jedoch dann, wenn beispielsweise in der für das Umsetzen vorgesehenen Spindelposition noch ein Bearbeitungsschritt erfolgen soll, von Vorteil sein, wenn das Wenden außerhalb des Arbeitsraums erfolgt, um ein Verschmutzen des Werkstücks mit Spänen zu verhindern. Dies kann aber auch bereits dann notwendig sein, wenn in dem Arbeitsraum anfallende Späne schwer von dem Werkstück zu entfernen sind und beim Spannen auf der zweiten Seite keinesfalls ein Span mit eingespannt werden darf. Beispielsweise ist es bei dieser Vorgehensweise auch möglich, das Werkstück beim Wenden außerhalb des Arbeitsraums intensiv zu reinigen.

Im Rahmen der vorstehenden Ausführungen wurde zwar erläutert, in welchen Schritten das Umsetzen güngstigerweise erfolgen soll, es wurde nichts darüber ausgesagt, wie das Umsetzen vorteilhafterweise am schnellsten und einfachsten durchgeführt wird, da es bei der erfindungsgemäßen Lösung insbesondere darauf ankommt, die Zeiten, die für die einzelnen Vorgänge gemäß dem erfindungsgemäßen Verfahren benötigt werden, möglichst kurz zu halten. Aus diesem Grund ist es im Rahmen der erfindungsgemäßen Lösung besonders vorteilhaft, wenn zum Umsetzen ein um eine quer zu einer Spindelachse verlaufende Achse um 180° drehbarer Werkstückgreifer verwendet wird, der beim Umspannen des halbfertig bearbeiteten Werkstücks sehr schnell und rationell arbeitet.

So sieht beispielsweise eine Variante des erfindungsgemässen Verfahrens unter Verwendung des vorstehend genannten Werkstückgreifers vor, daß in der ausgewählten Spindelposition das Umsetzen des halbfertig bearbeiteten Werkstücks im Arbeitsraum so durchgeführt wird, daß das halbfertig bearbeitete Werkstück mittels des Werkstückgreifers aus der Spindel entnommen, der Werkstückgreifer um 180° gedreht und das Werkstück einer in Achsrichtung auf die Spindel zustellbaren Werkstückhalteeinrichtung übergeben sowie von dieser in die nach einem Weiterschalten in der ausgewählten Spindelposition stehende Spindel eingesetzt wird. Bei dieser Variante des erfindungsgemäßen Verfahrens erfolgt also das Umsetzen dergestalt, daß das halbfertig bearbeitete Werkstück auf der bearbeiteten Seite von dem Werkstückgreifer gegriffen und so der Werkstückhalteeinrichtung übergeben wird, daß es diese auf der noch nicht bearbeiteten Seite greift und durch die Werkstückhalteeinrichtung nach einem Weiterschalten der Spindeltrommel in die Spindel einsetzt, wobei das Werkstück auf der bearbeiteten Seite gespannt wird, so daß nunmehr die zuerst nicht bearbeitete Seite zur Bearbeitung frei ist. Dieses im Arbeitsraum durchgeführte Verfahren des Umsetzens ist äußerst zeitsparend, insbesondere dann, wenn die Werkstückhalteeinrichtung koaxial zur Spindel ausgerichtet ist, so daß bei der Übergabe des Werkstücks von der Spindel auf die Werkstückhalteeinrichtung zusätzlich zum Drehen um die Achse quer zur Spindelachse lediglich Bewegungen in koaxialer Richtung der Spindel erforderlich sind.

Alternativ zur vorstehend beschriebenen Variante sieht eine weitere Variante des erfindungsgemäßen Verfahrens vor, daß in der ausgewählten Spindelposition das Umsetzen des halbfertig bearbeiteten Werkstücks im Arbeitsraum so erfolgt, daß das halbfertig bearbeitete Werkstück mittels einer in Achsrichtung auf die Spindel zustellbaren Werkstückhalteeinrichtung entnommen, dem Werkstückgreifer übergeben und der Werkstückgreifer um 180° gedreht wird sowie von diesem in die nach einem Weiterschalten in der ausgewählten Spindelposition stehende Spindel eingesetzt wird. Diese Variante ist genauso schnell wie die vorstehend beschriebene Variante durchführbar, sie unterscheidet sich von dieser lediglich dadurch, daß das halbfertig bearbeitete Werkstück von der Werkstückhalteeinrichtung aus der Spindel entnommen wird. Diese Variante bietet sich insbesondere bei der Bearbeitung von Stangenmaterial, wie im folgenden noch näher erläutert werden wird, an.

Die vorstehend beschriebenen Varianten finden insbesondere dann Anwendung, wenn das halbfertig bearbeitete Werkstück vom Werkstückgreifer axial, das heißt beispielsweise front- oder stirnseitig gegriffen wird.

Eine weitere Variante des erfindungsgemäßen Verfahrens, die insbesondere bei Wellenteilen Anwendung findet, sieht vor, daß in der ausgewählten Spindelposition das Umsetzen des halbfertig bearbeiteten Werkstücks im Arbeitsraum so durchgeführt wird, daß dieses in radialer Richtung gegriffen, aus der in der ausgewählten Spindelposition stehenden ersten Spindel entnommen wird, im Arbeitsraum verbleibend durch eine 180°-Drehung des Werkstückgreifers gewendet und nach dem Entnehmen des durch Weiterschalten der Spindeltrommel in der ausgewählten Spindelposition in der zweiten Spindel gespannten fertigbearbeiteten Werkstücks in diese das halbfertig bearbeitete Werkstück eingesetzt wird. Bei dieser Variante des erfindungsgemäßen Verfahrens ist also ein Übergeben des halbfertig bearbeiteten Werkstücks an eine zusätzliche Werkstückhalteeinrichtung nicht notwendig, da das Werkstück, beispielsweise ein Wellenteil, in radialer Richtung, insbesondere in einem mittigen Bereich, gegriffen werden kann und durch Drehen des Werkstückgreifers um 180° mit der bereits bearbeiteten Seite nach dem Weiterschalten der Spindeltrommel in die nächste Spindel eingesetzt werden kann.

Auch bei dieser Variante des erfindungsgemäßen Verfahrens liegt der große Vorteil darin, daß das Umsetzen des halbfertig bearbeiteten Werkstücks so erfolgen kann, daß dieses den Arbeitsraum nicht verlassen muß und damit sehr kurze Umsetzzeiten erreichbar sind.

Ergänzend zu den bisher beschriebenen Varianten des erfindungsgemäßen Verfahrens, bei denen lediglich das Umsetzen des halbfertig bearbeiteten Werkstücks näher erläutert wurde, ist es weiterhin, insbesondere um wertvolle Zeit zu sparen, zweckmäßig, wenn als Werkstückgreifer ein Doppelgreifer verwendet wird und wenn das fertig bearbeitete Werkstück aus der in der ausgewählten Spindelposition stehenden Spindel entnommen und aus dem Arbeitsraum herausgebracht wird. Dieses erfindungsgemäße Verfahren hat zusätzlich den Vorteil, daß im Gegensatz zum Stand der Technik, bei welchem das fertig bearbeitete Werkstück beispielsweise fallen gelassen und aufgefangen wird, keine zusätzliche Einrichtung zum Auffangen des Werkstücks erforderlich ist und außerdem mittels des Greifers das fertig bearbeitete Werkstück in definierter Lage, beispielsweise einer Werkstücktransporteinrichtung übergeben werden kann.

Bei den bislang beschriebenen Möglichkeiten des erfindungsgemäßen Verfahrens wurde offen gelassen, wie das Werkstück den ersten Spindeln zugeführt wird. So ist es beispielsweise bei bestimmten Teilen möglich, daß das rohe Werkstück koaxial zu den ersten Spindeln zugeführt wird, das heißt, daß dieses beispielsweise in Form von Stangenmaterial koaxial durch die Spindel hindurchgeschoben wird, so daß weder dem Greifer zusätzliche Aufgaben zugemutet werden müssen, noch eine zusätzliche Vorrichtung im Arbeitsraum zum Einsetzen des Verkstücks notwendig ist.

Um bei einem derartigen koaxialen Zuführen des rohen Werkstücks einen Vorschub desselben, das heißt das Herausschieben des Werkstücks aus der Spindel definiert vornehmen zu können, muß ein zusätzlicher Anschlag vorgesehen sein, gegen welchen das Werkstück geschoben wird. Besonders einfach und zeitsparend ist es daher, wenn der Werkstückgreifer als Begrenzungsanschlag beim koaxialen Zuführen des rohen Werkstücks eingesetzt wird, so daß der Werkstückgreifer dieses Werkstück nicht einsetzen muß und das Vorsehen eines zusätzlichen Anschlags unnötig wird.

In all den Fällen, in denen ein Zuführen des Werkstücks koaxial zu den ersten Spindeln nicht möglich ist, ist bei dem erfindungsgemäßen Verfahren, insbesondere wiederum um Zeit zu sparen und eine möglichst einfache Verfahrensführung zu erreichen, vorgesehen, daß das rohe Werkstück durch den Doppelgreifer in den Arbeitsraum gebracht und in die in der ausgewählten Spindelposition stehende erste Spindel eingesetzt wird.

Bereits das einfachste Ausführungsbeispiel des erfindungsgemäßen Verfahrens, bei welchem vorgesehen ist, daß das Werkstück in mehreren Spindelpositionen mit Ausnahme der für das Zuführen, Entnehmen und Umsetzen vorgesehenen Spindelposition bearbeitet wird, treten die eingangs beschriebenen Vorteile hinsichtlich der zur Bearbeitung zur Verfügung stehenden Spindelpositionen ein. Dabei müssen dies nicht unbedingt alle Spindelpositionen sein, sondern es kann auch beispielsweise in einer Spindelposition nur die Bearbeitung einer Seite mit einer Werkzeugkombination erfolgen, die für die andere Seite nicht geeignet ist.

Dadurch, daß eine Spindelposition für das Zuführen, Entnehmen und Umsetzen freigehalten wird, werden auch Probleme betreffend eine Verschmutzung sämtlicher Werkstückspann- und Greifeinrichtungen mit Spänen in einfacher Weise vermieden, die zu Beschädigungen des Werkstücks führen können.

Andererseits ist es jedoch in manchen Fällen erforderlich und auch wünschenswert, wenn das Werkstück in der für das Zuführen, Entnehmen und Umsetzen vorgesehenen Spindelposition bearbeitet wird, was beispielsweise nur dann der Fall sein wird, wenn die Bearbeitungszeit für ein Teil optimiert werden muß, da sämtliche Handhabungsoperationen in der Regel wesentlich weniger Zeit beanspruchen als die nach jedem Weiterschalten der Spindeltrommel durchzuführenden Zerspanungsvorgänge, so daß in der Regel die in der für das Zuführen, Entnehmen und Umsetzen vorgesehenen Spindelposition zur Verfügung stehende Zeit durch die Handhabungsoperationen nicht voll ausgeschöpft und dadurch wertvolle Bearbeitungszeit verschenkt wird, so daß beispielsweise ein letztes Überdrehen des Werkstücks in der für das Zuführen, Entnehmen und Umsetzen vorgesehenen Spindelposition problemlos erfolgen kann.

Eine Bearbeitung des Werkstücks in der für das Zuführen, Entnehmen und Umsetzen vorgesehenen Spindelposition ist auch immer dann notwendig, wenn beim Umsetzen ein Abstechen des Werkstücks erfolgt. Dies wird immer dann der Fall sein, wenn als Ausgangsmaterial für die Werkstücke Stangenmaterial verwendet wird und wenn es beispielsweise aufgrund der erforderlichen Oberflächengenauigkeit notwendig ist, das Teil nur in einer Einspannung über seine gesamte Länge zu bearbeiten.

Zum Abstechen ist es erforderlich, daß das Werkstück vom Werkstückgreifer oder von der Werkstückhalteeinrichtung drehend gehalten wird.

Ein besonders sauberes und exaktes Abstechen des Werkstücks ist dann möglich, wenn dieses beim Abstechen synchron gehalten wird, so daß kein ansonsten beim Abstechen üblicher Butzen entsteht. Im übrigen kann das synchrone Halten des Werkstücks beim Abstechen gleichzeitig ein erstes Übergeben des Werkstücks zum Umsetzen darstellen, so daß der Abstechvorgang bereits in das Umsetzen integriert ist und somit das Umsetzen wesentlich schneller erfolgen kann.

Des weiteren liegt der Erfindung die Aufgabe zugrunde, einen Mehrspindelautomat der gattungsgemäßen Art derart zu verbessern, daß mit diesem eine Durchführung des vorstehend beschriebenen Verfahrens möglich ist.

Diese Aufgabe wird bei einem Mehrspindelautomat zum beidseitigen Bearbeiten von Werkstücken, insbesondere zur Durchführung des vorstehend beschriebenen Verfahrens, mit einem mehrere Spindeln, insbesondere mit zueinander parallelen und in gleichen Winkelabständen rings um eine Trommelachse angeordneten Spindelachsen, aufweisenden Spindeltrommel, auf welcher aufeinanderfolgende erste und zweite Spindeln zum Einspannen der Werkstücke auf einer ersten bzw. zweiten Seite vorgesehen sind, und mit einer eine Werkstückgreifeinrichtung und eine der Werkstückgreifeinrichtung zugeordnete Werkstückhalteeinrichtung umfassenden Handhabungseinheit zum Zuführen roher Werkstücke, zum Abführen fertig bearbeiteter Werkstücke und zum Umsetzen der halbfertig bearbeiteten Werkstücke von der ersten auf die zweite Spindel unter gleichzeitigem Wechsel der Werkstückeinspannung von der ersten zur zweiten Seite erfindungsgemäß dadurch gelöst, daß die Spindeln der Spindeltrommel in Einzelschritten von Spindelposition zu Spindelposition schaltbar ist, und daß mindestens eine Spindelposition der Spindeltrommel ausgewählt ist, welcher sowohl die Zuführung für die rohen Werkstücke und die Abführung für die fertig bearbeiteten Werstücke sowie für das Umsetzen der halbfertig bearbeiteten Werkstücke die Handhabungseinheit funktionsmäßig zugeordnet sind, daß die Werkstückhalteeinrichtung der Spindel in der ausgewählten Spindelposition im Arbeitsraum gegenüberliegend angeordnet ist, und daß in der ausgewählten Spindelposition abwechselnd nach jeder Schaltung der Spindeltrommel entweder ein halbfertig bearbeitetes Werkstück entnehmbar und ein rohes Werkstück zuführbar oder ein fertig bearbeitetes Werkstück abführbar und ein halbfertig bearbeitetes Werkstück einsetzbar sind.

Alternativ dazu wird die Erfindung bei einem Mehrspindelautomat zum beidseitigen Bearbeiten von Werkstücken, insbesondere zur Durchführung des vorstehend beschriebenen Verfahrens, mit einer mehrere Spindeln, insbesondere mit zueinander parallelen und in gleichen Winkelabständen rings um eine Trommelachse angeordneten Spindelachsen aufweisenden Spindeltrommel, auf welcher aufeinanderfolgende erste und zweite Spindeln zum Einspannen der Werkstücke auf einer ersten bzw. zweiten Seite vorgesehen sind und mit einer eine Werkstückgreifeinrichtung umfassenden Handhabungseinheit zum Zuführen roher Werkstücke, zum Abführen fertig bearbeiteter Werkstücke und zum Umsetzen der halbfertig bearbeiteten Werkstücke von der ersten auf die zweite Spindel unter gleichzeitigem Wechsel der Werkstückeinspannung von der ersten zur zweiten Seite, erfindungsgemäß dadurch gelöst, daß die Spindeln der Spindeltrommel in Einzelschritten von Spindelposition zu Spindelposition schaltbar ist und daß mindestens eine Spindelposition der Spindeltrommel ausgewählt ist, welcher sowohl die Zuführung für die rohen Werkstücke und die Abführung für die fertig bearbeiteten Werkstücke sowie für das Umsetzen der halbfertig bearbeiteten Werkstücke die Handhabungseinheit funktionsmäßig zugeordnet sind, daß die Werkstückgreifeinrichtung einen um eine quer zur Spindelachse verlaufende Achse um mindestens 180° drehbaren Werkstückgreifer umfaßt, und daß in der ausgewählten Spindelposition abwhechselnd nach jeder Schaltung der Spindeltrommel entweder ein halbfertig bearbeitetes Werkstück entnehmbar und ein rohes Werkstück zuführbar oder ein fertig bearbeitetes Werkstück abführbar und ein halbfertig bearbeitetes Werkstück einsetzbar sind.

Weitere vorteilhafte Ausführungsformen sind Gegenstand der Unteransprüche.

Dieser erfindungsgemäße Mehrspindelautomat weist dieselben Vorteile wie das vorstehend beschriebene Verfahren auf. Zusätzlich ist noch zu erwähnen, daß der erfindungsgemäße Mehrspindelautomat aufgrund der Tatsache, daß nur eine Werkstückgreifeinrichtung erforderlich ist, einfacher aufgebaut sein kann und somit auch eine kostengünstigere Lösung möglich ist.

Für "einfache" Werkstücke ist es zur optimalen Ausnutzung der Möglichkeiten des erfindungsgemäßen Mehrspindelautomaten besonders vorteilhaft, wenn mindestens eine zweite Spindelposition der Spindeltrommel vorgesehen ist, welcher sowohl eine weitere Abführung für rohe Werkstücke und eine weitere Zuführung für fertig bearbeitete Werkstücke selbst oder in Verbindung mit einer weiteren Werkstückgreifeinrichtung sowie eine weitere Handhabungseinheit funktionsmäßig zugeordnet sind und in welcher abwechselnd nach jeder Schaltung der Spindeltrommel entweder rohe Werkstücke zuführbar oder fertig bearbeitete Werkstücke abführbar sind.

Die Anordnung der Spindelpositionen kann prinzipiell der für die jeweiligen Teile notwendigen Bearbeitungsschritte angepaßt werden. Vorteilhafterweise werden die Spindelpositionen einander gegenüberliegend angeordnet, insbesondere so, daß sie von einander gegenüberliegenden Seiten des Mehrspindelautomaten zugänglich sind.

Bei den bisher beschriebenen Ausführungsbeispielen wurde nicht näher auf die Ausbildung der Werkstückgreifeinrichtung eingegangen. So ist es, insbesondere um sehr kurze Zeiten beim Umsetzen des Werkstücks zu erreichen, von Vorteil, wenn die Werkstückgreifeinrichtung einen um eine quer zur Spindelachse verlaufende Achse drehbaren Werkstückgreifer umfaßt. Mit einem derartigen Werkstückgreifer läßt sich wie bereits im Zusammenhang mit dem Verfahren dargelegt, das halbfertig bearbeitete Werkstück sehr effektiv und schnell umsetzen.

Um mit diesem Greifer zum Drehen desselben um 180° nicht aus dem Arbeitsraum herausfahren zu müssen, was ebenfalls wertvolle Zeit kostet, ist zweckmäßigerweise vorgesehen, daß ein Arbeitsraum des Mehrspindelautomaten so ausgebildet ist, daß der Werkstückgreifer mit mindestens einem gegriffenen Werkstück in diesem um die quer zur Spindelachse verlaufende Achse drehbar ist.

Da es beim Umsetzen darauf ankommt, daß das Werkstück im Werkzeuggreifer um 180° geschwenkt werden kann, ist es zweckmäßig, wenn der Werkstückgreifer in zwei parallel zur Spindelachse ausgerichteten und um einen Drehwinkel von 180° bezüglich der quer zur Spindelachse verlaufenden Achse gegeneinander verdreht angeordneten Stellungen feststellbar ist, das heißt, daß der Werkstückgreifer im einfachsten Fall in diesen zwei Stellungen genau positionierbar ist und ein Antrieb vorgesehen ist, der diesen von der einen in die andere Stellung überführt. Bei Ausführungsbeispielen der erfindungsgemäßen Lösung, bei welchen weitere gedrehte Positionen des Greifers erforderlich sind, ist es aber auch denkbar, daß der Greifer in beliebige Winkelstellungen verdreh- und in diesen feststellbar ist.

Insbesondere um entsprechend den letztgenannten Ausführungsbeispielen den Werkstückgreifer in einfacher Weise um 180° drehen zu können, ist es günstig, wenn die Werkstückgreifeintung einen den Werkstückgreifer folgenden und um seine Längsachse drehbaren Arm umfaßt. Damit sind jedoch nicht alle im Rahmen der Erfindung liegenden Bewegungsmöglichkeiten des Armes erschöpft, so kann es beispielsweise dann, wenn beide Greifer auf derselben Seite liegen, erforderlich sein, daß der Arm auch in seiner Längsrichtung verschiebbar ist.

Bei der vorstehend beschriebenen erfindungsgemäßen Lösung eines Mehrspindelautomaten ist noch offen, wie die Werkstückgreifeinrichtung aussehen soll. So ist es beispielsweise günstig, wenn die Werkstückgreifeinrichtung einen Doppelgreifer umfaßt, damit diese einen Wechsel des Werkstücks in möglichst kurzer Zeit durchführen kann. Dabei sind bei der konstruktiven Ausgestaltung des Doppelgreifers mehrere Möglichkeiten denkbar, beispielsweise können die beiden Greifer auf derselben Seite eines Arms der Werkstückgreifeinrichtung angeordnet sein. Es ist andererseits aber auch möglich, daß die beiden Greifer einander gegenüberliegend und koaxial zueinander angeordnet sind.

Da die Werkstücke in der Regel in Spannmittel der Spindeln eingesetzt oder aus diesen herausgenommen werden müssen, ist es in solchen Fällen erforderlich, daß die Werkstückgreifeinrichtung parallel zu Drehachsen der Spindeln bewegbar ist, um ein exaktes herausnehmen und Einsetzen der Werkstücke zu gewährleisten.

Bei den bisher beschriebenen Ausführungsformen des Mehrspindelautomaten könnte die Werkstückgreifeinrichtung außerhalb des Arbeitsraums angeordnet sein und in diesen hineingreifen. Dies hat jedoch den großen Nachteil, daß der Arbeitsraum, der während der Bearbeitungsvorgänge aus Sicherheitsgründen und auch wegen des in großen Mengen im Arbeitsraum versprühten Kühl- und Gleitmittels sowie der bei den einzelnen Bearbeitungsschritten fliegenden Späne geschlossen sein sollte, offen bleiben muß. Daher sieht eine bevorzugte Ausführung des erfindungsgemäßen Mehrspindelautomaten vor, daß die Werkstückgreifeinrichtung im Arbeitsraum angeordnet ist und sowohl die ausgewählte Spindelposition als auch eine außerhalb des Arbeitsraums angeordnete Werkstücktransporteinrichtung in ihrem Griffbereich liegen, so daß die Werkstückgreifeinrichtung mit ihrem Werkstückgreifer, insbesondere während des Umsetzens, bei geschlossenem Arbeitsraum arbeiten kann und lediglich zum Greifen eines rohen Werkstücks und/oder zum Ablegen eines fertig bearbeiteten Werkstücks der Arbeitsraum geöffnet werden muß.

Um die Bewegungsmöglichkeiten der Werkstückgreifeinrichtung den durchzuführenden Bewegungen des Werkstückgreifers möglichst weitgehend anzupassen, ist vorgesehen, daß die Werkstückgreifeinrichtung eine zu den Spindeln ungefähr parallele Schwenkachse aufweist, so daß beispielsweise ein Verschieben der Werkstückgreifeinrichtung in Längsrichtung der Schwenkachse automatisch ein Verschieben parallel zu den Spindelachsen zur Folge hat.

Insbesondere zum Greifen von Wellenteilen hat es sich als zweckmäßig erwiesen, wenn der Werkstückgreifer ein Radialgreifer ist, mit welchem dann vorzugsweise, wie bereits im Zusammenhang mit dem erfindungsgemäßen Verfahren beschrieben, ein Übergeben zu einer Werkstückhalteeinrichtung entfallen kann, da ein Drehen des Radialgreifers ein Wenden des Wellenteils ohne eine weitere Übergabe zur Folge hat und somit das Wellenteil nach dem Drehen des Radialgreifers um 180° mit der bereits bearbeiteten Seite in die in ausgewählten Spindelpositionen stehende Spindel eingesetzt werden kann.

Soweit keine Wellenteile oder ähnliche durch einen Radialgreifer zu fassende Teile zu bearbeiten sind, das heißt insbesondere dann, wenn Futterteile bearbeitet werden sollen, hat es sich als zweckmäßig erwiesen, wenn der Werkstückgreifer ein Axialgreifer ist, mit welchem dann die zu greifenden Teile von ihren Front- oder Stirnseiten her gegriffen werden können.

Bislang wurde die Werkstückhalteeinrichtung nicht näher spezifiziert. So kann es, beispielsweise um Platz in dem beengten Arbeitsraum zu sparen, vorteilhaft sein, wenn die Werkstückhalteeinrichtung außerhalb des Arbeitsraums angeordnet ist. Dies hat weiterhin den Vorteil, daß keine Probleme im Hinblick auf eine Verschmutzung des der Werkstückhalteeinrichtung zugeordneten Spannmittels bestehen.

Allerdings wird es in all den Fällen, in denen das Werkstück möglichst schnell umgesetzt werden soll, vorteilhaft sein, wenn die Werkstückhalteeinrichtung innerhalb des Arbeitsraums angeordnet ist, da in diesem Fall die Wege, über die das Werkstück bewegt werden muß, wesentlich kürzer sind.

Eine besonders effektive Anordnung der Werkstückhalteeinrichtung liegt dann vor, wenn diese koaxial zu der zugeordneten Spindelposition angeordnet ist, da diese somit sehr schnell auf die Spindel zu oder von dieser Spindel wegbewegt werden kann und vor allem Zentrierbewegungen beim Greifen oder Einsetzen eines Werkstücks in die Spindel entfallen.

Speziell in letzterem Fall ist vorteilhafterweise vorgesehen, daß die Werkstückhalteeinrichtung in Richtung auf die zugeordnete Spindel hin- und herbewegbar ist, so daß eine unmittelbare Übergabe des Werkstücks von der Spindel zur Werkstückhalteeinrichtung und umgekehrt, ohne zusätzliche Verwendung der Werkstückgreifeinrichtung möglich ist.

Bei einem ganz anderen Ausführungsbeispiel der erfindungsgemäßen Vorrichtung kann es auch denkbar sein, daß die Werkstückhalteeinrichtung am Werkstückgreifer angeordnet ist, so daß eine äußerst platzsparende konstruktive Lösung zur Verfügung steht, bei welcher außerdem die Werkstückhalteeinrichtung ebenfalls unmittelbar im Arbeitsraum zum Einsatz kommen kann.

Bei sämtlichen bisherigen Ausführungsbeispielen ist noch offen geblieben, in welcher Weise das Umspannen des Werkstücks von der ersten Seite auf die zweite Seite erfolgen soll. Hierzu kann beispielsweise - wie bereits im Rahmen des erfindungsgemäßen Verfahrens beschrieben - ein mehrfaches Übergeben vorgesehen sein. Da dieses jedoch in der Regel aufgrund der mehrfachen Spann- oder Greifvorgänge zeitraubend ist, liegt es ebenfalls im Rahmen der vorliegenden Erfindung, wenn die Werkstückhalteeinrichtung eine Werkstückwendeeinrichtung ist, so daß das Umspannen des Werkstücks von der ersten Seite auf die zweite Seite mit möglichst wenigen Übergabeoperationen erfolgen kann.

Insbesondere bei einem Ausführungsbeispiel, bei welchem das Werkstück drehend der Werkstückhalteeinrichtung übergeben oder abgestochen werden soll, ist es zweckmäßig, wenn die Werkstückhalteeinrichtung ein Spannfutter aufweist, wobei es insbesondere dann, wenn das Werkstück vor dem Umsetzen butzenlos abgestochen werden soll, zusätzlich erforderlich ist, daß die Werkstückhalteeinrichtung eine Synchronspindel ist.

Die erfindungsgemäße Vorrichtung soll jedoch auch für die unmittelbare Verarbeitung von Stangenmaterial geeignet sein, so daß es nicht notwendig ist, vorher Rohteile mit definierter Länge herzustellen. Aus diesem Grund ist es bei einem für Stangenmaterial vorgesehenen Ausführungsbeispiel der erfindungsgemäßen Vorrichtung erwünscht, daß die Zuführung für rohe Werkstücke eine der dafür vorgesehenen Spindelposition zugeordnete Stangenführung ist. In diesem Fall erfolgt - im Gegensatz zur Verarbeitung von Futterteilen - das Zuführen der Rohteile direkt zu der jeweiligen ersten Spindel dann, wenn diese in der für das Zuführen, Abführen und Umsetzen vorgesehenen Spindelposition steht. Hierbei hat es sich als besonders zweckmäßig erwiesen, wenn der Werkstückgreifer eine als Begrenzung beim Vorschub des Stangenmaterials dienende Anschlagfläche aufweist und vorzugsweise einen Taster zum Anzeigen des an der Anschlagfläche anstoßenden Stangenmaterials umfaßt.

Wie bereits im Zusammenhang mit dem erfindungsgemäßen Mehrspindelautomaten erläutert wurde, besteht ein großer Vorteil der Erfindung darin, daß die ersten und zweiten Spindeln unterschiedliche Spannmittel zum Spannen der Werkstücke mit der ersten bzw. der zweiten Seite aufweisen und somit die Spannmittel optimal an die jeweiligen Anforderungen angepaßt werden können.

Andererseits kann es aber bei bestimmten speziellen Ausführungsformen des erfindungsgemäßen Mehrspindelautomaten wünschenswert sein, wenn die ersten und zweiten Spindeln Spannmittel aufweisen, die das Spannen der Werkstücke auf beiden Seiten erlauben, denn solche Mehrspindelautomaten sind, sofern sich durch das Spannen mit denselben Spannmitteln keine Probleme ergeben, universeller einsetzbar.

Die erfindungsgemäßen Mehrspindelautomaten wurden im Vorstehenden hinsichtlich der Bearbeitungsmöglichkeiten für die Werkstücke in den einzelnen Spindelpositionen nicht näher spezifiziert. So ist es vorteilhaft, wenn jeder zum Bearbeiten der Werkstücke vorgesehenen Spindelpositionen mindestens ein Werkzeugträger zugeordnet ist. Damit ist zumindest jeder Spindelposition, mit Ausnahme der Spindelposition zum Zuführen, Abführen und Umsetzen der Werkstücke, ein Werkzeugträger zuzuordnen. Sofern jedoch auch die Spindelposition zum Zuführen, Abführen und Umsetzen der Werkstücke gleichzeitig noch zum Bearbeiten eingesetzt werden soll, ist auch dieser erfindungsgemäß mindestens ein Werkzeugträger zuzuordnen.

Die Bearbeitung der Werkstücke in den einzelnen Spindelpositionen kann noch erfindungsgemäß effektiver dadurch erfolgen, daß einer oder mehreren Spindelpositionen mehrere Werkzeugträger zugeordnet sind, so daß in diesen Spindelpositionen gleichzeitig mehrere Zerspanungsvorgänge stattfinden können.

Wenn erfindungsgemäß in jeder Spindelposition sowohl eine Bearbeitung der Vorderseite als auch eine Bearbeitung der Rückseite stattfinden soll, ist es erförderlich, daß die Werkzeugträger in mindestens einer Richtung auf die Spindeln zustellbar sind, so daß je nach der in dieser Spindelposition zur Bearbeitung anstehenden Vorder- oder Rückseite der Werkzeugträger entsprechend zugestellt werden kann.

Wesentlich flexibler ist der erfindungsgemäße Mehrspindelautomat jedoch dann, wenn mehrere Werkzeugträger in mindestens einer Ebene bewegbar sind und eine optimale Flexibilität ist dann erreichbar, wenn mehrere Werkzeugträger in allen drei Raumrichtungen bewegbar sind.

Da es im Rahmen der vorliegenden Erfindung liegt, daß die Werkstücke in jeder Spindelposition sowohl auf der Vorderwie auch auf der Rückseite bearbeitet werden können und die Zahl der den einzelnen Spindelpositionen zugeordneten Werkzeugträger bereits aus Platzgründen nicht beliebig groß gewählt werden kann, sind bevorzugterweise die Werkzeugträger mit Universalwerkzeugen bestückt.

Eine andere Möglichkeit, mit ein und demselben Werkzeugträger unterschiedliche Bearbeitungsvorgänge durchzuführen, besteht dann, wenn die Werkzeugträger erfindungsgemäß mit Kombinationswerkzeugen bestückt sind, d.h. solchen Werkzeugen, welche beispielsweise auf zwei gegenüberliegenden Seiten unterschiedliche Werkzeugarten tragen, die durch geeignetes Verschieben des Werkzeugträgers unabhängig voneinander zum Einsatz bringbar sind.

Weitere Merkmale und Vorteile der vorliegenden Erfindung sind Gegenstand der folgenden Beschreibung sowie der zeichnerischen Darstellung einiger Ausführungsbeispiele. In der Zeichnung zeigen:

Fig. 1 eine schematische perspektivische Ansicht eines ersten Ausführungsbeispiels eines erfindungsgemäßen Mehrspindelautomaten;

Fig. 2 eine Schnittansicht längs Linie 2-2 in Fig. 1 ohne Werkzeughalteeinrichtungen und Werkstückhalteeinrichtung;

Fig. 3 eine Schnittansicht entsprechend Fig. 2 eines zweiten Ausführungsbeispiels;

Fig. 4 eine schematische Draufsicht auf eine Spindeltrommel zur Bearbeitung von Futterteilen gemäß dem ersten Ausführungsbeispiel mit versetzt dargestellter Werkstückhalteeinrichtung, wobei von allen Werkstücken lediglich ihr Spanndurchmesser gezeichnet ist;

Fig. 5, 6 und 7 eine schematische Darstellung von Handhabungsvorgängen entsprechend dem erfindungsgemäßen Verfahren zur Bearbeitung von Futterteilen;

Fig. 8 eine schematische Draufsicht entsprechend Fig. 4 auf eine Spindeltrommel gemäß dem zweiten Ausführungsbeispiel;

Fig. 9 eine schematische Draufsicht auf eine Spindeltrommel zur Bearbeitung von Stangenmaterial ähnlich Fig. 4 ;

Fig. 10, 11 und 12 eine schematische Darstellung entsprechend Fig. 5, 6 und 7 gemäß dem erfindungsgemäßen Verfahren zur Bearbeitung von Stangenmaterial;

Fig. 13 eine Gegenüberstellung von in jeder Spindelposition durchführbaren speziellen Zerspanungsvorgängen anhand des erfindungsgemäßen Verfahrens zur Bearbeitung von Stangenmaterial, wobei in jeder senkrechten Spalte sämtliche gleichzeitig durchgeführten Zerspanungsvorgänge schematisch dargestellt sind und sich die linke Spalte von der rechten Spalte um einen Schaltschritt unterscheidet;

Fig. 14 eine schemätische Draufsicht entsprechend Fig. 8 auf eine Spindeltrommel gemäß dem zweiten Ausführungsbeispiel zur Bearbeitung von Stangenmaterial;

Fig. 15 eine teilweise aufgebrochene Seitenansicht einer Variante eines Doppelgreifers;

Fig. 16 eine Schnittansicht ähnlich Fig. 2 eines dritten Ausführungsbeispiels.

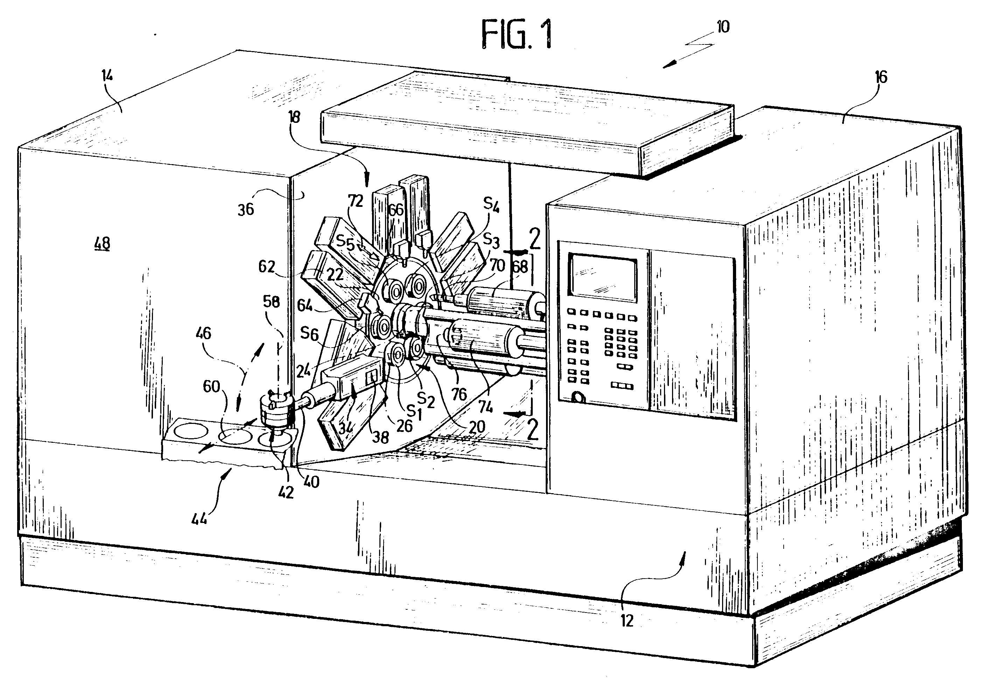

Fig. 1 zeigt im einzelnen ein als Ganzes mit 10 bezeichnetes erstes Ausführungsbeispiel eines Mehrspindelautomaten, von welchem ein Gestell 12 mit zwei auf diesem aufgesetzten Gehäuseteilen 14 und 16 sichtbar ist, wobei die Gehäuseteile 14 und 16 einen zwischen diesen liegenden Arbeitsraum 18 des Mehrspindelautomaten 10 begrenzen.

Eine ebenfalls auf dem Gestell 12 gehaltene Spindeltrommel 20 ist weitgehend von dem Gehäuseteil 14 verdeckt, so daß lediglich eine dem Arbeitsraum 18 zugewandte Stirnseite 22 der Spindeltrommel 20 sichtbar ist. Die Spindeltrommel 20 ist um eine im wesentlichen horizontal verlaufende Drehachse 24 drehbar und trägt insgesamt sechs Spindeln $S_1$ bis $S_6$, welche so in der Spindeltrommel 20 angeordnet sind, daß sämtliche Spindelachsen 25 der Spindeln $S_1$ bis $S_6$ parallel zur Drehachse 24 der Spindeltrommel liegen, von dieser denselben Abstand aufweisen und außerdem bezüglich der Drehachse 24 denselben Winkelabstand voneinander aufweisen.

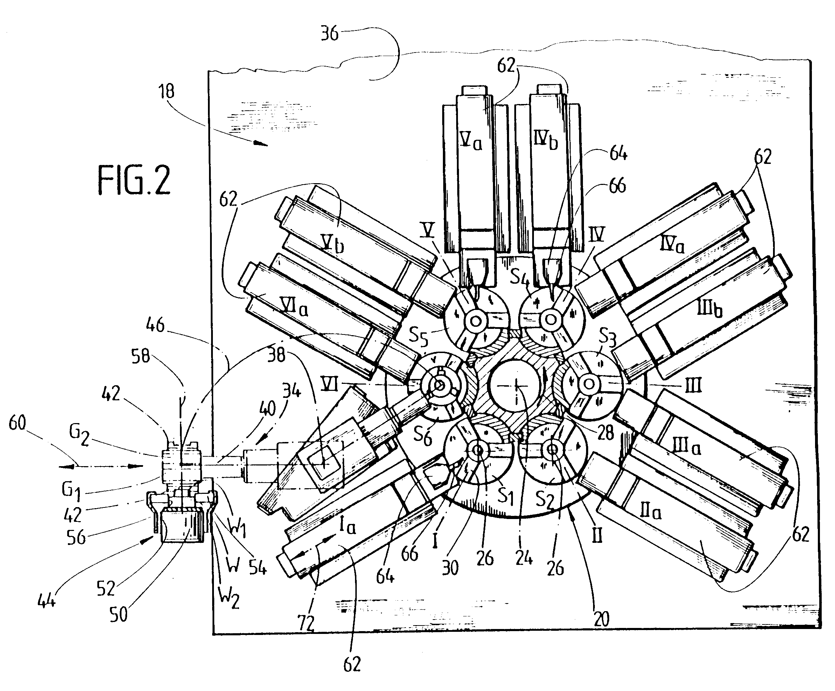

Wie insbesondere auch aus Fig. 2 ersichtlich ist, sind die Spindeln $S_1$ bis $S_6$ durch die schrittweise um einen Winkel entsprechend dem Winkelabstand zweier aufeinanderfolgender Spindeln voneinander weiterschaltbare Spindeltrommel 20 in insgesamt sechs Spindelpositionen I bis VI bringbar, wobei die Spindelpositionen gehäusefest definiert sind und sich mit einer Drehung der Spindeltrommel 20 nicht mitbewegen. Bei der in Fig. 2 dargestellten Schaltstellung der Spindeltrommel 20 ist die Spindel $S_1$ der Spindelposition I zugeordnet, die

Spindel $S_2$ der Position II usw. Die Spindeltrommel 20 kann entsprechend einer gegen den Uhrzigersinn verlaufenden und durch einen Pfeil 28 angegebenen Schaltrichtung um einen Schritt weitergeschaltet werden, so daß beim nächsten Schaltschritt die Spindel $S_1$ der Spindelposition II, die Spindel $S_2$ der Spindelposition III usw. zugeordnet sind.

Jede der Spindeln $S_1$ bis $S_6$ weist jeweils ein Spannmittel auf, wobei es sich bei diesem gemäß der Darstellung in Fig. 2 um ein Spannfutter 30 handelt.

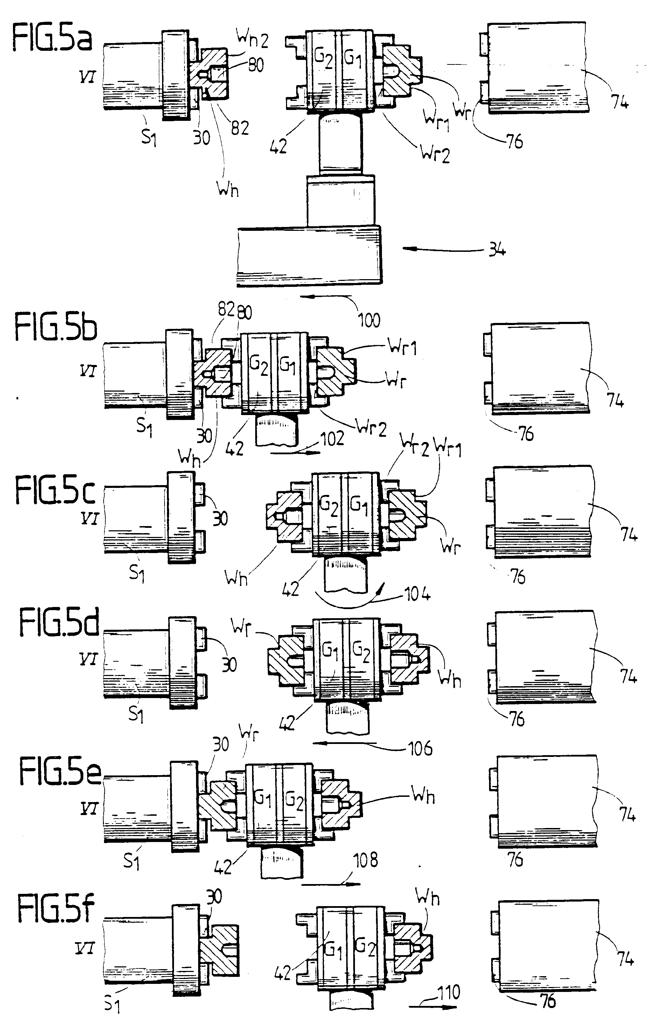

Dieses Spannfutter 30 muß in der Lage sein, ein beispielsweise in Fig. 5 dargestelltes Werkstück W auf einer ersten Seite $W_1$ oder einer zweiten Seite $W_2$ spannen zu können. Die Werkstücke W sind in den Spindeln $S_1$ bis $S_6$ so angeordnet, daß aufeinanderfolgende Spindeln die Werkstücke W abwechselnd auf ihrer ersten Seite $W_1$ oder ihrer zweiten Seite $W_2$ spannen. Beispielsweise soll gemäß der Darstellung in Fig. 2 die Spindel $S_1$ das Werkstück W auf der ersten Seite $W_1$, die Spindel $S_2$ das Werkstück W auf der zweiten Seite $W_2$ usw. spannen, so daß also in den Spindeln $S_1$, $S_3$ und $S_5$ die Werkstücke W auf ihrer ersten Seite $W_1$ und in den Spindeln $S_2$, $S_4$, $S_6$ die Werkstücke W auf ihrer zweiten Seite $W_2$ gespannt sind.

Der Spindelposition VI ist eine erste Werkstückgreifeinrichtung 34 zugeordnet, welche einen seitlich der Spindeltrommel 20 auf einer dem Arbeitsraum 18 zugewandten Frontseite 36 des Gehäuseteils 14 um eine im wesentlichen zur Spindelachse 26 parallele Schwenkachse 38 drehbar gelagerten Arm 40 umfaßt, welcher sich in einer im wesentlichen senkrecht zur Spindelachse verlaufenden Ebene erstreckt und an seinem äußeren Ende mit einem Doppelgreifer 42, bestehend aus zwei einander gegenüberliegenden Werkstückgreifern $G_1$ und $G_2$ versehen ist. Die Länge des Armes 40 der Werkstückgreifeinrichtung 34 ist so gewählt, daß die Werkstückgreifer $G_1$ und $G_2$ bei in die Spindelposition VI geschwenkter Stellung der Greifeinrichtung 34 (Fig. 2) koaxial zu der in dieser Spindelposition VI stehenden Spindel, in Fig. 2 der Spindel $S_6$, stehen und somit in der Lage sind, in der Spindel $S_6$ gespannte Werkstücke W zu fassen. Um die Werkstücke W in dieser Stellung aus der Spindel $S_6$ entnehmen oder auch in diese einsetzen zu können, ist der Arm 40 der Werkstückgreifeinrichtung 34 in Richtung seiner Schwenkachse 38 verschieblich gelagert.

Durch ein Verschwenken des Armes 40 um die Schwenkachse 38 ist die Werkstückgreifeinrichtung 34 in eine einer Werkstücktransporteinrichtung 44 zugeordneten Lage (in Fig. 2 strichpunktiert dargestellt) verschwenkbar, wobei sich der Doppelgreifer 42 längs eines Schwenkkreises 46 bewegt. Die Werkstücktransporteinrichtung 44 liegt außerhalb des Arbeitsraumes 18 und verläuft längs einer Vorderseite 48 des Gehäuseteils 14.

Im einzelnen umfaßt die Werkstücktransporteinrichtung 44 einen Träger 50 und ein durch Führungen 52 gehaltenes Transportband 54, welches dem Werkstück W angegaßte Ausnehmungen 56 aufweist. Das Werkstück W wird in den Ausnehmungen 56 in einer im wesentlichen horizontalen Lage gehalten, so daß eine Achse 58 des in der Ausnehmung 56 gehaltenen Werkstücks W im wesentlichen in vertikaler Richtung steht.

Damit der Doppelgreifer 42 sowohl Zugriff zu den Werkstücken W in der Transporteinrichtung 44 hat, deren Achsen 58 im wesentlichen in vertikaler Richtung stehen, als auch Zugriff zu den Werkstücken W in der Spindelposition VI hat, deren Achsen parallel zu den Spindelachsen 26 und somit im wesentlichen horizontal verlaufen, muß der Doppelgreifer 42 um eine quer zur Spindelachse 26 verlaufende Längsachse 60 des Arms 40 der Werkstückgreifeinrichtung 34 drehbar sein.

Die Werkstücktransporteinrichtung 44 wird nun so gesteuert, daß jeweils eine Ausnehmung 56 so steht, daß die Achse 58 eines darin aufgenommenen oder aufzunehmenden Werkstücks W koaxial zu einem der Greifer $G_1$ oder $G_2$ des Doppelgreifers 42 in seiner der Werkstücktransporteinrichtung 44 zugeordneten Stellung steht, so daß das Werkstück W in die Ausnehmung 56 einsetzbar oder aus dieser herausnehmbar ist.

Zur Bearbeitung der in den Spindeln $S_1$ bis $S_6$ gehaltenen Werkstücke W in den Spindelpositionen I bis VI sind jeder dieser Spindelpositionen I bis VI Werkzeugschlitten 62 zugeordnet, welche Werkzeughalter 64 mit Werkzeugen 66 tragen. Die Werkzeugschlitten sind je nach der Spindelposition I bis VI, der sie zugeordnet sind, zusätzlich noch mit der der jeweiligen Spindelposition entsprechenden Zahl I bis VI und einem a oder b bezeichnet. Beispielsweise ist somit der Spindelposition I auch der Werkzeugschlitten 62, gekennzeichnet mit $I_a$, zugeordnet und der Spindelposition III sind zwei Werkzeugschlitten 62, gekennzeichnet noch zusätzlich mit $III_a$ und $III_b$, zugeordnet. Diese Werkzeugschlitten sind in der Regel in mindestens einer durch zwei aufeinander senkrecht stehende Richtungen aufgespannten Ebene bewegbar. Erwähnenswert ist auch noch, daß der Spindelposition VI, zu der die Werkstückgreifeinrichtung 34 Zugriff hat, auch noch ein Werkzeugschlitten 62, zusätzlich gekennzeichnet mit $VI_a$, zugeordnet ist. Somit kann in jeder der Spindelpositionen I bis VI eine Bearbeitung der in den Spindeln $S_1$ bis $S_6$ gespannten Werkstücke W mittels der von den jeweiligen Werkzeugschlitten 62 getragenen Werkzeuge 66 erfolgen.

Zusätzlich sind, wie insbesondere aus Fig. 1 zu ersehen ist, noch jeder der Spindelpositionen I bis V weitere Werkzeughalteeinrichtungen 68 zugeordnet, welche jeweils parallel zu der jeweiligen Spindelachse 26 in Richtung auf die in den jeweiligen Spindeln $S_1$ bis $S_5$ gespannt Werkzeuge verschiebbar sind. Diese Werkzeughalteeinrichtungen 68 tragen ebenfalls Werkzeuge 70. Bevorvugterweise werden die Werkzeughalteeinrichtungen 68 mit ihren Werkzeugen 70 zum Anbringen von Bohrungen oder Einstechen von Ringnuten und ähnlichem verwendet, während die Werkzeuge 66 hauptsächlich zur Bearbeitung von Seitenflächen der Werkstücke W dienen. Im einfachsten Fall liegt die Werkzeughalteeinrichtung 68 koaxial zu der jeweiligen Spindelachse 26 und trägt als Werkzeug 70 einen Bohrer.

Wie im folgenden noch detailliert erläutert werden wird, ist es besonders vorteilhaft, wenn die Werkzeuge 66 und auch die Werkzeuge 70 zumindest teilweise Kombinationswerkzeuge mit zwei Schneiden sind, welche unabhängig voneinander zum Einsatz kommen können. So kann beispielsweise das Werkzeug 70 eine Scheidplatte zum Aufbohren von Bohrungen aufweisen und gegenüberliegend eine Schneidplatte zum Gewindeschneiden. Selbstverständlich muß in diesem Fall die Werkzughalteeinrichtung 68 nicht nur parallel zu der ihr zugeordneten Spindelachse, sondern auch senkrecht dazu bewegbar sein, so daß jeweils nur eine der Schneidplatten zum Einsatz kommt. Dasselbe gilt auch für die Werkzeugschlitten 62, welche im Falle von Kombinationswerkzeugen nicht nur ausschließlich in radialer Richtung 72 zur jeweiligen Spindelachse 26 zustellbar sein dürfen, sondern zusätzlich noch in midestens einer Richtung senkrecht zu dieser radialen Richtung 72 bewegbar sein müssen. Diese Richtung verläuft beispielsweise parallel zu der jeweiligen Spindelachse 26. Es ist jedoch aber auch möglich, daß diese zusätzliche Richtung parallel zu der jeweiligen Spindelachse 26. Es ist jedoch aber auch möglich, daß diese zusätzliche Richtung parallel zu der Frontseite 36 des Gehäuseteils 14 liegt.

Bei dem ersten Ausführungsbeispiel der erfindungsgemäßen Vorrichtung ist der Spindelposition VI keine Werkzeughalteeinrichtung 68 zugeordnet, sondern an deren Stelle ist eine als Einstoßer 74 ausgebildete Werkstückhalteeinrichtung vorgesehen, welche koaxial zu der Spindelachse 26 der in dieser Spindelposition VI stehenden Spindel angeordnet und auch in dieser Richtung verschiebbar ist. Auf ihrem der jeweiligen Spindel zugeordneten Ende trägt der Einstoßer 74 ein Spannmittel 76, welches beispielsweise eine Zange oder ein Spannfutter sein kann. Der Einstoßer 74 ist in Richtung der in der Spindelposition VI stehenden Spindel so weit beweglich, daß sie das in dieser Spindel gespannte Werkstück W auf der noch freien Seite $W_1$ oder $W_2$ greifen kann.

Bei einem zweiten Ausführungsbeispiel des erfindungsgemäßen Mehrspindelautomaten 10 ist spiegelbildlich zu einer durch die Drehachse 24 der Spindeltrommel 20 hindurch verlaufende vertikalen Spiegelebene 25 eine zweite Werkstückgreifeinrichtung 34' vorgesehen, welche mit der Werkstückgreifeinrichtung 34 identisch ist. Daher sind alle Teile der Werkstückgreifeinrichtung 34' mit denselben Bezugszeichen wie die der Werkstückgreifeinrichtung 34 versehen und zusätzlich durch einen ' gekennzeichnet. Bezüglich deren Beschreibung wird auf die Beschreibung zu der Werkstückgreifeinrichtung 34 verwiesen.

Desgleichen ist der Werkstückgreifeinrichtung 34' noch eine Werkstücktransporteinrichtung 44' zugeordnet, die dieselben Teile wie die Werkstücktransporteinrichtung 44 aufweist, so daß alle Bezugszeichen für identische Teile gleich sind, jedoch bei der Werkstücktransporteinrichtung 44' mit einem zusätzlichen ' gekennzeichnet sind.

Außerdem ist der Spindelposition III auch noch eine als Einstoßer 74' ausgebildete Werkstückhalteeinrichtung zugeordnet, welche dieselben Operationen wie der Einstoßer 74 durchführen kann.

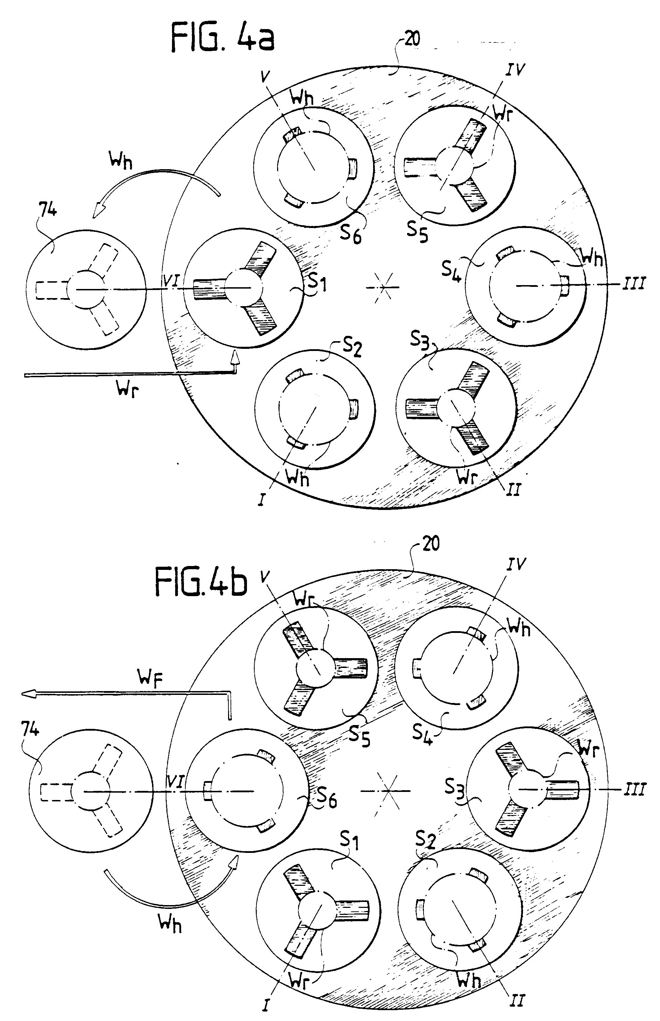

Die Funktion des ersten Ausführungsbeispiels das erfindungsgemäßen Mehrspindelautomaten wird am Beispiel von Futterteile darstellenden Werkstücken W anhand der Fig. 4 bis 7 erläutert, wobei davon ausgegangen wird, daß die Spannfutter 30 der Spindeln $S_1$ bis $S_6$ dazu geeignet sind, die Futterteile darstellenden Werkstücke W sowohl auf ihrer ersten Seite $W_1$ als auch auf ihrer zweiten Seite $W_2$ zu spannen. Insbesondere sollen die Spindeln $S_1$, $S_3$ und $S_5$ dazu vorgesehen sein, die Werkstücke W auf ihren ersten Seiten $W_1$ zu span-nen und die Spindeln $S_2$, $S_4$ und $S_6$ dazu, die Werkstücke W auf ihren zweiten Seiten $W_2$ zu spannen.

Eine schematische Darstellung der Durchführung des erfindungsgemäßen Verfahrens auf dem beschriebenen ersten Ausführungsbeispiel des Mehrspindelautomaten ist in den Fig. 4a und 4b enthalten. In diesen Figuren ist das Werkstück W selbst nicht dargestellt, sondern lediglich strichpunktiert mit seinem Spanndurchmesser angegeben. Fig. 4a und 4b unterscheiden sich dadurch, daß die Spindeltrommel 20 in Fig. 4b um einen Schritt gegenüber Fig. 4a weitergeschaltet ist, so daß in Fig. 4b die Spindel $S_6$ in der Spindelposition VI, während in Fig. 4a die Spindel $S_1$ in der Spindelposition VI steht.

Wenn, wie in Fig. 4a dargestellt, die zum Spannen der Futterteile W auf ihren ersten Seiten $W_1$ vorgesehene Spindel $S_1$ in der Spindelposition VI ankommt, werden folgende Verfahrensschritte durchgeführt:

Zunächst wird das in der Spindel $S_1$ auf seiner ersten Seite $W_1$ gespannte Futterteil W, das bereits einen Bearbeitungsumlauf durch die Spindelpositionen I bis VI hinter sich hat und somit ein Halbfertigteil $W_h$ ist, durch den zeichnerisch nicht dargestellten Greifer $G_2$ entnommen und dem aus Gründen der Übersichtlichkeit in Fig. 4 nach links versetzt gezeichneten Einstoßer 74 zugeführt, welcher dieses Halbfertigteil $W_h$ ebenfalls auf seiner ersten Seite $W_1$ greift. In die nunmehr "leere" Spindel $S_1$ wird anschließend ein von der Werkstücktransporteinrichtung 44 zugeführtes rohes Werkstück oder Rohteil $W_r$ durch den Greifer $G_1$ eingesetzt und in dieser Spin-del $S_1$ gespannt.

Als nächstes erfolgt nun ein Umschalten der Spindeltrommel 20 um einen Schritt, wie in Fig. 4b dargestellt.

Das in der Spindel $S_1$ gespannte Rohteil $W_r$ steht in der Spindelposition I und wird dort entsprechend einem vorgegebenen Programm bearbeitet.

In der Spindelposition VI ist nun die Spindel $S_6$ angekommen, welche ein auf der zweiten Seite $W_2$ gespanntes Werkstück W trägt. Dieses auf der Seite $W_2$ gespannte Werkstück W hat bereits das zweite Mal die Spindelpositionen I bis VI durchlaufen, ein erstes Mal zur Bearbeitung der zweiten Seite $W_2$ bis zum halbfertigteil $W_h$ und ein zweites Mal zur Bearbeitung der ersten Seite $W_1$ bis zu einem Fertigteil $W_f$. Dieses Fertigteil $W_f$ wird vom Greifer $G_1$ aus der Spindel $S_1$ entnommen und der Werkstücktransporteinrichtung 44 zugeführt. In die nun "leere" Spindel $S_6$ wird anschließend vom Einstoßer 74 das auf seiner ersten Seite $W_1$ gespannte Halbfertigteil $W_h$ übergeben, so daß dieses von der Spindel $S_6$ auf seiner zweiten Seite $W_2$ gespannt werden kann. Danach wird die Spindeltrommel 20 wieder um einen Schritt weitergeschaltet, so daß nunmehr die Spindel $S_5$ in der Spindelposition VI steht. Das in der Spindel $S_6$ gespannte Halbfertigteil $W_h$ durchläuft nun im folgenden sämtliche Spindelpositionen I bis V und kommt wiederum in der Spindelposition VI als Fertigteil $W_f$ an, so daß es dann entnommen werden kann.

Wenn die Spindel $S_5$ in der Spindelposition VI steht, liegt die gleiche Situation wie in Fig. 4a vor, d. h. as werden wiederum dieselben Verfahrensschritte durchgeführt, wie bereits in Fig. 4a beschrieben wurde, mit dem einzigen Unterschied, daß nicht mehr die Spindel $S_1$ in der Spindelposition VI steht, sondern die Spindel $S_5$.

Das erfindungsgemäße Verfahren, dargestellt in den Fig. 4a und 4b, kann zusammenfassend folgendermaßen dargestellt werden:

Zunächst wird in der Spindelposition VI in eine der Spindeln $S_1$, $S_3$ und $S_5$ ein Rohteil $W_r$ auf seiner ersten Seite $W_{r1}$ gespannt. In dieser Spannung durchläuft es die Spindelpositionen I bis V und kommt in der Spindelposition VI nach Bearbeiten seiner zweiten Seite $W_{r2}$ als Halbfertigteil $W_h$ an. Dort wird das Halbfertigteil $W_h$ entnommen, in den Einstoßer 74 umgesetzt, wartet dort den nächsten Schaltschritt ab und kann dann von dem Einstoßer 74 in eine der Spindeln $S_2$, $S_4$ und $S_6$ so eingesetzt werden, daß das Halbfertigteil $W_h$ auf seiner zweiten Seite $W_{h2}$ gespannt ist. Somit ist nun die Bearbeitung der ersten Seite $W_{h1}$ beim Durchlaufen der Spindelpositionen I bis V möglich, so daß diese Halbfertigteil $W_h$ dann in der Spindelposition VI als Fertigteil $W_f$ ankommt und entnommen werden kann.

Im folgenden werden nun die in Spindelposition VI durchzuführenden Schritte beim Zuführen eines Rohteils $W_r$, Umsetzen eines Halbfertigteils $W_h$ und Entnehmen eines Fertigteils $W_f$ im einzelnen anhand der Fig. 5 bis 7 erläutert.

Als erstes wird von der Werkstücktransporteinrichtung 44 ein Werkstück $W_r$ als Rohteil angeliefert und in der Ausnehmung 56 so orientiert, daß dieses auf seiner zweiten Seite $W_{r2}$ von dem Werkstückgreifer $G_1$ dann gefaßt werden kann, wenn sich die Werkstückgreifeinrichtung 34 in der der Werkstücktransporteinrichtung 44 zugeordneten Stellung (in Fig. 2 strichpunktiert dargestellt) befindet. Die Werkstückgreifeinrichtung 34 wird nun um die Schwenkachse 38 in die der Spindelposition VI zugeordnete Stellung verschwenkt, wobei gleichzeitig der Doppelgreifer 42 um die Längsachse 60 des Arms 40 so weit gedreht wird, daß der Doppelgreifer 42 koaxial zu der in der Spindelposition VI stehenden Spindel $S_1$ mit der Spindel $S_1$ zugewandtem Greifer $G_2$ steht, so daß der Greifer $G_1$ mit dem auf der Seite $W_{r2}$ gegriffenen Werkstück $W_r$ der Spindel $S_1$ abgewandt ist. In dieser Stellung steht der Doppelgreifer 42 zwischen der Spindel $S_1$ in der Spindelposition VI und dem dieser Spindelposition zugeordneten Einstoßer 74 (Fig. 5a).

Es wurde bereits erwähnt, daß die Spindeln $S_1$, $S_3$ und $S_5$ dazu vorgesehen sein sollen, die Werkstücke W auf ihrer ersten Seite $W_1$ zu spannen. Aus diesem Grund trägt die Spindel $S_1$, wie in Fig. 5a dargestellt, bereits ein auf der ersten Seite $W_1$ gespanntes halbfertig bearbeitetes Werkstück $W_h$, das einen Bearbeitungszyklus durchlaufen hat. Das heißt, das in der Spindel $S_1$ gespannte Werkstück $W_h$ wurde in der Spindelposition VI in die Spindel $S_1$ sechs Schaltschritte der Spindeltrommel 20 vorher eingesetzt und wurde beim Durchlaufen der Spindelpositionen I bis V mittels der Werkzeuge 66 und 70 zu einem Halbfertigteil bearbeitet, so daß es, wie in Fig. 5a dargestellt, eine Stufenbohrung 80 aufweist und auch bereits auf einer Umfangsfläche 82 vorbearbeitet ist.

Die Werkstückgreifeinrichtung 34 wird nun, wie durch den Pfeil 100 angegeben, in Richtung der Schwenkachse 38 auf die Spindel $S_1$ zubewegt, so daß der Greifer $G_2$ das in der Spindel $S_1$ gespannte Werkstück $W_h$ auf der zweiten Seite $W_{h2}$ greifen kann (Fig. 5b). Um das in der Spindel $S_1$ gespannte Werkstück $W_h$ durch den Greifer $G_2$ fassen zu können, wird das Spannfutter 30 der Spindel $S_1$ geöffnet. Damit kann die Werkstückgreifeinrichtung 34 wieder in Richtung der Schwenkachse 38 von der Spindel $S_1$ in Richtung des Pfeiles 102 wegbewegt werden, so daß der Doppelgreifer 42 wiederum zwischen der Spindel $S_1$ und dem Einstoßer 74 steht (Fig. 5c). Ein anschließendes Drehen des Doppelgreifers 42 um 180° entsprechend einem Pfeil 104 führt dazu, daß nunmehr der Greifer $G_1$ mit seinem Rohteil $W_r$ der Spindel $S_1$ zugewandt ist (Fig. 5d).

Ein Einsetzen des Rohteils $W_r$ in die Spindel $S_1$ erfolgt durch ein erneutes Bewegen der Werkstückgreifeinrichtung 34 parallel zur Schwenkachse 38 in Richtung des Pfeils 106 auf die Spindel $S_1$ zu, so daß das Werk-

stück $W_r$ mit seiner ersten Seite $W_{r1}$ in das Spannfutter 30 der Spindel $S_1$ eingesetzt wird und anschliessend gespannt werden kann (Fig. 5e). Nach einem Öffnen des Greifers $G_1$ wird die Werkstückgreifeinrichtung 34 wiederum in Richtung des Pfeils 108 von der Spindel $S_1$ weg in die zwischen dieser und dem Einstoßer 74 liegenden Stellung bewegt. Das Rohteil $W_r$ ist somit in der Spindel $S_1$ gespannt und kann im folgenden einen Bearbeitungszyklus durch sämtliche Spindelstationen I bis V durchlaufen (Fig. 5f).

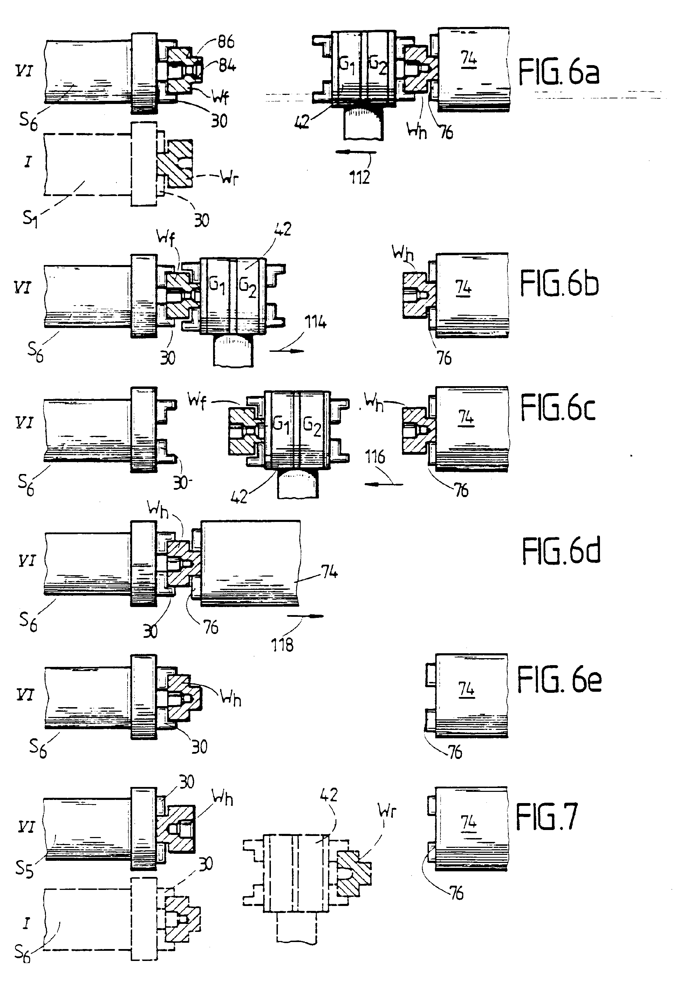

Aus diesem Grund wird die Spindeltrommel 20 um einen Schritt weitergeschaltet, so daß, wie in Fig. 6a dargestellt, nunmehr die Spindel $S_6$ in der Spindelposition VI steht. Die in Fig. 6a gestrichelt dargestellte Spindel $S_1$ mit dem Rohteil $W_r$ steht nun in der Spindelposition I und wird dort Beispielsweise durch das Werkzeug 66 bearbeitet.

Vor oder während des Weiterschaltens der Spindeltrommel 20 wird die Werkstückgreifeinrichtung 34 parallel zur Schwenkachse 28 in Richtung des Einstoßers 74 bewegt, so daß das im Greifer $G_2$ gehaltene Halbfertigteil $W_h$ von dem Spannmittel 76 des Einstoßers 74 gefaßt werden kann.

Wie bereits eingangs erläutert, sollen die Spindeln $S_2$, $S_4$ und $S_6$ dazu vorgesehen sein, die Werkstücke W auf ihren zweiten Seiten $W_2$ zu spannen. Die in Fig. 6a dargestellte Spindel $S_6$ trägt, wenn sie in der Spindelposition VI steht, ein ein Fertigteil darstellendes Werkstück $W_f$. Dies wurde sechs Schaltschritte vorher - wie im folgenden eingehend erläutert werden wird - als Halbfertigteil $W_h$ in der Spindelposition VI in die Spindel $S_6$ eingesetzt und hat einen Bearbeitungszyklus, umfassend die Spindelpositionen I bis V, durchlaufen, wobei das Werkstück $W_f$ beispielsweise mit einer weiteren Stufenbohrung 84 versehen und außerdem auf einer der ersten Seite $W_{f1}$ zugeordneten Umfangsfläche 86 bearbeitet wurde. Somit liegt das Werkstück $W_f$ numehr in der Spindelposition VI als Fertigteil vor.

Nach Öffnen des Greifers $G_2$ wird die Werkstückgreifeinrichtung 34 parallel zur Schwenkachse 38 in Richtung des Pfeils 112 auf die Spindel $S_6$ zu bewegt, so daß der Greifer $G_1$ das Fertigteil $W_f$ auf der ersten Seite $W_{f1}$ fassen kann (Fig. 6b).

Das Spannfutter 30 der Spindel $S_6$ wird geöffnet, so daß die Werkstückgreifeinrichtung 34 in Richtung des Pfeils 114 wiederum in die Stellung bewegt werden kann, in welcher der Doppelgreifer 42 zwischen der Spindel $S_6$ und dem Einstoßer 74 liegt (Fig. 6c). Zum Ablegen des Fertigteils $W_f$ wird die gesamte Werkstückgreifeinrichtung mit dem Doppelgreifer längs des Schwenkkreises 46 in die der Werkstücktransporteinrichtung 44 zugeordnete Stellung geschwenkt und gleichzeitig um die Längsachse 60 so um 90° gedreht, daß das Fertigteil $W_f$ in die Ausnehmung 56 des Transportbandes 54 abgelegt werden kann, aus welcher vorher das Werkstück $W_r$ als Rohteil entnommen wurde.

Da der Doppelgreifer 42 nicht mehr zwischen dem Einstoßer 74 und der Spindel $S_6$ steht, kann der Einstoßer 74 in Richtung des Pfeiles 116 aus seiner in Fig. 6c dargestellten Position in Richtung der Spindel $S_6$ bewegt werden und das Halbfertigteil $W_h$ der Spindel $S_6$ übergeben (Fig. 6d). Nach der Übergabe wird der Einstoßer 74 wieder in Richtung des Pfeils 118 von der Spindel $S_6$ weg in ihre ursprüngliche Stellung zurückgefahren (Fig. 6e). In der Spindel $S_6$ ist nunmehr das Halbfertigteil $W_h$ auf einer zweiten Seite $W_{h2}$ gespannt, das im folgenden durch Weiterschlaten der Spindeltromel einem Bearbeitungszyklus in den Spindelpositionen I bis V zugeführt werden kann.

Nach einem erneuten Weiterschalten der Spindeltrommel 20 um einen Schritt erscheint somit in der Spindelposition VI die Spindel $S_5$, welche ein Halbfertigteil $W_h$ trägt, das auf seiner ersten Seite $W_{h1}$ gespannt ist (Fig. 7). Es liegt somit dieselbe Ausgangssituation wie in Fig. 5a vor, wobei dieselben Schritte wie in den Fig. 5 und 6 durchzuführen sind. Selbstverständlich muß dazu die Werkstückgreifeinrichtung 34 vorher aus der Werkstücktransporteinrichtung 44 ein Rohteil $W_r$ entnehmen können, wozu diese nach dem Einsetzen des fertig bearbeiteten Werkstücks $W_f$ so weiterzubewegen ist, daß für den Greifer $G_1$ in einer darauffolgenden Ausnehmung 56 wieder ein Rohteil $W_r$ greifbar ist. Nachdem dei der in Spindelposition VI stehenden Spindel $S_5$ sämtliche Übergaben, wie vorstehend bei der Spindel $S_1$ in der Spindelposition VI beschrieben, durchgeführt worden sind, wird die Spindeltrommel 20 wieder um einen Schritt weitergeschaltet, so daß nunmehr in der Spindelposition VI die Spindel $S_4$ erscheint und dieselbe Situation wie in Fig. 6a vorliegt und folglich auch die in den Fig. 6a bis 6e dargestellten Übergaben durchzuführen sind.

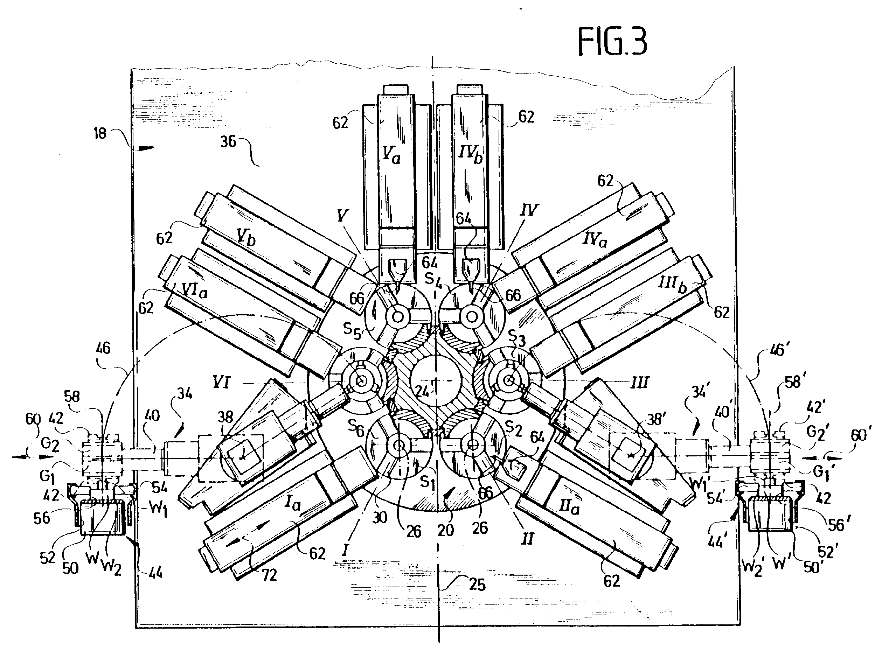

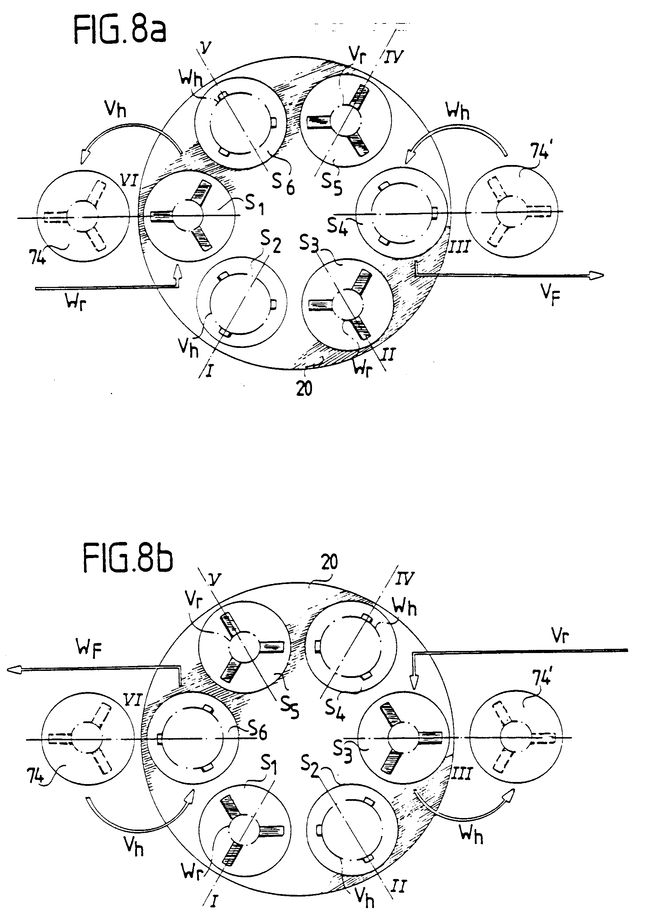

In den Fig. 8a und 8b ist die Durchführung des erfindungsgemäßen Verfahrens bei einem Mehrspindelautomaten gemäß dem zweiten Ausführungsbeispiel, dargestellt in Fig. 3, schematisch dargestellt.

Fig. 8a und 8b unterscheiden sich ebenfalls dadurch, daß die Spindeltrommel 20 in Fig. 8b um einen Schritt gegenüber der Fig. 8a weitergeschaltet ist und folglich in Fig. 8b die Spindel $S_6$ in der Spindelposition VI steht, während in Fig. 8a die Spindel $S_1$ in der Spindelposition VI steht.

Im Gegensatz zum ersten Ausführungsbeispiel, dargestellt in den Fig. 4a und 4b, werden bei dem zweiten Ausführungsbeispiel sowohl Werkstücke W, zugeführt als Rohteile $W_r$ und abgeführt als Fertigteile $W_f$, in der Spindelposition VI, als auch Werkstücke V, zugeführt als Rohteile $V_r$ und abgeführt als Fertigteile $V_f$, in der Spindelposition III, gleichzeitig bearbeitet.

Wenn, wie in Fig. 8a dargestellt, die Spindel $S_1$ in der Spindelposition VI angekommen ist, wird dort ein auf seiner ersten Seite $V_1$ gespanntes und daher bereits auf der zweiten Seite zu einem Halbfertigteil $V_h$ bearbeitetes Werkstück V entnommen und dem aus Gründen der Übersichtlichkeit nach links versetzt gezeichneten Einstoßer 74 zugeführt, von welchem es ebenfalls auf seiner ersten Seite $V_1$ gehalten wird. Dieses in der Spindelpositon VI ankommende Halbfertigteil $V_h$ wurde ursprünglich in der Spindelposition III (siehe Fig. 8b) als Rohteil $V_r$ eingesetzt, auf seiner ersten Seite gespannt und daher in den Spindelpositionen IV und V auf seiner zweiten Seite bearbeitet.

In diese nun "leere" Spindel $S_1$ wird nun von außen ein Rohteil $W_r$ des Verkstücks W eingesetzt und ebenfalls auf seiner ersten Seite $W_1$ gespannt. Dieses Rohteil $W_r$ wird nun beim Durchlaufen der Spindelpositionen I und II auf seiner zweiten Seite bearbeitet und kommt in Spindelposition III als Halbfertigteil $W_h$ an (siehe Fig. 8b). Dort wird dieses Halbfertigteil $W_h$ aus der Spindel entnommen und in den Einstoßer 74' eingesetzt, wobei gleichzeitig wiederum der jetzt leeren Spindel ein Rohteil $V_r$ zugeführt wird.

In Fig. 8b ist die Spindeltrommel 20 einen Schritt weitergeschaltet, d. h. die Spindel $S_6$ steht nunmehr in der Spindelposition VI. In dieser kommt ein Fertigteil $W_f$, gespannt auf seiner zweiten Seite $W_2$, an und wird dort abgeführt. Dieses Fertigteil $W_f$ wurde als Halbfertigteil (siehe Fig. 8a) vorher in der Spindelposition III aus dem Einstoßer 74' entnommen und in die Spindel eingesetzt, in welcher es auf seiner zweiten Seite $W_2$ gespannt wurde. Damit konnte beim Durchlaufen der Spindelpositionen IV und V das Halbfertigteil $W_h$ auf seiner zweiten Seite $W_{h2}$ bearbeitet werden, bis es als Fertigteil $W_f$ in der Spindelposition VI angekommen ist.

In die leere Spindel $S_6$ wird nun das beim Vorherigen Schaltschritt dem Einstoßer 74 zugeführte Halbfertigteil $V_h$ eingesetzt und auf seiner zweiten Seite $V_{h2}$ gespannt. Dieses kann nun die Spindelpositionen I und II durchlaufen, in welchen es auf seiner ersten Seite $W_{h1}$ bearbeitet wird, bis es als Fertigteil $V_f$ in der Spindelposition III ankommt (siehe Fig. 8a). In dieser wird das Fertigteil $V_f$ entnommen und abgeführt, wobei gleichzeitig, wie bereits dargelegt, in die jetzt "leere" Spindel ein Halbfertigteil $W_h$ eingesetzt und auf seiner zweiten Seite $W_{h2}$ gespannt wird.

Das erfindungsgemäße Verfahren verläuft also beim zweiten Ausführungsbeispiel des Mehrspindelautomaten so, daß in Spindelposition VI ein Rohteil $W_r$ von einer der Spindeln $S_1$, $S_3$ und $S_5$ auf seiner ersten Seite gespannt wird, mit dieser Spindel die Spindelpositionen I und II durchläuft, in der Spindelposition III als Halbfertigteil $W_h$ ankommt, dort entnommen und in den Einstoßer 74' als Halbfertigteil $W_h$ eingesetzt wird. In diesem Einstoßer 74' wartet das Halbfertigteil $W_h$ einen Schaltschritt der Spindeltrommel 20 ab, so daß dann eine der Spindeln $S_2$, $S_4$, $S_6$ in der Spindelposition III steht. Ist dies der Fall, so wird das Halbfertigteil $W_h$ aus dem Einstoßer 74' entnommen und in eine der Spindeln $S_2$, $S_4$, $S_6$ eingesetzt, welche das Halbfertigteil $W_h$ auf seiner zweiten Seite $W_{h2}$ spannen. In dieser Spannung durchläuft das Halbfertigteil $W_h$ die Spindelpositionen IV und V, in welcher eine Bearbeitung dieses Halbfertigteils $W_h$ auf der ersten Seite erfolgt. Ist das Halbfertigteil $W_h$ dann in der Spindelposition VI als Fertigteil $W_f$ angekommen, so kann es dort entnommen und abgeführt werden. Mit den Werkstücken V wird ähnlich, allerdings bedingt in Spindelposition III verfahren. Ein Rohteil $V_r$ wird in der Spindelposition III in eine der Spindeln $S_1$, $S_3$ und $S_5$ eingesetzt, dort auf seiner ersten Seite $V_{r1}$ gespannt. In dieser Spannung durchläuft es die Spindelpositionen IV und V, wird dort auf seiner zweiten Seite $V_{r2}$ bearbeitet und kommt als Halbfertigteil $V_h$ in Spindelposition VI an (siehe Fig. 8a). Dort wird das Halbfertigteil $V_h$ entnommen und in den Einstoßer 74 eingesetzt. Nach einem weiteren Schaltschritt wird das Halbfertigteil $V_h$ wieder aus dem Einstoßer 74 entnommen und in eine der Spindeln $S_2$, $S_4$, $S_6$ eingesetzt sowie in diesen auf seiner zweiten Seite $V_{h2}$ gespannt. Anschließend kann die Bearbeitung der ersten Seite $V_{h1}$ in den Spindelpositionen I und II erfolgen, bis das nunmehr fertig bearbeitete Halbfertigteil $V_h$ in der Spindelposition III wieder als Fertigteil $V_f$ ankommt und dort abgeführt werden kann.

Die in den Spindelpositionen VI und III durchgeführten einzelnen Umsetzungsschritte entsprechen denen der Fig. 5 bis 7, mit dem einzigen Unterschied, daß das in diesen Spindelpositionen VI und III umgesetzte Halbfertigteil $W_h$, $V_h$ nicht in diesen Spindelpositionen zugeführt wird, sondern in der jeweils anderen Spindelposition. Im übrigen wird daher auf die entsprechenden Stellen der Beschreibung zu den Fig. 5 bis 7 verwiesen.

Wie die vorhergehende Beschreibung gezeigt hat, können die Werkstücke W und V grundsätzlich unterschiedliche Werkstücke sein, sie müssen jedoch so weit Ähnlichkeiten besitzen, daß die Spindeln $S_1$, $S_3$ und $S_5$ sowie die Spindeln $S_2$, $S_4$ und $S_6$, ohne umgerüstet zu werden, ein Spannen der Werkstücke W und V auf ihrer ersten bzw. ihrer zweiten Seite erlauben. Andererseits liegt es ebenfalls im Rahmen der erfindungsgemäßen Lösung, mit identischen Werkstücken W und V zu arbeiten, so daß, weil für diese Werkstücke W und V jeweils insgesamt vier Bearbeitungsstationen ausreichen, die Leistung des erfindungsgemäßen Mehrspindelautomaten verdoppelt werden kann.

Beim ersten Auführungsbeispiel des erfindungsgemäßen Mehrspindelautomaten kann auch die Bearbeitung von Stangenmaterial vorgesehen sein. In einem solchen Fall werden also nicht die Werkstücke W bereits als unbearbeitete Futterteile zugeführt, sondern in Form von Stangenmaterial. Aus diesem Grund sind die Spindeln $S_1$, $S_3$ und $S_5$ nicht mit jeweils einem Spannfutter 30 versehen, sondern mit jeweils einer Spannzange 32, wobei Stangenmaterial 120 koaxial zu den Spannzangen 32 der Spindeln $S_1$, $S_3$ und $S_5$ hindurch zugeführt

wird. Des weiteren ist die Werkstückhalteeinrichtung kein Einstoßer, sondern eine Synchronspindel 74, die mit der gleichen Geschwindigkeit wie die in der Spindelposition VI stehende Spindel angetrieben werden kann und außerdem genau wie der Einstoßer in Richtung der in der Spindelposition VI stehenden Spindel bewegbar ist.

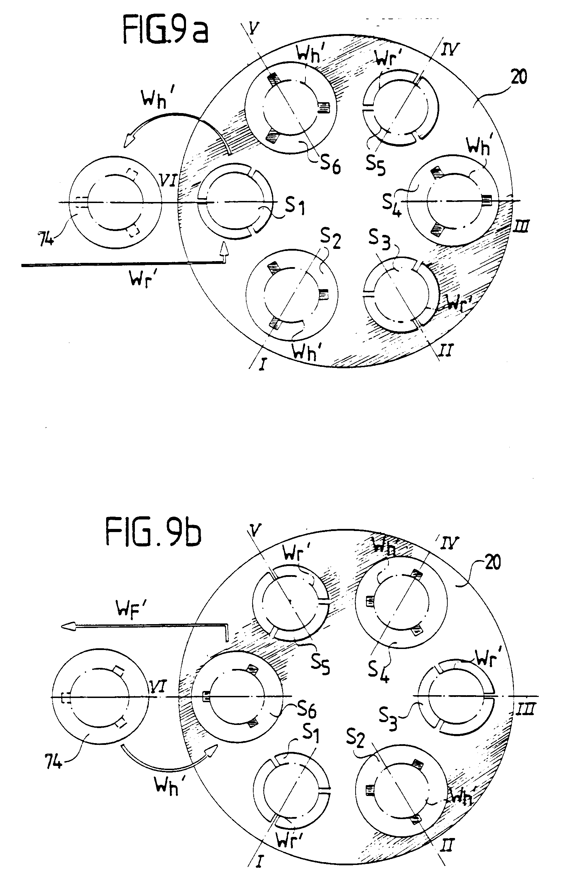

Eine schematische Darstellung der Durchführung des erfindungsgemäßen Verfahrens zum Bearbeiten von Stangenmaterial auf einem Mehrspindelautomaten gemäß dem ersten, in den Fig. 1 und 2 dargestellten Ausführungsbeispiel, ist aus den Fig. 9a und 9b zu entnehmen. Hierbei ist das Werkstück $W'$ selbst nicht dargestellt, sondern jeweils nur strichpunktiert sein Spanndurchmesser angegeben.

Wie in Fig. 9a zu sehen ist, kommt in der Spindelposition VI ein Halbfertigteil $W_h$, in der Spindel $S_1$ an. Dieses Halbfertigteil ist jedoch noch mit dem koaxial durch die Spindel $S_1$ bzw. deren Spannzange 32 hindurchgeschobenen Stangenmaterial verbunden. Aus diesem Grund kann in der Spindelposition VI nicht ein einfaches Umsetzen des Halbfertigteils $W_h$, erfolgen, sondern die koaxial zur Spannzange angeordnete Synchronspindel wird auf das Halbfertigteil zugefahren, greift dieses und es wird gemeinsam mit der Synchronspindel 74 das Halbfertigteil $W_h$, von dem Stangenmaterial 120 abgestochen. Damit ist dann das Halbfertigteil $W_h$, zu der Synchronspindel 74 übergeben, so daß durch Nachschießen des Stangenmaterials ein neues Rohteil $W_r$, zur Bearbeitung in den Spindelpositionen I bis V zur Verfügung gestellt werden kann.

Nach dem Weiterschalten der Spindeltrommel 20 um einen Schritt kommt die Spindel $S_6$ in der Spindelposition VI an. Diese Situation ist dargestellt in Fig. 9b. In dieser Stellung hält die Spindel $S_6$ ein Fertigteil $W_f$, bereit, das abgeführt wird. In die "leere" Spindel $S_6$ wird nun das in der Synchronspindel 74 zwischengelagerte Halbfertigteil $W_h$, so eingesetzt, daß es in der Spindel $S_6$ mit seiner zweiten Seite $W_{h2}$, gespannt werden kann. Danach kann die Spindel $S_6$ die Spindelstationen I bis V durchlaufen und das Halbfertigteil $W_h$, kommt dann in der Spindelposition VI wiederum als Fertigteil $W_f$, an, so daß es entnommen werden kann.

Zusammenfassend wird also in die Spindeln $S_1$, $S_3$ und $S_5$ in der Spindelposition VI durch Vorschieben des Stangenmaterials 120 ein Rohteil $W_r$, zur Verfügung gestellt, welches nach Durchlaufen der Spindelpositionen I bis V wieder in der Spindelposition VI ankommt, aus dieser als Halbfertigteil $W_h$, durch Abstechen mittels der Synchronspindel 74 entnommen wird, in der Synchronspindel 74 zwischengelagert wird und anschließend als Halbfertigteil $W_h$, wiederum in eine der Spindeln $S_2$, $S_4$ und $S_6$ eingesetzt wird und gespannt mit seiner zweiten Seite $W_{h'2}$ die Spindelpositionen I bis V durchläuft, so daß es als Fertigteil $W_f$, in der Spindelposition VI wieder ankommt.

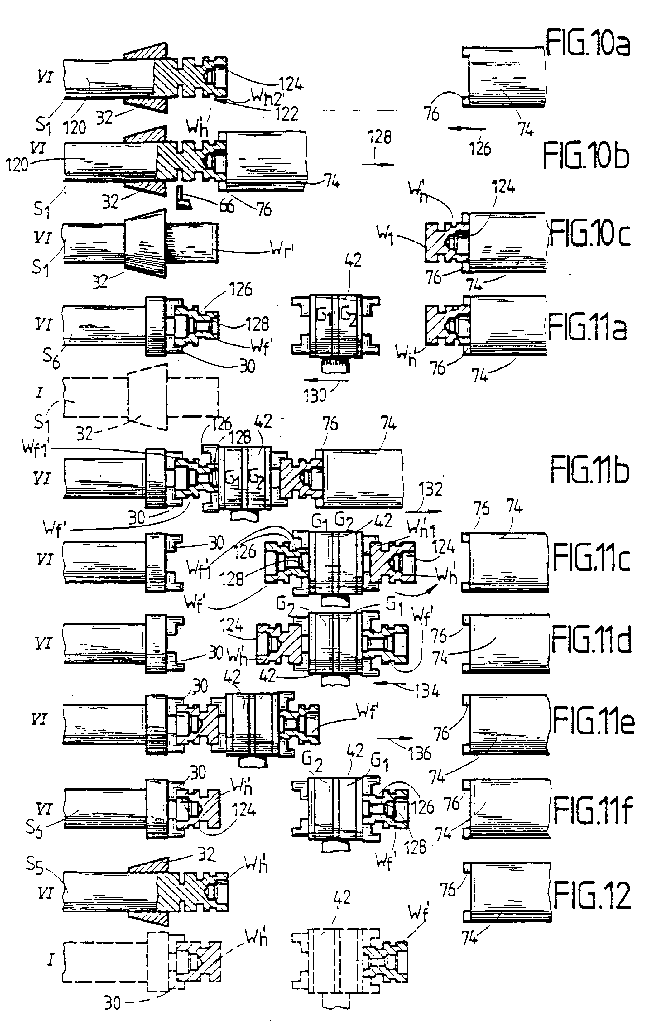

Die einzelnen in Spindelposition VI durchzuführenden Verfahrensschritte werden nun in den folgenden Fig. 10 bis 12 erläutert.

Sobald in der Spindelposition VI die Spindel $S_1$ erscheint, trägt diese ein Werkstück $W_h$, welches aufgrund des vorhergehenden Bearbeitungszyklus in den Spindelpositionen I bis V, beispielsweise mit Nuten 122 sowie Bohrungen 124, versehen wurde und ein Halbfertigteil darstellt, das allerdings noch mit dem Stangenmaterial 120 verbunden und aufgrund der das Stangenmaterial 120 spannenden Spannzangen 32 ebenfalls noch in der Spindel $S_1$ gespannt ist (Fig. 10a). Zum Abstechen des halbfertigen Werkstücks $W'_h$ wird die in ihrer Ausgangsstellung im Abstand von der Spindel $S_1$ angeordnete Synchronspindel 74 in Richtung eines Pfeils 126 auf die Spindel $S_1$ zu bewegt, so daß deren Spannfutter 76 das Werkstück $W'_h$ auf der zweiten Seite $W'_{h2}$ spannen kann (Fig. 10b). Nachdem sowohl die Spindel $S_1$ als auch die Synchronspindel 74 in Rotation versetzt wurden, kann das Abstechen des Werkstücks $W'_h$ mittels des der Spindelposition VI zugeordneten Werkzeugschlittens VIa und des von diesem getragenen Werkzeugs 66 erfolgen, wobei nach dem Abstechen das Werkstück $W'_h$ in dem Spannfutter 76 der Synchronspindel 74 gespannt bleibt. Anschließend wird die Synchronspindel 74 in Richtung eines Pfeils 128 in ihre Ausgangsstellung weg von der Spindel $S_1$ zurückbewegt und das Stangenmaterial 120 in der Spindel $S_1$ kann bei zeitweiligem Lösen der Spannzange 32 in Richtung der Synchronspindel 74 so weit vorgeschoben werden, daß dieser ein Rohteil darstellendes Werkstück $W'_r$ in der Spindel $S_1$ gespannt ist und für den nachfolgenden Bearbeitungszyklus in den Spindelpositionen I bis V zur Verfügung steht, so daß wiederum nach sechs Schaltschritten der Spindeltrommel 20 in der Spindelposition VI ein halbfertig bearbeitetes Werkstück $W'_h$ mit Nuten 122 und Bohrungen 124 ankommt.

Da ein Stangenvorschubweg beim Vorschieben des Stangenmaterials 120 genau festgelegt und gemessen werden muß, ist es vorteilhaft, wenn hierzu der Greifer G1 in dem Stangenvorschubweg in entsprechendem Abstand vor die Spindel S1 gefahren wird und somit als Begrenzungsanschlag beim Stangenvorschub dient.

Nach einem Weiterschalten der Spindeltrommel 20 steht die Spindel $S_1$ in der Spindelposition I und die Spindel $S_6$ nunmehr in der Spindelposition VI (Fig. 11a), wobei außerdem die Synchronspindel 74 noch das ein Halbfertigteil darstellende Werkstück $W'_h$ in ihrem Spannfutter 76 gespannt hält. Die in der Spindelposition I stehende Spindel $S_1$ mit dem ein Rohteil darstellenden Werkstück ist in Fig. 11a nunmehr gestrichelt dargestellt.

In dieser Stellung wird die Werkstückgreifeinrichtung 34 in ihre der Spindelposition VI zugeordnete Position

<p style="text-align:center">17</p>

verschwenkt, so daß der Doppelgreifer 42 koaxial zur Spindelachse 26 und somit auch zur Synchronspindel 74 steht.

Die Spindel $S_6$ trägt ein auf der zweiten Seite $W_2'$ gespanntes Werkstück $W_f'$ welches in dem vorhergehenden Bearbeitungszyklus in den Spindelpositionen I bis V mit zusätzlichen Nuten 126 sowie Bohrungen 128 versehen wurde und nunmehr das Fertigteil darstellt. Die Übergabe des ein Fertigteil darstellenden und noch in der Spindel $S_6$ gespannten Werkstücks $W_f'$ an den Werkstückgreifer $G_1$ des Doppelgreifers 42 sowie des ein Halbfertigteil darstellenden, noch in der Synchronspindel 74 gespannten Werkstücks $W_h'$ an den Greifer $G_2$ erfolgt unter gleichzeitiger Verschiebung der Werkstückgreifeinrichtung 34 in Richtung ihrer Schwenkachse 38 auf die Spindel $S_6$ zu und einer Verschiebung der Synchronspindel 74 in derselben Richtung, so daß der Greifer $G_1$ das Fertigteil $W_f'$ auf der ersten Seite $W_{f1}'$ und der Greifer $G_2$ das halbfertigteil $W_h'$ ebenfalls auf der ersten Seite $W_{h1}'$ zu fassen bekommt (Fig. 11b).

Nach dem Schließen der Greifer $G_1$ und $G_2$ und dem Öffnen des Spannfutters 30 der Spindel $S_6$ sowie des Spannfutters 76 der Synchronspindel 74 wird die Synchronspindel 74 sowie die Werkstückgreifeinrichtung 34 in Richtung eines Pfeils 132 von der Spindel $S_6$ wegbewegt, so daß - wie in Fig. 7c dargestellt - die Synchronspindel 74 in ihrer Ausgangsstellung und der Doppelgreifer 42 zwischen der Spindel $S_6$ sowie der Synchronspindel 74 steht.

Nach einem Drehen des Doppelgreifers 42 um die Längsachse 60 des Arms 40 um 180° ist der Greifer $G_2$ mit dem Halbfertigteil $W_h'$ der Spindel $S_6$ zugewandt (Fig. 11d), so daß das Halbfertigteil durch Verschieben des Doppelgreifers 42 in Richtung des Pfeils 134 in das freie Spannfutter 30 der Spindel $S_6$ eingesetzt und dort gespannt werden kann (Fig. 11e). Nach dem Öffnen des Greifers $G_2$ wird die Werkstückgreifeinrichtung 34 wieder so weit von der Spindel $S_6$ in Richtung eines Pfeils 136 wegbewegt, daß der Doppelgreifer 42 zwischen der Spindel $S_6$ und der Synchronspindel 74 steht (Fig. 11f).

Somit ist in der Spindel $S_6$ das Halbfertigteil $W_h'$ gespannt, das nunmehr einem weiteren Bearbeitungyzyklus in den Spindelpositionen I bis V unterzogen werden kann und nach Durchlaufen dieses Bearbeitungszyklus in der Spindelposition VI als Fertigteil $W_f'$ ankommt.

In dem Greifer $G_1$ ist nunmehr lediglich das Fertigteil $W_f'$ gehalten, welches durch Schwenken der Werkstückgreifeinrichtung 34 um die Schwenkachse 38 in die der Werkstücktransporteinrichtung 44 zugeordnete Position in einer der Ausnehmungen 56 der Werkstücktransporteinrichtung 44 abgelegt werden kann. In diesem Fall des zweiten Ausführungsbeispiels dient also die Werkstücktransporteinrichtung 44 lediglich zum Abtransport von Fertigteilen und nicht zusätzlich zum Zuführen von Rohteilen.

Als nächstes wird die Spindeltrommel 20 um einen Schritt weitergeschaltet, so daß als nächstes die Spindel $S_5$ in der Spindelposition VI erscheint (Fig. 12), die wie die Spindel $S_1$ ein aufgrund eines vorhergehenden Bearbeitungszyklus hergestelltes Halbfertigteil trägt. Mit diesem wird in der gleichen Weise wie mit dem Halbfertigteil in der Spindel $S_1$ verfahren, d.h. es erfolgt unter Zuhilfenahme der Synchronspindel 74 ein Abstechen, so daß das Halbfertigteil $W_h'$ anschliessend auf seiner zweiten Seite $W_{h2}'$ in dem Spannfutter 76 der Synchronspindel 74 gespannt ist. Die nunmehr in der Spindelposition I stehende Spindel $S_6$ ist in Fig. 12 noch ergänzend strichpunktiert dargestellt. Desgleichen der Doppelgreifer 42, der in dieser Stellung noch das Fertigteil der Werkstücktransporteinrichtung 44 übergibt.

Anhand der vorstehend beschriebenen ersten und zweiten Ausführungsbeispiele des erfindungsgemäßen Mehrspindelautomaten wurde die Zuführung roher Werkstücke $W_r$, die Abführung fertig bearbeiteter Werkstücke $W_f$ sowie das Umsetzen halbfertig bearbeiteter Werkstücke $W_h$ von den auch als erste Spindeln zu bezeichnenden Spindeln $S_1$, $S_3$, $S_5$ auf die auch als zweite Spindeln zu bezeichnenden Spindeln $S_2$, $S_4$, $S_6$ unter gleichzeitigem Wechsel der Spannung des Werkstücks von der ersten Seite $W_1$ auf die zweite Seite $W_2$ exemplarisch sowohl für Futterteile als auch für Stangenteile erläutert. Es wurden jedoch keine Ausführungen zu den Bearbeitungsvorgängen in den Spindelpositionen I bis V gemacht.

Da sämtliche Spindelpositionen I bis V sowohl von den in den ersten Spindeln gehaltenen Rohteilen bei einem Bearbeitungszyklus vom Rohteil zum Halbfertigteil als auch von den zweiten Spindeln gehaltenen Halbfertigteile bei dem Bearbeitungszyklus vom Halbfertigteil zum Fertigteil druchlaufen werden, sind erfindungsgemäß die Spindelpositionen I bis V derart mit Werkzeugen 66 und/oder 70 auszustatten, daß möglichst in jeder der Spindelpositionen I bis V eine Bearbeitung der Werkstücke erfolgen kann. Dies ist bei konsequenter Ausnutzung der NC-Steuerung der Mehrspindelautomaten in einfacher Weise möglich, da sowohl die Werkzeugscchlitten 62 wie auch die Werkzeughalteeinrichtungen 68, je nach dem, ob eine erste Spindel oder eine zweite Spindel in der jeweiligen Spindelposition steht, entsprechend dem zu bearbeitenden Teil gesteuert werden kann, so daß z.B. universell einsetzbare Werkzeuge bei der Bearbeitung vom Rohteil zum Halbfertigteil zu anderen Zerspanungsaufgaben eingesetzt werden können als bei der Bearbeitung vom Halbfertigteil zum Fertigteil.

Ferner können auch - wie bereits erwähnt - Kombinationswerkzeuge mit zwei Schneiden eingesetzt werden, so daß die eine Scheide bei dem Bearbeitungszyklus vom Rohteil zum Halbfertigteil und die andere Schneide bei dem Bearbeitungszyklus vom Halbfertigteil zum Fertigteil Verwendung findet.

Selbstverständlich können auch in jeder Spindelposition mehrere Werkzeuge gleichzeitig zum Einsatz kommen. Beispielsweise können in den Spindelpositionen III, IV und V gemäß Fig. 2 sowohl die Werkzeuge 66 der Werkzeugschlitten IIIa, IVa und Va als auch die der Werkzeugschlitten IIIb, IVb und Vb gleichzeitig im Einsatz sein. Außerdem ist es noch denkbar, daß zusätzlich noch die Werkzeuge 70 der diesen Spindelpositionen zugeordneten Werkzeughalteeinrichtungen 68 ebenfalls noch eingesetzt werden.

Diese vielfältige Einsetzbarkeit der Werkzeuge in jeder der Spindelpositionen I bis V erleichtert vor allem bei komplizierten Zerspanungsaufgaben die Bearbeitung der Werkstücke W und führt daher zu äußerst kurzen Stückzeiten.

Abschließend soll noch erwähnt werden, daß auch der der Spindelposition VI zugeordnete Werkzeugschlitten VIa außer zum Abstechen von Stangenteilen auch bei Futterteilen oder bei Stangenteilen noch zu zusätzlichen Bearbeitungsvorgängen, beispielsweise einem letzten Überdrehen der Teile eingesetzt werden kann, da zwischen den jeweiligen Schaltschritten in der Regel ausreichend Zeit zur Verfügung steht, denn die Zeit zwischen den einzelnen Schaltschritten ist limitiert durch die am längsten dauernde Bearbeitungszeit in einer der Spindelpositionen I bis V, so daß die für die einzelnen Übergabeschritte der Teile zwischen den Spindeln in der Spindelposition VI und dem Greifer sowie der Synchronspindel und dem Einstoßer nicht ins Gewicht fallen.

Anhand des ersten Ausführungsbeispiels des erfindungsgemäßen Mehrspindelautomaten werden beispielhaft für viele Bearbeitungsvorgänge besondere Arbeitsvorgänge beim Bearbeiten von Stangenmaterial in dem einzelnen Spindelpositionen I bis VI vorgegeben, um die unterschiedliche oder teilweise auch identische Bearbeitung von in den ersten Spindeln $S_1$, $S_3$, $S_5$ oder in den zweiten Spindeln $S_2$, $S_4$, $S_6$ gespannten Werkstücken nochmals im einzelnen zu erläutern. Dazu sind in den Fig. 13a bis 13f alle in den Spindelpositionen I bis VI zum selben Zeitpunkt zur Bearbeitung entstehenden Werkstücke untereinander dargestellt, wobei in der linken senkrechten Reihe in Spindelposition I eine erste Spindel steht und folglich in Spindelposition II eine zweite Spindel usw., während in der rechten senkrechten Reihe in Spindelposition I eine zweite Spindel und in Spindelposition II eine erste Spindel steht. Der Durchlauf eines Rohteils bei der Bearbeitung bis zum Fertigteil, beginnend mit dem obersten Teil der linken Spalte, ist durch die dicken schwarzen Pfeile angegeben.

Der Spindelposition I ist, wie aus Fig. 2 ersichtlich, lediglich der Werkzeugschlitten Ia mit dem Werkzeug 66 zugeordnet, welches in dem hier vorliegenden Fall eine flache Schneide zum Einstechen einer ringförmigen Nut 140 in eine Mantelfläche 142 eines ein Rohteil darstellenden zylinderförmigen Werkstücks W aufweist. Gleichzeitig ist der Spindelposition I noch die Werkzeughalteeinrichtung 68 mit dem Werkzeug 70 zugeordnet, welches einen Bohrer 144 zum Einbringen einer Bohrung 146 in eine Stirnfläche 148 des ein Rohteil darstellenden zylinderförmigen Werkstücks $W_r'$ trägt.

Somit wird bei einer Bearbeitung eines in den ersten Spindeln $S_1$, $S_3$, $S_5$ gespannten Rohteils - wie in Fig. 13a dargestellt - in der Spindelposition I die Ringnut 114 eingestochen sowie die Bohrung 146 eingebracht.

Steht dagegen der Spindelposition I ein bereits halbfertig bearbeitetes, auf der zweiten Seite $W_{r2}'$ in den zweiten Spindeln $S_2$, $S_4$, $S_6$ gespanntes Werkstück zur Bearbeitung an, so kommt lediglich der Bohrer 144 zum Einsatz, welcher zum Einbringen einer Bohrung 150 in eine der Stirnfläche 148 gegenüberliegende Stirnfläche 152 dient.

Gleichzeitig mit der Bearbeitung eines Rohteils in der Spindelposition I erfolgt in der Spindelposition II (Fig. 13b) die Bearbeitung eines in den zweiten Spindeln gespannten Halbfertigteils durch das als normalen Drehstahl 153 ausgebildete, von dem Werkzeugschlitten IIa gehaltene Werkzeug 66, das zum Abdrehen einer Stufe 154 von der Stirnseite 152 her eingesetzt ist. Außerdem ist dieser Spindelposition ebenfalls eine Werkzeughaltevorrichtung 68 mit einem Bohrer 156 zugeordnet, welcher von der Stirnseite 152 her die Bohrung 150 tiefer ausführt. Bei einem in der Spindelposition II in einer der ersten Spindeln gespannten Werkstück $W_r'$ erfolgt die Bearbeitung mit denselben Werkzeugen 153, 156, wobei der Drehstahl 153 zum Abdrehen der Mantelfläche 142 von der Stirnfläche 148 her bis zur Ringnut 140 dient und der Bohrer 156 die Bohrung 146 vertieft.

In der Spindelposition III (Fig. 13c) ist ein von dem Werkzugschlitten IIIa gehaltener vertreiteter Nutendrehstahl 158 einsetzbar, der bei allen in den ersten Spindeln gespannten Werkstücken W zur Verbreiterung der Nut 140 dient. Gleichzeitig ist in der dieser Spindelposition zugeordneten Werkzeughalteeinrichtung 68 ein Innenbearbeitungsdrehstahl 160 montiert, mittels welchem die Bohrung 146 aufgeweitet wird. Bei den in den zweiten Spindeln gespannten Werkstücken kommt der Innenbearbeitungsdrehstahl 160 ebenfalls zur Aufweitung der Bohrung 150 in einem vorderen Bereich zum Einsatz. Der Nutendrehstahl 158 dagegen nicht, sondern ein weiterer auf dem Werkzeugschlitten IIIb gehaltener Nutendrehstahl 162, welcher zum Eindrehen einer Nut 164 in die Stufe 154 dient.

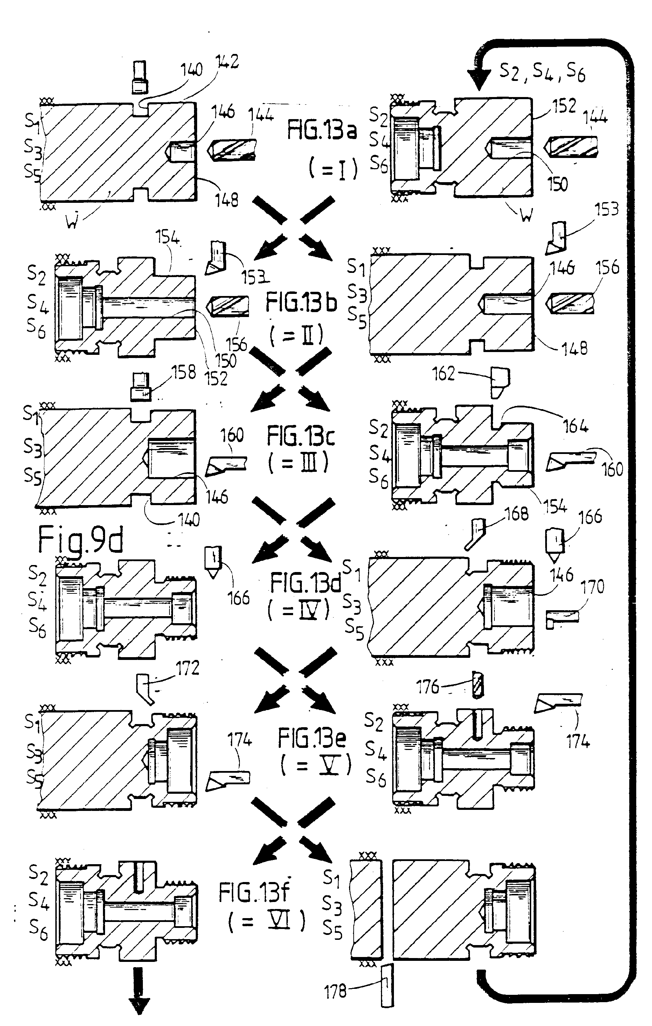

In der Spindelposition IV (Fig. 13d) werden alle in den zweiten Spindeln gespannten Werkstücke $W'_h$ im Bereich der Stufe 154 mit einem Gewinde versehen, welches von einem auf dem Werkzeugschlitten IVa gehaltenen Gewindedrehstahl 166 eingebracht wird. In dieser Spindelposition kommt bei sämtlichen in den ersten Spindeln gespannten Werkstücken $W'_h$ ebenfalls der Gewindedrehstahl 166 zum Einsatz.

Zusätzlich aber auch noch ein weiterer, auf dem Werkzeugschlitten IVb gehaltener Nutendrehstahl 168 sowie ein in der dieser Spindelposition zugeordneten Werkzeughalteeinrichtung 68 montierter Innendrehstahl 170 zum Ausdrehen einer Ringnut in der Bohrung 146.

Bei der Spindelposition V (Fig. 13e) kommt bei den in den ersten Spindeln gespannten Werkstücken $W'_r$ ein auf dem Werkzeugschlitten Va gehaltener Nutendrehstahl 172 sowie ein mehrfach einsetzbarer, an der der Spindelposition V zugeordneten Werkzeughalterung 68 gehaltener Drehstahl 174 zur Anwendung. Der letztgenannte Drehstahl 174 kommt auch bei den in den zweiten Spindeln gespannten Werstücken $W'_h$ zum Einsatz, wohingegen anstelle des Nutendrehstahls 172 ein auf dem Werkzeugschlitten Vb angeordneter Bohrer zum Einbringen einer Bohrung Verwendung findet.

Letztlich erfolgt in der Spindelposition VI (Fig. 13f) lediglich ein Abstechen der in den ersten Spindeln gespannten Halbfertigteile mittels des bereits erwähnten, auf der Werkzeugschlitten VIa gehaltenen Abstechwerkzeugs 178. Bei den in der Spindelposition VI in den zweiten Spindeln ankommenden fertig bearbeiteten Werkstücken erfolgt keine Bearbeitung in dieser Spindelposition mehr.

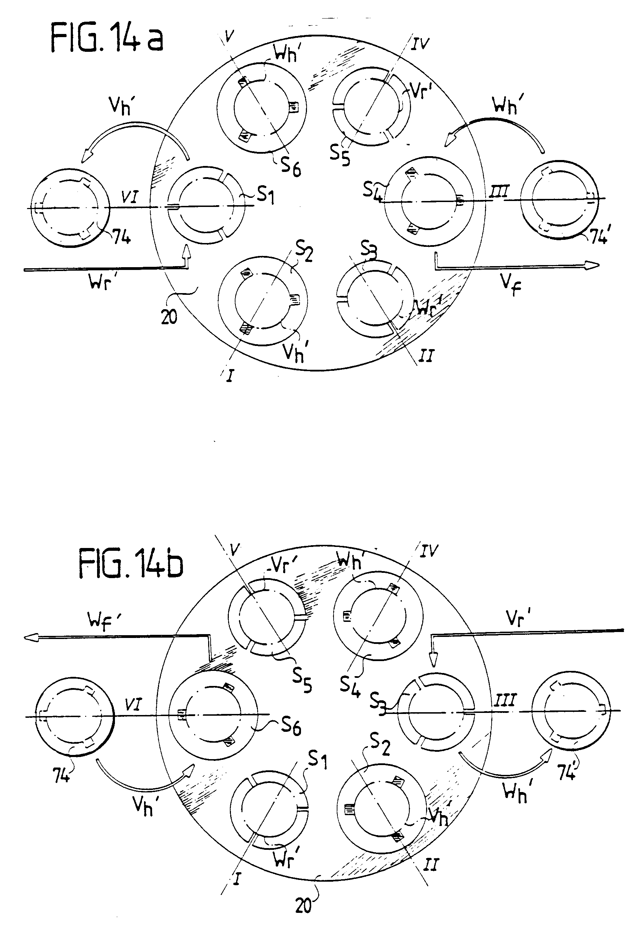

In den Fig. 14a und 14b wird die Druchführung des erfindungsgemäßen Verfahrens bei einem Mehrspindelautomat gemäß dem zweiten, in Fig. 3 dargestellten Ausführungsbeispiel beschrieben, wobei, genau wie in Fig. 9a und 9b, eine Bearbeitung von Stangenmaterial erfolgt. Hierzu werden sowohl in Spindelposition VI als auch in Spindelposition III Rohteile $W_r$, und $V_{r'}$ durch Vorschieben des Stangenmaterials in den Spannzangen zugeführt und Fertigteile $W_{f'}$ und $V_{f'}$ abgeführt.

Das Verfahren läuft bezüglich der Werkstücke $W'$ folgendermaßen ab. In Spindelposition VI wird bei jeder der Spindeln $S_1$, $S_3$ und $S_5$ das Stangenmaterial vorgeschoben, so daß ein Rohteil $W_{r'}$ zur Bearbeitung zur Verfügung steht. Dieses durchläuft dann durch Weiterschalten der Spindeltrommel 20 die Spindelpositionen I sowie II und kommt in Spindelposition III als Halbfertigteil $W_{h'}$ an. Dort wird es unter Zuhilfenahme der Synchronspindel 74′ abgestochen und verbleibt in dieser Synchronspindel 74′ bis zum nächsten Schaltschritt. Beim nächsten Schaltschritt kommt in der Spindelposition III eine der Spindeln $S_2$, $S_4$ und $S_6$ an, so daß das Halbfertigteil $W_{h'}$ von der Synchronspindel 74′ in eine dieser Spindel eingesetzt werden kann, und zwar so, daß es auf seiner zweiten Seite $W_{h2'}$ gespannt ist. In dieser Aufspannung ist eine Bearbeitung der zweiten Seite in den Spindelpositionen IV und V möglich. Anschließend kommt das Halbfertigteil $W_{h'}$ als Fertigteil $W_{f'}$ in der Spindelposition VI an und wird in dieser aus der Spindel entnommen und abgeführt.

Ein Durchlauf eines Werkstücks V sieht, beginnend mit der Spindelposition III, ähnlich aus. Dort wird ebenfalls in einer der in Spindelposition III stehenden Spindeln $S_1$, $S_3$ und $S_5$ Stangenmaterial vorgeschoben, so daß ein Rohteil $V_{r'}$ zur Verfügung steht. Dieses durchläuft dann die Spindelpositionen IV und V und kommt in der Spindelposition VI als Halbfertigteil $V_{h'}$ an (Fig. 14a), wird dort unter Zuhilfenahme der Synchronspindel 74 abgestoßen und verbleibt in dieser Synchronspindel bis nach einem Weiterschalten der Spindeltrommel 20 (Fig. 14b). Anschließend wird das Halbfertigteil $V_{h'}$ in eine der Spindeln $S_2$, $S_4$ und $S_6$ so eingesetzt, daß es mit seiner zweiten Seite $W_{h2'}$ in dieser gespannt ist und kann dann die Spindelpositionen I und II zur Fertigbearbeitung durchlaufen, so daß es als Fertigteil $V_f$ (Fig. 14a) in der Spindelposition III wieder ankommt, dort entnommen und abgeführt wird.

Damit ähnelt also die Durchführung des erfindungsgemäßen Verfahrens bei dem zweiten Ausführungsbeispiel des Mehrspindelautomaten demjenigen in Fig. 9a und 9b, mit dem Unterschied, daß das Umsetzen des jeweiligen Halbfertigteils $W_{h'}$ und $V_{h'}$ nicht in der Spindelposition VI, III erfolgt, in der dieses zugeführt wird, sondern in der jeweils gegenüberliegenden Spindelposition.

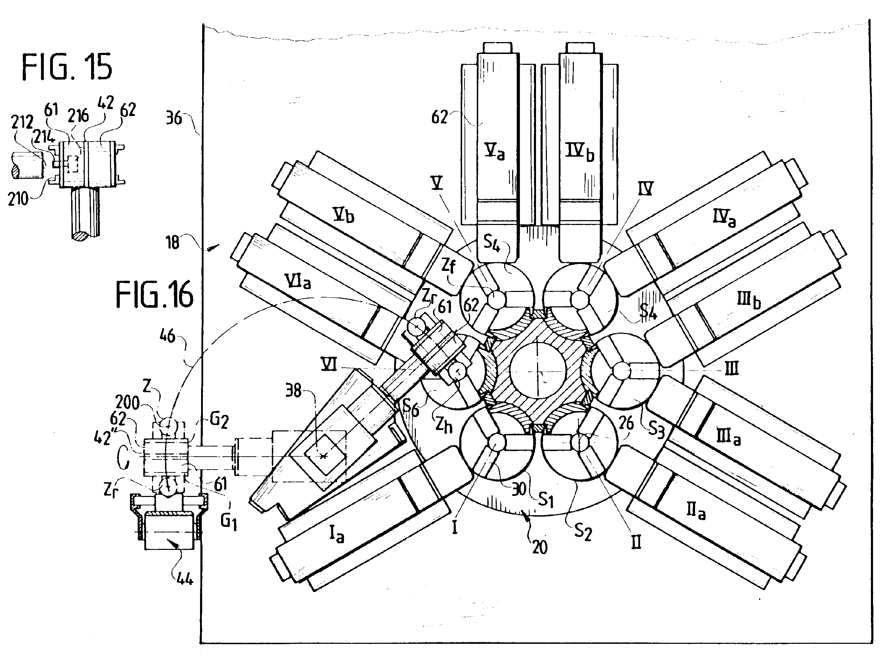

Um, wie bereits erwähnt, vorteilhafterweise den Greifer 61 als Begrenzungsanschlag beim Stangenvorschub einsetzen zu können, dienen, wie in Fig. 15 dargestellt, dessen innere Backenflächen 210 als Anschlagflächen für die Stirnfläche 212 des Stangenmaterials und zusätzlich ragt zwischen diesen ein Fühler 214 eines Tasters 216 über die durch die inneren Backenflächen gebildete Ebene hervor, so daß beim Anstoßen der Stirnfläche 212 an den Anschlägflächen 210 der Taster 216 über den Fühler betätigt wird und einer Steuerung dies meldet, so daß die Steuerung erkennen kann, daß Stangenmaterial vorhanden ist.

Ein drittes Ausführungsbeispiel des erfindungsgemäßen Mehrspindelautomaten, dargestellt in Fig. 16, unterscheidet sich vom ersten Ausführungsbeispiel lediglich in der Art der Ausbildung des Doppelgreifers 42, der in Fig. 16 mit 42″ bezeichnet ist. Dieser Doppelgreifer 42″ ist insbesondere dafür vorgesehen, um alsWellenteile ausgebildete Werkstücke Z ungefähr in einem mittigen Bereich in radialer Richtung zu greifen. Hierin unterscheidet er sich von den bisher beschriebenen Doppelgreifern 42 und 42′, da diese die Werkstücke front- oder stirnseitig gegriffen haben und daher als Axialgreifer zu bezeichnen sind.

Bevorzugterweise ist der Doppelgreifer 42″ relativ zu seiner Schwenkachse 38 so angeordnet, daß die in den Greifern $G_1$ oder $G_2$ gehaltenen Werkstücke Z mit ihren Längsachsen 200 den Schwenkkreis 46 schneiden, so daß ohne eine Veränderung des radialen Abstandes des Doppelgreifers 42″ von der Schwenkachse 38 jedes der Werkstücke Z koaxial zu der in der Spindelposition VI stehenden Spindelachse 26 durch ein bloßes Verschwenken des Doppelgreifers 42″ um die Schwenkachse 38 ausgerichtet werden kann.

Der Mehrspindelautomat gemäß dem zweiten Ausführungsbeispiel arbeitet prinzipiell genau gleich wie der Mehrspindelautomat gemäß dem ersten Ausführungsbeispiel, dargestellt in Fig 5 bis 7, mit dem einzigen Unterschied, daß nach dem Drehen des Doppelgreifers, dargestellt von Fig.5c nach Fig. 5d, das Halbfertigteil $Z_h$ bereits gewendet in einer Position zur Verfügung steht, in welcher es in die nach dem Weiterschalten in der Spindelposition VI stehende Spindel eingesetzt werden kann, so daß das Einsetzen des Halbfertigteils in diese zweite Spindel gemäß Fig 6d nicht durch den Einstoßer 74, sondern durch den Greifer 42″ erfolgen kann.

Im einzelnen soll das Verfahren noch kurz an Hand des bereits ausführlich geschilderten Ablaufs gemäß den Fig 5 bis 7 erläutert werden, wobei lediglich die Unterschiede zum ersten Ausführungsbeispiel dargelegt werden.

Die Darstellung in Fig 16 entspricht der Situation gemäß Fig. 5a Der Werkstückgreifer 42″ ist so weit verschwenkt, daß der Greifer $G_2$ das in der Spindelposition VI der Spindel $S_1$ gespannte Halbfertigteil $Z_h$ greifen und aus dieser entnehmen kann. Gleichzeitig hat der Doppelgreifer 42″ im Greifer $G_1$ bereits das Rohteil $Z_r$ gegriffen. Nachdem das Halbfertigteil $Z_h$ aus der Spindel $S_1$ entnommen ist, erfolgt, wie auch in Fig 5c beim ersten Ausführungsbeispiel ein Drehen des Greifers 42″ um 180° um die Längsachse 60 des Arms 40, so daß das Rohteil $Z_r$ bereits koaxial zur Spindel $S_1$ ausgerichtet ist und in diese analog Fig. 5e eingesetzt werden kann.

Nach dem Einsetzen des Rohteils $Z_r$ erfolgt ein Weiterschalten der Spindeltrommel, so daß nunmehr analog Fig. 6a in der Spindelposition VI die Spindel $S_6$ steht, welche ein Fertigteil $Z_f$ trägt. Der jetzt leere Greifer $G_1$ ist bereits koaxial zu der jetzt in der Spindelposition VI stehenden Spindel $S_6$ ausgerichtet, so daß das Fertigteil $Z_f$ analog Fig. 6b gegriffen und aus der Spindel $S_6$ entnommen werden kann.

Anschließend ist der Greifer 42″ um einen derartigen Winkel zu verschwenken, daß das im Greifer $G_2$ gehaltene und bereits gewendete Halbfertigteil $Z_h$ koaxial zur Spindel $S_6$ ausgerichtet ist und anschließend analog Fig. 6d übergeben werden kann, wobei die Übergabe, wie bereits erwähnt, nicht durch den beim ersten Ausführungsbeispiel zusätzlich erforderlichen Einstoßer 74 erfolgt, sondern unmittelbar durch den Greifer $G_2$. Anschließend kann dann das Fertigteil $Z_f$ herausbefördert und auf der Werkstücktransporteinrichtung 44 analog zum ersten Ausführungsbeispiel abgelegt werden.

**Patentansprüche**

1. Verfahren zum beidseitigen Bearbeiten von Werkstücken (W,V), bei welchem die Werkstücke (W,V) auf einer mehrere Spindeln (S), insbesondere mit zueinander parallelen und in gleichen Winkelabständen rings um eine Trommelachse (24) angeordneten Spindelachsen (26) , aufweisenden schrittweise weiterschaltbaren Spindeltrommel (20) aufeinanderfolgend in ersten ($S_1$, $S_3$, $S_5$) und zweiten Spindeln ($S_2$, $S_4$ und $S_6$) auf einer ersten bzw. einer zweiten Seite gespannt werden und bei welchem den ersten Spindeln ($S_1$, $S_3$, $S_5$) rohe Werkstücke ($W_r$, $V_r$) zugeführt werden, den zweiten Spindeln ($S_2$, $S_4$, $S_6$) fertig bearbeitete Werkstücke ($W_f$, $V_f$) entnommen werden und halbfertig bearbeitete Werkstücke ($W_h$, $V_h$) von den ersten ($S_1$, $S_3$, $S_5$) auf die zweiten Spindeln ($S_2$, $S_4$, $S_6$) bei gleichzeitigem Wechsel einer Spannung der Werkstücke von der ersten auf die zweite Seite umgesetzt werden,
**dadurch gekennzeichnet**, daß die Spindeln (S) der Spindeltrommel (20) in Einzelschritten von einer Spindelposition (I bis VI) zur nächsten weitergeschaltet werden und daß eine einzige (II) der Spindelpositionen(I bis VI) der Spindeltrommel (20) ausgewählt wird, in welcher abwechselnd nach jeder Trommelschaltung entweder eines der halbfertig bearbeiteten Werkstücke ($W_h$, $V_h$) aus der in dieser Spindelposition (VI) stehenden Spindel (S) entnommen und ein rohes Werkstück ($W_r$, $V_r$) in diese Spindel (S) eingesetzt wird oder ein fertig bearbeitetes Werkstück ($W_f$, $V_f$) aus dieser Spindel (S) entnommen und zum Beenden des Umsetzens eines der halbfertig bearbeiteten Werkstücke ($W_h$, $V_h$) in diese Spindel (S) eingesetzt wird und daß beim Umsetzen das Werkstück (W,V) einer im Arbeitsraum der ausgewählten Spindelposition (VI, III) gegenüberliegend angeordneten Werkstückhalteeinrichtung (74) übergeben wird.

2. Verfahren zum beidseitigen Bearbeiten von Werkstücken (W,V), bei welchem die Werkstücke (W,V) auf einer mehrere Spindeln (S), insbesondere mit zueinander parallelen und in gleichen Winkelabständen rings um eine Trommelachse (24) angeordneten Spindelachsen (26), aufweisenden schrittweise weiterschaltbaren Spindeltrommel (20) aufeinanderfolgend in ersten ($S_1$, $S_3$, $S_5$) und zweiten Spindeln ($S_2$, $S_4$, $S_6$) auf einer ersten bzw. einer zweiten Seite gespannt werden und bei welchem den ersten Spindeln ($S_1$, $S_3$, $S_5$) rohe Werkstücke

($W_r$, $V_r$) zugeführt werden, den zweiten Spindeln ($S_2$, $S_4$, $S_6$) fertig bearbeitete Werkstücke ($W_f$, $V_f$) entnommen werden und halbfertig bearbeitete Werkstücke ($W_h$, $V_h$) von den ersten ($S_1$, $S_3$, $S_5$) auf die zweiten Spindeln ($S_2$, $S_4$, $S_6$) bei gleichzeitigem Wechsel einer Spannung der Werkstücke von der ersten auf die zweite Seite umgesetzt werden, **dadurch gekennzeichnet**, daß die Spindeln (S) der Spindeltrommel (20) in Einzelschritten von einer Spindelposition (I bis VI) zur nächsten weitergeschaltet werden und daß eine einzige (II) der Spindelpositionen (I bis VI) der Spindeltrommel (20) ausgewählt wird, in welcher abwechselnd nach jeder Trommelschaltung entweder eines der halbfertig bearbeiteten Werkstücke ($W_h$, $V_h$) aus der in dieser Spindelposition (VI) stehenden Spindel (S) entnommen und ein rohes Werkstück ($W_r$, $V_r$) in diese Spindel (S) eingesetzt wird oder ein fertig bearbeitetes Werkstück ($W_f$, $V_f$) aus dieser Spindel (S) entnommen und zum Beenden des Umsetzens eines der halbfertig bearbeiteten Werkstücke ($W_h$, $V_h$) in diese Spindel (S) eingesetzt wird und daß zum Umsetzen ein um eine quer zu einer Spindelachse (26) verlaufende Achse (40) um 180° drehbarer Werkstückgreifer (G) verwendet wird.

3. Verfahren nach Anspruch 1 oder 2, dadurch gekennzeichnet, daß mindestens eine weitere Spindelposition (III) der Spindeltrommel (20) ausgewählt wird, in welcher sowohl ein zusätzliches Zuführen weiterer roher Werkstücke ($W_r$, $V_r$), ein zusätzliches Entnehmen der weiteren fertig bearbeiteten Werkstücke ($W_f$, $V_f$) als auch ein zusätzliches Umsetzen halbfertig bearbeiteter Werkstücke ($W_h$, $V_h$) durchgeführt wird und in welcher das Zuführen der weiteren rohen Werkstücke ($W_r$, $V_r$) und das Entnehmen der weiteren fertig bearbeiteten Werkstücke ($W_f$, $V_f$) nach jeder Trommelschaltung einander abwechseln.

4. Verfahren nach Anspruch 3, dadurch gekennzeichnet, daß die beiden Spindelpositionen (VI, III) entsprechend der für die Werkstücke (W) und die weiteren Werkstücke (V) erforderlichen Zahl von Bearbeitungsstationen ausgewählt werden.

5. Verfahren nach einem der voranstehenden Ansprüche, dadurch gekennzeichnet, daß das Umsetzen ein ungeradzahliges Übergeben des Werkstücks (W,V) umfaßt.

6. Verfahren nach Anspruch 6, dadurch gekennzeichnet, daß das Wenden in einem Arbeitsraum (18) der Werkzeugmaschine (10) erfolgt.

7. Verfahren nach einem der Ansprüche 2 bis 6, dadurch gekennzeichnet, daß beim Umsetzen das Werkstück (W,V) einer im Arbeitsraum der ausgewählten Spindelposition (VI, III) gegenüberliegend angeordneten Werkstückhalteeinrichtung (74) übergeben wird.

8. Verfahren nach einem der voranstehenden Ansprüche, dadurch gekennzeichnet, daß die Werkstückhalteeinrichtung (74) zum Übergeben eines der Werkstücke (W, V) zwischen diesen und der Spindel (S) in der ausgewählten Spindelposition (VI, III) auf diese Spindel (S) zubewegt wird.

9. Verfahren nach einem der Ansprüche 1 und 3 bis 8, dadurch gekennzeichnet, daß zum Umsetzen ein um eine quer zu einer Spindelachse (26) verlaufende Achse (40) um 180° drehbarer Werkstückgreifer (G) verwendet wird.

10. Verfahren nach einem der Ansprüche 2 bis 9, dadurch gekennzeichnet, daß in der ausgewählten Spindelposition (II, III) das Umsetzen des halbfertig bearbeiteten Werkstücks ($W_h$, $V_h$) im Arbeitsraum (18) so durchgeführt wird, daß das halbfertig bearbeitete Werkstück ($W_h$, $V_h$) mittels des Werkstückgreifers (G) aus der Spindel (S) entnommen, der Werkstückgreifer (G) um 180° gedreht und das Werkstück ($W_h$, $V_h$) einer in Achsrichtung auf die Spindel zustellbaren Werkstückhalteeinrichtung (74) übergeben sowie von dieser in die nach einem Weiterschalten in der ausgewählten Spindelposition (VI, III) stehende Spindel (S) eingesetzt wird.

11. Verfahren nach einem der Ansprüche 2 bis 9, dadurch gekennzeichnet, daß in der ausgewählten Spindelposition (VI, III) das Umsetzen des halbfertig bearbeiteten Werkstücks ($W_h$, $V_h$) im Arbeitsraum (18) so erfolgt, daß das halbfertig bearbeitete Werkstück ($W_h$, $V_h$) mittels einer in Achsrichtung auf die Spindel (S) zustellbaren Werkstückhalteeinrichtung (74) entnommen, dem Werkstückgreifer (G) übergeben und der Werkstückgreifer (G) um 180° gedreht wird sowie von diesem in die nach einem Weiterschalten in der ausgewählten Spindelposition (VI, III) stehende Spindel (S) eingesetzt wird.

12. Verfahren nach Anspruch 11, dadurch gekennzeichnet, daß das halbfertig bearbeitete Werkstück von dem Werkstückgreifer (G) axial gegriffen wird.

13. Verfahren nach einem der Ansprüche 2 bis 9, dadurch gekennzeichnet, daß in der ausgewählten Spindelposition (VI, III) das Umsetzen des halbfertig bearbeiteten Werkstücks ($W_h$, $V_h$) im Arbeitsraum (18) so durchgeführt wird, daß dieses in radialer Richtung gegriffen, aus der in der ausgewählten Spindelposition (VI, III) stehenden ersten Spindel ($S_1$, $S_3$, $S_5$) entnommen wird, im Arbeitsraum (18) verbleibend durch eine 180°-Drehung des Werkstückgreifers (G) gewendet und nach dem Entnehmen des durch Weiterschalten der Spindeltrommel (20) in der ausgewählten Spindelposition (VI, III) in der zweiten Spindel ($S_2$, $S_4$, $S_6$) gespannten fertig bearbeiteten Werkstücks ($W_f$, $V_f$) in diese das halbfertig bearbeitete Werkstück ($W_h$, $V_h$) eingesetzt wird.

14. Verfahren nach einem der Ansprüche 10 bis 13, dadurch gekennzeichnet, daß als Werkstückgreifer (G) ein Doppelgreifer verwendet wird und daß mit diesem das fertig bearbeitete Werkstück ($W_f$, $V_f$) aus der in der ausgewählten Spindelposition (VI, III) stehenden Spindel (S) entnommen und aus dem Arbeitsraum (18)

EP 0 302 898 B1

herausgebracht wird.

15. Verfahren nach einem der Ansprüche 10 bis 14, dadurch gekennzeichnet, daß das rohe Werkstück ($W_r$, $V_r$) koaxial zu den ersten Spindeln ($S_1$, $S_3$, $S_5$) zugeführt wird.

16. Verfahren nach Anspruch 15, dadurch gekennzeichnet, daß der Werkstückgreifer (G) als Begrenzungsanschlag beim koaxialen Zuführen der Werkstücke ($W_r$, $V_r$) eingesetzt wird.

17. Verfahren nach einem der Ansprüche 1 bis 14, dadurch gekennzeichnet, daß das rohe Werkstück ($W_r$, $V_r$) durch den Doppelgreifer (42) in den Arbeitsraum gebracht und in die in der ausgewählten Spindelposition (VI, III) stehende erste Spindel ($S_1$, $S_3$, $S_5$) eingesetzt wird.

18. Verfahren nach einem der voranstehenden Ansprüche, dadurch gekennzeichnet, daß beim Umsetzen ein Abstechen des Werkstücks (W, V) erfolgt.

19. Verfahren nach Anspruch 18, dadurch gekennzeichnet, daß das Werkstück (W,V) beim Abstechen synchron gehalten wird.

20. Mehrspindelautomat zum beidseitigen Bearbeiten von Werkstücken, insbesondere zur Durchführung des Verfahrens nach einem der Ansprüche 1 bis 18, mit einer mehrere Spindeln (S), insbesondere mit zueinander parallelen und in gleichen Winkelabständen ringsum eine Trommelachse (24) angeordneten Spindelachsen (26), aufweisenden Spindeltrommel (20), auf welcher aufeinanderfolgende erste ($S_1$, $S_3$, $S_5$) und zweite Spindeln ($S_2$, $S_4$, $S_6$) zum Einspannen der Werkstücke (W, V) auf einer ersten bzw. zweiten Seite vorgesehen sind, und mit einer eine Werkstückgreifeinrichtung und eine der Werkstückgreifeinrichtung zugeordnete Werkstückhalteeinrichtung umfassenden Handhabungseinheit (34, 74) zum Zuführen roher Werkstücke ($W_r$, $V_r$) zum Abführen fertig bearbeiteter Werkstücke ($W_f$, $V_f$) und zum Umsetzen der halbfertig bearbeiteten Werkstücke ($W_h$, $V_h$) von der ersten ($S_1$, $S_3$, $S_5$) auf die zweite Spindel ($S_2$, $S_4$, $S_6$) unter gleichzeitigem Wechsel der Werkstückeinspannung von der ersten zur zweiten Seite, dadurch gekennzeichnet, daß die Spindeln (S) der Spindeltrommel (20) in Einzelschritten von Spindelposition zu Spindelposition (I bis VI) schaltbar ist und daß mindestens eine Spindelposition (VI) der Spindeltrommel (20) ausgewählt ist, welcher sowohl die Zuführung für die rohen Werkstücke ($W_r$, $V_r$) und die Abführung für die fertig bearbeiteten Werkstücke ($W_f$, $V_f$) sowie für das Umsetzen der halbfertig bearbeiteten Werkstücke ($W_h$, $V_h$) die Handhabungseinheit (34, 74) funktionsmäßig zugeordnet sind, daß die Werkstückhalteeinrichtung (74, 74') der Spindel (S) in der ausgewählten Spindelposition (III, VI) im Arbeitsraum gegenüberliegend angeordnet ist und daß in der ausgewählten Spindelposition (VI, III) abwechselnd nach jeder Schaltung der Spindeltrommel (20) entweder ein halbfertig bearbeitetes Werkstück ($W_h$, $V_h$) entnehmbar und ein rohes Werkstück ($W_r$, $V_r$) zuführbar oder ein fertig bearbeitetes Werkstück ($W_f$, $V_f$) abführbar und ein halbfertig bearbeitetes Werkstück ($W_h$, $V_h$) einsetzbar sind.

21. Mehrspindelautomat zum beidseitigen Bearbeiten von Werkstücken, insbesondere zur Durchführung des Verfahrens nach einem der Ansprüche 1 bis 18, mit einer mehrere Spindeln (S), insbesondere mit zueinander parallelen und in gleichen Winkelabständen ringsum eine Trommelachse (24) angeordneten Spindelachsen (26), aufweisenden Spindeltrommel (20), auf welcher aufeinanderfolgende erste ($S_1$, $S_3$, $S_5$) und zweite Spindeln ($S_2$, $S_4$, $S_6$) zum Einspannen der Werkstücke (W, V) auf einer ersten bzw. zweiten Seite vorgesehen sind und mit einer eine Werkstückgreifeinrichtung umfassenden Handhabungseinheit (34, 74) zum Zuführen roher Werkstücke ($W_r$, $V_r$), zum Abführen fertig bearbeiteter Werkstücke ($W_f$, $V_f$) und zum Umsetzen der halbfertig bearbeiteten Werkstücke ($W_h$, $V_h$) von der ersten ($S_1$, $S_3$, $S_5$) auf die zweite Spindel ($S_2$, $S_4$, $S_6$) unter gleichzeitigem Wechsel der Werkstückeinspannung von der ersten zur zweiten Seite, dadurch gekennzeichnet, daß die Spindeln (S) der Spindeltrommel (20) in Einzelschritten von Spindelposition zu Spindelposition (I bis VI) schaltbar ist und daß mindestens eine Spindelposition (VI) der Spindeltrommel (20) ausgewählt ist, welcher sowohl die Zuführung für die rohen Werkstücke ($W_r$, $V_r$) und die Abführung für die fertig bearbeiteten Werkstücke ($W_f$, $V_f$) sowie für das Umsetzen der halbfertig bearbeiteten Werkstücke ($W_h$, $V_h$) die Handhabungseinheit (34, 74) funktionsmäßig zugeordnet sind, daß die Werkstückgreifeinrichtung (34, 34') einen um eine quer zur Spindelachse (26) verlaufende Achse (40) um mindestens 180° drehbaren Werkstückgreifer (G) umfaßt und daß in der ausgewählten Spindelposition (VI, III) abwechselnd nach jeder Schaltung der Spindeltrommel (20) entweder ein halbfertig bearbeitetes Werkstück ($W_h$, $V_h$) entnehmbar und ein rohes Werkstück ($W_r$, $V_r$) zuführbar oder ein fertig bearbeitetes Werkstück ($W_f$, $V_f$) abführbar und ein halbfertig bearbeitetes Werkstück ($W_h$, $V_h$) einsetzbar sind.

22. Mehrspindelautomat nach Anspruch 20 oder 21 dadurch gekennzeichnet, daß mindestens eine weitere Spindelposition (III) der Spindeltrommel (20) ausgewählt ist, welcher sowohl eine zusätzliche Zuführung für weitere rohe Werkstücke ($V_r$) und eine zusätzliche Abführung für die weiteren fertig bearbeiteten Werkstücke ($V_f$) selbst oder in Verbindung mit einer zusätzlichen Werkstückgreifeinrichtung (34') sowie eine zusätzliche Handhabungseinheit (34', 74') funktionsmäßig zugeordnet sind und in welcher abwechselnd nach jeder Schaltung der Spindeltrommel (20) entweder die weiteren rohen Werkstücke ($V_r$) zuführbar oder die weiteren fertig bearbeiteten Werkstücke ($V_f$) abführbar sind.

23. Mehrspindelautomat nach einem der Ansprüche 20 bis 22, dadurch gekennzeichnet, daß die ausge-

23

wählten Spindelpositionen (III, VI) einander gegenüberliegend angeordnet sind.

24. Mehrspindelautomat nach einem der Ansprüche 20, 22 und 23, dadurch gekennzeichnet, daß die Werkstückgreifeinrichtung (34, 34') einen um eine quer zur Spindelachse (26) verlaufende Achse (60) drehbaren Werkstückgreifer (42, 42', 42'') umfaßt.

25. Mehrspindelautomat nach einem der Ansprüche 21 bis 24 dadurch gekennzeichnet, daß ein Arbeitsraum (18) so ausgebildet ist, daß der Werkstückgreifer (42, 42', 42'') mit mindestens einem gegriffenen Werkstück (W, V) in diesem um die quer zur Spindelachse (26) verlaufende Achse (60) drehbar ist.

26. Mehrspindelautomat nach einem der Ansprüche 21 bis 25, dadurch gekennzeichnet, daß der Werkstückgreifer (42, 42', 42'') in mindestens zwei parallel zur Spindelachse ausgerichteten und um einen Drehwinkel von 180° bezüglich der quer zur Spindelachse verlaufenden Achse gegeneinander verdreht angeordneten Stellungen feststellbar ist.

27. Mehrspindelautomat nach Anspruch 26, dadurch gekennzeichnet, daß die Werkstückgreifeinrichtung (34, 34') einen den Werkstückgreifer (42, 42', 42'') tragenden und um seine Längsachse (60, 60') drehbaren Arm umfaßt.

28. Mehrspindelautomat nach einem der Ansprüche 21 bis 27, dadurch gekennzeichnet, daß der Werkstückgreifer ein Doppelgreifer (42, 42', 42'') ist.

29. Mehrspindelautomat nach einem der Ansprüche 20 bis 26, dadurch gekennzeichnet, daß die Werkstückgreifeinrichtung (34, 34') parallel zu Drehachsen (26) der Spindeln ($S_1$ bis $S_6$) bewegbar ist.

30. Mehrspindelautomat nach einem der Ansprüche 20 bis 29 dadurch gekennzeichnet, daß die Werkstückgreifeinrichtung (34, 34') im Arbeitsraum (18) angeordnet ist und sowohl die ausgewählte Spindelposition (VI, III) als auch eine außerhalb des Arbeitsraums (18) angeordnete Werkstücktransporteinrichtung (44) in ihrem Greifbereich liegen.

31. Mehrspindelautomat nach einem der Ansprüche 20 bis 30, dadurch gekennzeichnet, daß die Werkstückgreifeinrichtung (34, 34') eine zu den Spindelachsen (26) ungefähr parallele Schwenkachse (38) aufweist.

32. Mehrspindelautomat nach einem der Ansprüche 21 bis 31, dadurch gekennzeichnet, daß der Werkstückgreifer (42, 42', 42'') ein Radialgreifer ist.

33. Mehrspindelautomat nach einem der Ansprüche 21 bis 31, dadurch gekennzeichnet, daß der Werkstückgreifer (42, 42', 42'') ein Axialgreifer ist.

34. Mehrspindelautomat nach einem der Ansprüche 21 bis 33, dadurch gekennzeichnet, daß die Werkstückhalteeinrichtung (74, 74') innerhalb des Arbeitraums (18) angeordnet ist.

35. Mehrspindelautomat nach einem der voranstehenden Ansprüche dadurch gekennzeichnet, daß die Werkstückhalteeinrichtung (74, 74') koaxial zur ausgewählten Spindelposition (VI, III) angeordnet ist.

36. Mehrspindelautomat nach einem der voranstehenden Ansprüche dadurch gekennzeichnet, daß die Werkstückhalteeinrichtung (74, 74') in Richtung auf die zugeordnete Spindel hin- und herbewegbar ist.

37. Mehrspindelautomat nach einem der voranstehenden Ansprüche dadurch gekennzeichnet, daß die Werkstückhalteeinrichtung (74, 74') eine Synchronspindel ist.

38. Mehrspindelautomat nach einem der Ansprüche 21 bis 37, dadurch gekennzeichnet, daß der Werkstückgreifer (42) eine als Begrenzung beim Vorschub von Stangenmaterial dienende Anschlagfläche (210) aufweist.

39. Mehrspindelautomat nach Anspruch 38, dadurch gekennzeichnet, daß der Werkstückgreifer (42) mit einem ein Berühren der Anschlagfläche (210) meldenden Taster (216) versehen ist.

## Revendications

1. Procédé d'usinage bilatéral d'une pièce à usiner (W,V), dans lequel les pièces à usiner (W,V) sont serrés les uns derrière les autres sur un premier côté dans des premières broches (S1, S3, S5) et sur un second côté dans des secondes broches (S2, S4, S6) sur un tambour pouvant avancer pas à pas (20) présentant plusieurs broches (S), et en particulier à axes (26) de broche parallèles entre eux et disposés, à même écart angulaire, en anneau autour d'un axe (24) de tambour, et dans lequel des pièces à usiner brutes (Wr, Vr) sont amenées sur les premières broches (S1,S3,S5), les pièces usinées terminées (Wf, Vf) sont enlevées des secondes broches (S2, S4, S6) et les pièces à usiner à moitié usinées (Wh, Vh) sont transférés des premières broches (S1, S3, S5) aux secondes broches (S2, S4, S6), avec commutation simultanée d'un serrage des pièces à usiner du premier au second côté,

caractérisé en ce que les broches (S) du tambour à broches (20) sont transférées par pas unitaires d'une position de broche (I à VI) à la suivante et qu'une position unique (II) des positions de broches (I à VI) du tambour à broches (20) est sélectionnée, dans laquelle à tour de rôle, après chaque avance du tambour, soit une des pièces à moitié usinée (Wh, Vh) est enlevée de la broche (S) se trouvant en cette position de broche (VI) et une pièce à usiner brute (Wr, Vr) est introduite dans cette broche (S), soit une pièce à usiner terminée (Wf, Vf) est enlevée de cette broche (S) et pour terminer le déplacement une des pièces à usiner à moitié usinée (Wh, Vh) est introduite dans cette broche (S), et **en ce que** lors du déplacement, la pièce à usiner (W, V) est transférée à un dispositif (74) de maintien de pièce à usiner disposé dans une chambre de travail en face de la position de broche (III, VI) sélectionnée.

2. Procédé d'usinage bilatéral de pièces à usiner (W,V), dans lequel les pièces à usiner (W,V) sont serrées les unes derrière les autres sur un premier côté dans des premières broches (S1, S3, S5) et sur un second côté dans des secondes broches (S2, S4, S6) sur un tambour pouvant avancer pas à pas (20) présentant plusieurs broches (S), et en particulier à axes (26) de broche parallèles entre eux et disposés, à même écart angulaire, en anneau autour d'un axe (24) de tambour, et dans lequel des pièces à usiner brutes (Wr, Vr) sont amenées sur les premières broches (S1,S3,S5), les pièces à usiner terminées (Wf, Vf) sont enlevées des secondes broches (S2, S4, S6) et les pièces à usiner à moitié usinées (Wh, Vh) sont transférées des premières broches (S1, S3, S5) aux secondes broches (S2, S4, S6), avec commutation simultanée d'un serrage des pièces à usiner du premier au second côté, **caractérisé en ce que** les broches (S) du tambour à broches (20) sont transférées par pas unitaires d'une position de broche (I à VI) à la suivante et qu'une position unique (II) des positions de broches (I à VI) du tambour à broches (20) est sélectionnée, dans laquelle à tour de rôle, après chaque avance du tambour, soit une des pièces à usiner à moitié usinées (Wh, Vh) est enlevée de la broche (S) se trouvant en cette position de broche (VI) et une pièce à usiner brute (Wr, Vr) est introduite dans cette broche (S), soit une pièce à usiner terminée (Wf, Vf) est enlevée de cette broche (S) et pour terminer le déplacement une des pièces à usiner à moitié usinées (Wh, Vh) est introduite dans cette broche (S), et **en ce que** pour le transfert on utilise un porte-pièce à usiner (G) pouvant tourner de 180° autour d'un axe (40) s'étendant transversalement à un axe (26) de broche.

3. Procédé selon la revendication 1 ou 3, **caractérisé en ce que** l'on sélectionne au moins une autre position de broche (III), du tambour à broches (20) dans laquelle après chaque avance du tambour sont effectués à tour de rôle tant une amenée supplémentaire de pièces à usiner brutes (Wr, Vr), un enlèvement supplémentaire des autres pièces à usiner terminées (Wf, Vf) qu'un déplacement supplémentaire de pièces à usiner à moitié usinées (Wh, Vh), et dans laquelle l'amenée des autres pièces à usiner brutes (Wr, Vr) et l'enlèvement des autres pièces à usiner terminées (Wf, Vf), s'effectuent à tour de rôle après chaque avance du tambour.

4. Procédé selon la revendication 3, **caractérisé en ce que** les deux positions de broche (VI, III) sont sélectionnées en fonction du nombre de postes de travail nécessaire pour les pièces à usiner (W) et les autres pièces à usiner (V).

5. Procédé selon l'une des revendications précédentes, **caractérisé en ce que** le déplacement comprend un nombre impair de transferts de la pièce à usiner (W, V).

6. Procédé selon la revendication 6, **caractérisé en ce que** le retournement s'effectue dans une chambre de travail (18) de la machine-outil (10).

7. Procédé selon l'une des revendications 2 à 6, **caractérisé en ce que** lors du déplacement, la pièce à usiner (W, V) est transférée à un dispositif (74) de maintien de pièce à usiner disposé dans une chambre de travail en face de la position de broche (VI, III) sélectionnée.

8. Procédé selon l'une des revendications précédentes, **caractérisé en ce que** le dispositif (74) de maintien de pièce à usiner est déplacé vers la broche (S) pour le transfert d'une des pièces à usiner (W, V) entre lui et cette broche (S) se trouvant dans la position de broche (VI, III) sélectionnée.

9. Procédé selon l'une des revendications 1 et 3 à 8, **caractérisé en ce que** pour le déplacement on utilise un porte-pièce à usiner (G) pouvant tourner de 180° autour d'un axe (40) s'étendant transversalement à un axe (26) de broche.

10. Procédé selon l'une des revendications 2 à 9, **caractérisé en ce que** lorsque la position de broche (II, III) est sélectionnée, le déplacement de la pièce usinée à moitié (Wh, Vh) est effectué dans la chambre de travail (18) de telle sorte que la pièce usinée à moitié (Wh, Vh) est enlevée de la broche (S) à l'aide du porte-pièce à usiner (G), que le porte-pièce à usiner (G) est tourné de 180° et que la pièce à usiner (Wh, Vh) est transférée à un dispositif (74) de maintien de pièce à usiner pouvant être avancé dans la direction axiale sur la broche, et qu'elle est introduite par le dispositif (74) de maintien de pièce à usiner dans la broche (S) se trouvant dans la position de broche (VI, III) sélectionnée après une avance.

11. Procédé selon l'une des revendications 2 à 9, **caractérisé en ce que** lorsque la position de broche (VI, III) est sélectionnée, le déplacement de la pièce usinée à moitié (Wh, Vh) s'effectue dans la chambre de travail (18) de telle sorte que la pièce usinée à moitié (Wh, Vh) est enlevée à l'aide d'un dispositif (74) de maintien de pièce à usiner pouvant être avancé en direction axiale sur la broche (S), est transférée au porte-pièce à usiner (G), et le porte-pièce à usiner (G) est tourné de 180°, et la pièce usinée à moitié (Wh, Vh) est insérée par le porte-pièce à usiner (G) dans la broche (S) se trouvant en la position de broche (VI,III) sélectionnée après une avance.

12. Procédé selon la revendication 11, **caractérisé en ce que** la pièce usinée à moitié est saisie axialement par le porte-pièce à usiner (G).

13. Procédé selon l'une des revendications 2 à 9, **caractérisé en ce** que lorsque la position de broche (VI, III) est sélectionnée, le déplacement de la pièce usinée à moitié (Wh, Vh) dans la chambre de travail (18) est effectué de telle sorte que la pièce usinée à moitié (Wh, Vh) est saisie dans la direction radiale, est enlevée de la première broche (S1, S3, S5) se trouvant dans la position de broche (VI, III) sélectionnée, et tout en restant dans la chambre de travail ( 18) est retournée par une rotation du porte-pièce à usiner (G) sur 180°, et après enlèvement de la pièce usinée terminée (Wf, Vf) serrée dans la seconde broche (S2, S4, S6) placée dans la position de broche (VI, III) sélectionnée par l'avance du tambour à broches (20), la pièce usinée à moitié (Wh, Vh) est introduite dans cette broche.

14. Procédé selon l'une des revendications 10 à 13, **caractérisé en ce que** l'on utilise comme porte-pièce à usiner (G) une pince double et que la pièce usinée terminée (Wf, Vf) est enlevée de la broche (S) se trouvant en la position de broche (VI, III) sélectionnée et extrait de la chambre de travail (18) par cette pince double.

15. Procédé selon l'une des revendications 10 à 14, **caractérisé en ce que** la pièce à usiner brute (Wr, Vr) est amenée en position coaxiale aux premières broches (S1, S3, S5).

16. Procédé selon la revendication 15, **caractérisé en ce que** le porte-pièce à usiner (G) est utilisée comme butée limite lors de l'amenée coaxiale de la pièce à usiner brute (Wr, Vr).

17. Procédé selon l'une des revendications 1 à 14, **caractérisé en ce que** la pièce à usiner brute (Wr, Vr) est amenée dans la chambre de travail (18) par la pince double (42) et est introduite dans les premières broches (S1, S3, S5) se trouvant en la position de broche (VI, III) sélectionnée.

18. Procédé selon l'une des revendications précédentes, **caractérisé en ce que** lors du déplacement s'effectue un décolletage de la pièce à usiner (W, V).

19. Procédé selon la revendication 18, **caractérisé en ce que** la pièce à usiner (W, V) est maintenu synchrone au cours du décolletage.

20. Automate à plusieurs broches pour l'usinage bilatéral de pièces à usiner, et en particulier pour l'exécution du procédé selon l'une des revendications 1 à 18, avec un tambour (20) pouvant avancer pas à pas présentant plusieurs broches (S), et en particulier à axes (26) de broche parallèles entre eux et disposés, à même écart angulaire, en anneau autour d'un axe (24) de tambour, sur lequel des premières broches (S1, S3, S5) et des secondes broches (S2, S4, S6) disposées à la suite les unes des autres sont prévues pour le serrage des pièces à usiner respectivement sur un premier et sur un second côté, et avec une unité de maniement (34, 74) comprenant un dispositif de saisie des pièces à usiner et un dispositif de maintien des pièces à usiner associé au dispositif de saisie des pièces à usiner, pour amener des pièces à usiner brutes (Wr, Vr), pour enlever des pièces usinées terminées (Wf, Vf) et pour déplacer les pièces à usiner à moitié usinées (Wh, Vh) des premières broches (S1, S3, S5) aux secondes broches (S2, S4, S6) tout en commutant le serrage des pièces à usiner du premier au second côté, **caractérisé en ce que** les broches (S) du tambour à broches (20) peuvent être changées pas à pas de position de broche à position de broche (I à VI) et qu'au moins une position de broche (VI) du tambour à broches (20) est sélectionnée, à laquelle sont associées fonctionnellement tant l'amenée des pièces à usiner brutes (Wr, Vr) et l'extraction des pièces usinées terminées (Wf, Vf) que l'unité de maniement (34, 74) pour le déplacement des pièces à usiner à moitié usinées (Wh, Vh), **en ce que** le dispositif de maintien de pièce à usiner (74, 74') est dans la chambre de travail disposé en face de la broche (S) lorsque la position de broche (II, VI)est sélectionnée, et **en ce que** dans la position de broche (VI, III), à tour de rôle après chaque avance du tambour à broches (20), soit une pièce usinée à moitié (Wh, Vh) peut être enlevée et une pièce à usiner brute (Wr, Vr) être amenée, soit une pièce usinée terminée (Wf, Vf) peut être enlevée et une pièce usinée à moitié (Wh, Vh) peut être amenée.

21. Automate à plusieurs broches pour l'usinage bilatéral de pièces à usiner, et en particulier pour l'exécution du procédé selon l'une des revendications 1 à 18, avec un tambour (20) pouvant avancer pas à pas présentant plusieurs broches (S), et en particulier à axes (26) de broche parallèles entre eux et disposés, à même écart angulaire, en anneau autour d'un axe (24) de tambour, sur lequel des premières broches (S1, S3, S5) et des secondes broches (S2, S4, S6) disposées à la suite les unes des autres sont prévues pour le serrage des pièces à usiner respectivement sur un premier et sur un second côté, et avec une unité de maniement (34, 74) comprenant un dispositif de saisie des pièces à usiner et un dispositif de maintien des pièces à usiner associé au dispositif de saisie des pièces à usiner, pour amener des pièces à usiner brutes (Wr, Vr), pour enlever des pièces usinées terminées (Wf, Vf) et pour déplacer les pièces à usiner à moitié usinées (Wh, Vh) des premières broches (S1, S3, S5) aux secondes broches (S2, S4, S6) tout en commutant le serrage des pièces à usiner du premier au second côté, **caractérisé en ce que** les broches (S) du tambour à broches (20) peuvent être changées pas à pas de position de broche à position de broche (I à VI) et qu'au moins une position de broche (VI) du tambour à broches (20) est sélectionnée, à laquelle sont associées fonctionnellement tant l'amenée des pièces à usiner brutes (Wr, Vr) et l'extraction des pièces usinées terminées (Wf, Vf) que l'unité de

26

maniement (34, 74) pour le déplacement des pièces à usiner à moitié usinées (Wh, Vh), **en ce que** le dispositif de maintien de pièce à usiner (34, 34′) comprend un porte-pièce à usiner (G) pouvant être tourné sur au moins 180° autour d'un axe (40) s'étendant transversalement à l'axe (26) de la broche, et **en ce que** dans la position de broche (VI, III), sélectionnée à tour de rôle après chaque anance du tambour à broches (20), soit une pièce usinée à moitié (Wh, Vh) peut être enlevée et une pièce à usiner brute (Wr, Vr) être amenée, soit une pièce usinée terminée (Wf, Vf) peut être extrait et une pièce usinée à moitié (Wh, Vh) être introduite.

22. Automate à plusieurs broches selon la revendication 20 ou 21, **caractérisé en ce que** l'on sélectionne au moins une autre position de broche (III) du tambour à broches (20), à laquelle sont associés fonctionnellement tant une amenée supplémentaire d'autres pièces à usiner brutes (Vr) et une extraction supplémentaire des autres pièces usinées terminées (Vf), autonomes ou en association avec un dispositif supplémentaire de saisie de pièce à usiner (34′), qu'une unité supplémentaire de maniement (34′, 74′), et dans laquelle à tour de rôle après chaque anance du tambour à broches (20) soit les autres pièces à usiner brutes (Vr) peuvent être amenés soit les autres pièces usinées terminées (Vf) peuvent être extraits.

23. Automate à plusieurs broches selon l'une des revendications 20 à 22, **caractérisé en ce que** les positions de broche (III, VI) sélectionnées sont disposées face à face.

24. Automate à plusieurs broches selon l'une des revendications 20, 22 et 23, **caractérisé en ce que** le dispositif de saisie de pièce à usiner (34, 34′) comprend une pince à pièce à usiner (42, 42′, 42″) pouvant tourner autour d'un axe (60) s'étendant transversalement à l'axe (26) de broche.

25. Automate à plusieurs broches selon l'une des revendications 21 à 24, **caractérisé en ce qu'**une chambre de travail (18) est réalisée sous une forme telle que la pince à pièce à usiner (42, 42′, 42″) peut tourner avec au moins une pièce à usiner (W, V) saisi par cette pince autour de l'axe (60) s'étendant transversalement à l'axe (26) de broche.

26. Automate à plusieurs broches selon l'une des revendications 21 à 25, **caractérisé en ce que** la pince à pièce à usiner (42, 42′, 42″) peut être immobilisée en au moins deux positions dirigées parallèlement à l'axe de broche et tournées d'un angle de 180° l'une par rapport à l'autre autour de l'axe s'étendant transversalement à l'axe de broche.

27. Automate à plusieurs broches selon la revendication 26, **caractérisé en ce que** le dispositif de saisie de pièce à usiner (34, 34′) comprend un bras portant une pince à pièce à usiner (42, 42′, 42″) et pouvant tourner autour de son axe longitudinal (60, 60′).

28. Automate à plusieurs broches selon l'une des revendications 21 à 27, **caractérisé en ce que** la pince à pièce à usiner est une pince double (42, 42′, 42″).

29. Automate à plusieurs broches selon l'une des revendications 20 à 26, **caractérisé en ce que** le dispositif de saisie de pièce à usiner (34, 34′) peut être déplacé parallèlement aux axes (26) des broches (S1 à S6).

30. Automate à plusieurs broches selon l'une des revendications 20 à 29, **caractérisé en ce que** le dispositif de saisie de pièce à usiner (34, 34′) est disposé dans la chambre de travail (18) et tant la position de broche (VI, III) sélectionnée qu'un dispositif (44) de transport de pièce à usiner disposé à l'extérieur de la chambre de travail (18) se trouvent à sa portée de saisie.

31. Automate à plusieurs broches selon l'une des revendications 20 à 30, **caractérisé en ce que** le dispositif de saisie de pièce à usiner (34, 34′) présente un axe (38) de pivotement à peu près parallèle aux axes (26) des broches.

32. Automate à plusieurs broches selon l'une des revendications 21 à 31, **caractérisé en ce que** la pince à pièce à usiner (42, 42′, 42″) est une pince radiale.

33. Automate à plusieurs broches selon l'une des revendications 21 à 31, **caractérisé en ce que** la pince à pièce à usiner (42, 42′, 42″) est une pince axiale.

34. Automate à plusieurs broches selon l'une des revendications 21 à 31, **caractérisé en ce que** le dispositif de maintien de pièce à usiner (74, 74′) est disposé à l'intérieur de la chambre de travail (18).

35. Automate à plusieurs broches selon l'une des revendications précédentes, **caractérisé en ce que** le dispositif de maintien de pièce à usiner (74, 74′) est disposé coaxialement à la position de broche (VI, III) sélectionnée.

36. Automate à plusieurs broches selon l'une des revendications précédentes, **caractérisé en ce que** le dispositif de maintien de pièce à usiner (74, 74′) peut être déplacé dans les deux sens dans la direction de la broche associée.

37. Automate à plusieurs broches selon l'une des revendications précédentes, **caractérisé en ce que** le dispositif de maintien de pièce à usiner (74, 74′) est une broche synchrone.

38. Automate à plusieurs broches selon l'une des revendications 21 à 37, **caractérisé en ce que** la pince à pièce à usiner (42) présente une surface d'arrêt (210) servant à limiter l'avance d'une barre.

39. Automate à plusieurs broches selon la revendication 38, **caractérisé en ce que** la pince à pièce à usiner (42) est dotée d'un palpeur (216) avertissant d'un contact sur la surface de butée (210).

**Claims**

1. A method for the double-sided machining of workpieces (W, V), in which the workpieces (W, V) are clamped on a first or second side successively in first ($S_1$, $S_3$, $S_5$) and second spindles ($S_2$, $S_4$, $S_6$) on a spindle drum (2), which can be advanced in stages and comprises a plurality of spindles (S), more particularly with spindle axes (26) arranged parallel to one another and at equal angular distances around a drum axis (24), and in which rough workpieces ($W_r$, $V_r$) are supplied to the first spindles ($S_1$, $S_3$, $S_5$), fully machined workpieces ($W_f$, $V_f$) are removed from the second spindles ($S_2$, $S_4$, $S_6$) and semi-nachined workpieces ($W_h$, $V_h$) are transferred from the first ($S_1$, $S_3$, $S_5$) to the second spindles ($S_2$, $S_4$, $S_6$) with a simultaneous reversal of a clamping of the workpieces from the first to the second side, characterised in that the spindles (S) of the spindle drum (20) are advanced in single steps from one spindle position (I to VI) to the next and one (II) of the spindle positions (I to VI) is selected, in which alternately after each drum advance either one of the semi-machined workpieces ($W_h$, $V_h$) is removed from the spindle (S) lying in this spindle position (VI) and a rough workpiece ($W_r$, $V_r$) is inserted into said spindle (S) or a fully machined workpiece ($W_f$, $V_f$) is removed from said spindle (S) and to end the reversal one of the semi-machined workpieces ($W_h$, $V_h$) is inserted into said spindle (S), and during the reversal the workpiece (W, V) is transferred to a workpiece holder (74) arranged in the operating chamber opposite the selected spindle position (VI, III).

2. A method for the double-sided machining of workpieces (W, V), in which the workpieces (W, V) are clamped on a first or second side successively in first ($S_1$, $S_3$, $S_5$) and second spindles ($S_2$, $S_4$, $S_6$) on a spindle drum (2), which can be advanced in stages and comprises a plurality of spindles (S), more particularly with spindle axes (26) arranged parallel to one another and at equal angular distances around a drum axis (34), and in which rough workpieces ($W_r$, $V_r$) are supplied to the first spindles ($S_1$, $S_3$, $S_5$), fully machined workpieces ($W_f$, $V_f$) are removed from the second spindles ($S_2$, $S_4$, $S_6$) and semi-machined workpieces ($W_h$, $V_h$) are transferred from the first ($S_1$, $S_3$, $S_5$) to the second spindles ($S_2$, $S_4$, $S_6$) with a simultaneous reversal of a clamping of the workpieces from the first to the second side, characterised in that the spindles (S) of the spindle drum (30) are advanced in single steps from one spindle position (I to VI) to the next and one (II) of the spindle positions (I to VI) is selected, in which alternately after each drum advance either one of the semi-machined workpieces ($W_h$, $V_h$) is removed from the spindle (S) lying in this spindle position (VI) and a rough workpiece ($W_r$, $V_r$) is inserted into said spindle (S) or a fully machined workpiece ($W_f$, $V_f$) is removed from said spindle (S) and to end the reversal one of the semi-machined workpieces ($W_h$, $V_h$) is inserted into said spindle (S), and for the reversal a workpiece jaw (G) is used which is rotatable through 180° about an axis (40) extending transverse to a spindle axis (26).

3. A method according to claim 1 or 2, characterised in that at least one further spindle position (III) of the spindle drum (20) is selected, in which an additional supply of further rough workpieces ($W_r$, $V_r$), an additional removal of the further fully machined workpieces ($W_f$, $W_f$) and an additional reversal of semi-machined workpieces ($W_h$, $V_h$) is carried out and in which the supply of the further rough workpieces ($W_r$, $V_r$) and the removal of the further fully machined workpieces ($W_f$, $V_f$) alternate after each drum advance.

4. A method according to claim 3, characterised in that the two spindle positions (VI, III) are selected according to the number of machining stations required for the workpiece (W) and the further workpieces (V).

5. A method according to one of the preceding claims, characterised in that the transfer consists of an odd-numbered handing over of the workpiece (W, V).

6. A method acording to claim 6, characterised in that the reversal is effected in an operating chamber (18) of the machine tool (10).

7. A method according to one of claims 2 to 6, characterised in that during the reversal the workpiece (W, V) is transferred to a workpiece holder (74 ) arranged in the operating chamber opposite the selected spindle position (VI, III).

8. A method according to one of the preceding claims, characterised in that, for transferring one of the workpieces (W, V), the workpiece holder (74) is moved between said workpieces and the spindle (S) in the selected spindle position (VI, III) in the direction of said spindle (S).

9. A method according to one of claims 1 and 3 to 8, characterised in that a workpiece jaw (G), which is rotatable through 180° about an axis (40) extending transverse to the spindle axis (26), is used for the reversal.

10. A method according to one of claims 2 to 9, characterised in that in the selected spindle position (II, III) the reversal of the semi-machined workpiece ($W_h$, $V_h$) in the operating chamber is carried out in such a manner that the semi-machined workpiece ($W_h$, $V_h$) is removed from the spindle (S) by means of the workpiece jaw (G), the workpiece jaw (G) is rotated through 180° and the workpiece ($W_h$, $V_h$) is transferred to a workpiece holder (74) which can be advanced towards the spindle in the axial direction and is inserted by said holder into the spindle (S) standing in the selected spindle position (VI, III) after a further advance of the drum.

11. A method according to one of claims 2 to 9, characterised in that in the selected spindle position (VI, III) the reversal of the semi-machined workpiece ($W_h$, $V_h$) in the operating chamber (18) is effected in such a manner that the semi-machined workpiece ($W_h$, $V_h$) is removed by means of a workpiece holder (74 ) which can be advanced towards the spindle (S) in the axial direction, is transferred to the workpiece jaw (G), which is rotated through 180°, and is inserted by said jaw in the spindle (S) standing in the selected spindle position (VI, III) after a further advance of the drum.

12. A method according to claim 11, characterised in that the semi-machined workpiece is grasped axially by the workpiece jaw (G).

13. A method according to one of claims 2 to 9, characterised in that in the selected spindle position (VI, III) the reversal of the semi-machined workpiece ($W_h$, $V_h$) in the operating chamber is carried out in such a manner that it is grasped in the radial direction, removed from the first spindle ($S_1$, $S_3$, $S_5$) standing in the selected position (VI, III), reversed whilst still in the operating chamber (18) by a 180°-rotation of the workpiece jaw (G) and after the removal of the fully machined workpiece ($W_f$, $V_f$) clamped in the second spindle ($S_2$, $S_4$, $S_6$) in the selected spindle position (VI, III) as a result of the further switching of the spindle drum (20), the semi-machined workpiece ($W_h$, $V_h$) is inserted into said second spindle.

14. A method according to one of claims 10 to 13, characterised in that a double jaw is used as the workpiece jaw (G) and using said jaw the fully machined workpiece ($W_f$, $V_f$) is removed from the spindle (S) standing in the selected spindle position (VI, III) and is removed from the operating chamber (18).

15. A method according to one of claims 10 to 14, characterised in that the rough workpiece ($W_r$, $V_r$) is supplied coaxial to the first spindles ($S_1$, $S_3$, $S_5$).

16. A method according to claim 15, characterised in that the workpiece jaw (G) is used as a limiting abutment during the coaxial supply of the workpieces ($W_r$, $V_r$).

17. A method according to one of claims 1 to 14, characterised in that the rough workpiece ($W_r$, $V_r$) is brought by the double jaw (42) into the operating chamber and is insert into the first spindle ($S_1$, $S_3$, $S_5$) standing in the selected spindle position (VI, III).

18. A method according to one of the preceding claims, characterised in that the workpiece (W, V) is cut during the reversal.

19. A method according to claim 18, characterised in that the workpiece (W, V) is held synchronously during the cutting.

20. A multi-spindle machine for the double-sided machining of workpieces, more particularly for carrying out the method according to one of claims 1 to 18, comprising a spindle drum (30) having a pluralityof spindles (S), more particularly with spindle axes (26) arranged parallel to one another and at equal angular distances around a drum axis (24), on which spindle drum successive first ($S_1$, $S_3$, $S_5$) and second spindles ($S_2$, $S_4$, $S_6$) are provided for clamping the workpieces (W, V) on a first or second side, and comprising a handling unit (34, 74) comprising a workpiece grasping device and a workpiece holder associated with the workpiece grasping device for supplying rough workpieces ($W_r$, $V_r$), for removing fully machined workpieces ($W_f$, $V_f$) and for transferring the semi-machined workpieces ($W_h$, $V_h$) from the first ($S_1$, $S_3$, $S_5$) to the second spindle ($S_2$, $S_4$, $S_6$) with a simultaneous reversal of the workpiece clamping from the first to the second side, characterised in that the spindles (S) of the spindle drum (20) can be advanced in single steps from spindle position to spindle position (I to VI) and at least one spindle position (VI) of the spindle drum (20) is selected, with which are associated in terms of function the supply for the rough workpieces ($W_r$, $V_r$), the removal for the fully machined workpieces ($W_f$, $V_f$) and the handling unit (34, 74) for the reversal of the semi-machined workpieces ($W_h$, $V_h$), the workpiece holder (74, 74') is arranged in the operating chamber opposite the spindle (S) in the selected spindle position (III, VI) and in the selected spindle position (VI, III) alternately after each advance of the spindle drum (20) either a semi-machined workpiece ($W_h$, $V_h$) can be removed, a rough workpiece ($W_r$, $V_r$) can be supplied or a fully machined workpiece ($W_f$, $V_f$) can be transported away and a semi-machined workpiece ($W_h$, $V_h$) inserted.

21. A multi-spindle machine for the double-sided machining of workpieces, more particularly for carrying out the method according to one of claims 1 to 18, comprising a spindle drum (20) having a plurality of spindles (S), more particularly with spindle axes (26) arranged parallel to one another and at equal angular distances around a drum axis (24), on which spindle drum successive first ($S_1$, $S_3$, $S_5$) and second spindles ($S_2$, $S_4$, $S_6$) are provided for clamping the workpieces (W, V) on a first or second side, and comprising a handling unit (34, 74) comprising a workpiece grasping device and a workpiece holder associated with the workpiece grasping device for supplying rough workpieces ($W_r$, $V_r$), for removing fully machined workpieces ($W_f$, $V_f$) and for transferring the semi-machined workpieces ($W_h$, $V_h$) from the first ($S_1$, $S_3$, $S_5$) to the second spindle ($S_2$, $S_4$, $S_6$) with a simultaneous reversal of the workpiece clamping from the first to the second side, characterised in that the spindles (S) of the spindle drum (20) can be advanced in single steps from spindle position to spindle position (I to VI) and at least one spindle position (VI) of the spindle drum (30) is selected, with which are associated in terms of function the supply for the rough workpieces ($W_r$, $V_r$), the removal for the fully machined workpieces ($W_f$, $V_f$) and the handling unit (34, 74 for the reversal of the semi-machined workpieces ($W_h$, $V_h$), the workpiece grasping device (34, 34') comprises a workpiece jaw (G) rotatable through at least 180° about an axis (40) extending transverse to the spindle axis and in the selected spindle position (VI, III) alternately after each advance of the spindle drum (20) either a semi-machined workpiece ($W_h$, $V_h$) can be removed, a rough workpiece ($W_r$, $V_r$) can be supplied or a fully machined workpiece ($W_f$, $V_f$) can be transported away and a semi-machined workpiece ($W_h$, $V_h$) inserted.

22. A multi-spindle machine according to claim 20 or 21, characterised in that at least one further spindle position (III) of the spindle drum (20) is selected, with which are associated in terns of function an additional supply for further rough workpieces ($W_r$, $V_r$), an additional removal for the further fully machined workpieces ($W_f$, $V_f$) per se or in association with an additional workpiece grasping device (34') as well as an additional handling unit (34', 74') and in which alternately after each advance of the spindle drum (20) either the further rough workpieces ($V_r$) can be supplied or the further fully machined workpieces ($V_f$) can be removed.

23. A multi-spindle machine according to one of claims 20 to 22, characterised in that the selected spindle positions (III, VI) are arranged opposite one another.

24. A multi-spindle machine according to one of claims 20, 22 and 23, characterised in that the workpiece grasping device (34, 34') comprises a workpiece jaw (42, 42', 42") which is rotatable about an axis (60) extending transverse to the spindle axis (26).

25. A multi-spindle machine according to one of claims 21 to 24, characterised in that an operating chamber (18 ) is designed in such a manner that the workpiece jaw (42, 42', 42") can be rotated therein with at least one grasped workpiece (W, V) about the axis (60) extending transverse to the spindle axis (26).

26. A multi-spindle machine according to one of claims 21 to 25, characterised in that the workpiece jaw (42, 42', 42") can be locked in at least two positions parallel to the spindle axis and rotated through an angle of rotation of 180° relative to the axis extending transverse to the spindle axis.

27. A multi-spindle machine according to claim 26, characterised in that the workpiece grasping device (34, 34') comprises an arm supporting the workpiece jaw (42, 42', 42") and rotatable about its longitudinal axis (60, 60').

28. A multi-spindle machine according to one of claims 21 to 27, characterised in that the workpiece jaw is a double jaw (42, 42', 42") .

29. A multi-spindle machine according to one of claims 20 to 26, characterised in that the workpiece grasping device (34, 34') is displaceable parallel to the axes of rotation (26) of the spindles ($S_1$ to $S_6$).

30. A multi-spindle machine according to one of claims 20 to 29, characterised in that the workpiece grasping device (34, 34') is arranged in the operating chamber (18) and both the selected spindle position (VI, III) and a workpiece transportation device (44) arranged outside the operating chamber (18) lie within its grasping range.

31. A multi-spindle machine according to one of claims 20 to 30, characterised in that the workpiece grasping device (34, 34') comprises a pivot axis (38) approximately parallel to the spindle axes (26).

32. A multi-spindle machine according to one of claims 21 to 31, characterised in that the workpiece jaw (42, 42', 42") is a radial jaw.

33. A multi-spindle machine according to one of claims 21 to 31, characterised in that the workpiece jaw (42, 42', 42") is an axial jaw.

34. A multi-spindle machine according to one of claims 21 to 33, characterised in that the workpiece holder (74, 74') is arranged inside the operating chamber (18).

35. A multi-spindle machine according to one of the preceding claims, characterised in that the workpiece holder (74, 74') is arranged coaxial to the selected spindle position (VI, III).

36. A multi-spindle machine according to one of the preceding claims, characterised in that the workpiece holder (74, 74') can be reciprocated in the direction of the associated spindle.

37. A multi-spindle machine according to one of the preceding claims, charcterised in that the workpiece holder (74, 74') is a synchronous spindle.

38. A multi-spindle machine according to one of claims 21 to 37, characterised in that the workpiece jaw (42) comprises an abutment surface (210) acting as a limit during the advance of rod material.

39. A multi-spindle machine according to claim 38, characterised in that the workpiece jaw (42) is provided with a feeler (216) which signals a contacting of the abutment surface (210).

FIG. 1

EP 0 302 898 B1

FIG.2

EP 0 302 898 B1

FIG.3

# FIG. 4a

# FIG.4b

34

FIG.5a

FIG.5b

FIG.5c

FIG.5d

FIG.5e

FIG.5f

FIG.6a

FIG.6b

FIG.6c

FIG.6d

FIG.6e

FIG.7

# FIG.8a

# FIG.8b

# FIG.9a

# FIG.9b

FIG.10a

FIG.10b

FIG.10c

FIG.11a

FIG.11b

FIG.11c

FIG.11d

FIG.11e

FIG.11f

FIG.12

EP 0 302 898 B1

FIG.13a
( = I )

S₂, S₄, S₆

FIG.13b
( = II )

Fig.9d

FIG.13c
( = III )

FIG.13d
( = IV )

FIG.13e
( = V )

FIG.13f
( = VI )

40

FIG. 14 a

FIG. 14 b

FIG. 15

FIG. 16